# EUROPEAN PATENT APPLICATION

(11) **EP 3 949 820 A1**
(43) Date of publication of application: **09.02.2022**
(21) Application number: 20786759.9
(22) Date of filing: 08.04.2020
(51) Int. Cl.: A47L 11/28

(54) **CLEANING CONTROL METHOD AND APPARATUS, CLEANING ROBOT AND STORAGE MEDIUM**

(30) Priority: 11.04.2019 CN 201910288354
(71) Applicant: Yunjing Intelligence Technology (Dongguan) Co., Ltd., Dongguan, Guangdong 523808 (CN)
(72) Inventor: WU, Yihao, Dongguan, Guangdong 523808 (CN); ZHOU, Jingwei, Dongguan, Guangdong 523808 (CN); ZHAO, Tuhao, Dongguan, Guangdong 523808 (CN)
(74) Representative: Osterhoff, Utz
(86) International application number: PCT/CN2020/083618
(87) International publication number: WO 2020/207391

(57) **Abstract**

A cleaning control method and apparatus, a cleaning robot (100) and a storage medium, relating to the technical field of intelligent devices. The method comprises the steps of: the cleaning robot (100) acquiring a map of a space to be cleaned as a first spatial map (S1); dividing, based on the first spatial map, said space into at least one cleaning region (S2); setting a cleaning sequence for the cleaning regions (S3); and performing, by taking each cleaning region as a unit, a cleaning operation on the cleaning regions of said space according to the cleaning sequence (S4). The cleaning robot (100) performs the cleaning operation on the cleaning regions of said space according to the cleaning sequence, such that the cleaned cleaning region can be prevented from being dirtied when the cleaning robot moves to a region, where a base station is positioned, for charging or for cleaning a cleaning member, thereby enhancing the cleaning effect and improving the cleaning efficiency.

## Description

### TECHNICAL FIELD

This disclosure relates to the technical field of smart devices, in particular to a cleaning control method, a cleaning control apparatus, a cleaning robot and a storage medium.

### BACKGROUND

With the rapid development of smart device technology, cleaning robots with automatic cleaning functions are becoming increasingly popular, and with the acceleration of people's lives, the role of cleaning robots in family life is becoming increasingly important. The cleaning robot can automatically perform a cleaning operation in a space to be cleaned such as a home space or a large place, thereby saving a lot of cleaning time for the user.

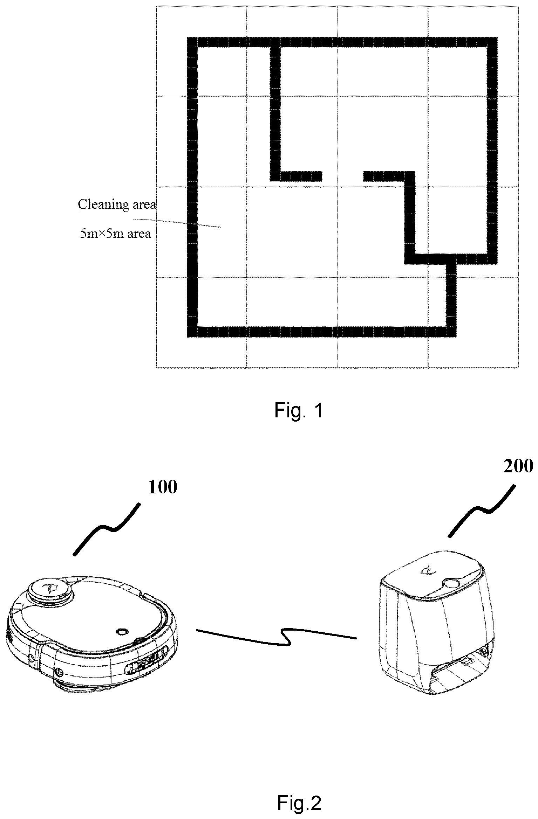

Taking the space to be cleaned as a home space as an example, when an existing cleaning robot cleans the home space, the cleaning robot starts cleaning from a current position. The specific cleaning method of the cleaning robot is: the cleaning robot takes a fixed size area as a unit to search for a first cleaning area in a surrounding uncleaned area. Referring to Fig. 1, a size of the first cleaning area is 5mx5m. Then the first cleaning area is cleaned in a sidewinding trajectory. After cleaning the first cleaning area, the cleaning robot continues to search for a second cleaning area in a nearest uncleaned area based on an area size of 5m×5m, and then continue to clean the second cleaning area, and so on. The cleaning robot divides the home space into multiple cleaning areas of a same size, and sequentially performs cleaning operations on the multiple cleaning areas in unit of a cleaning area. When power of the cleaning robot is insufficient or a cleaning component of the cleaning robot needs to be cleaned, the cleaning robot will move through an entrance/exit to an area where a base station of the cleaning robot is located for charging or cleaning, and then return to the cleaning area being cleaned to continue the cleaning operation.

On condition that the cleaning robot has cleaned a cleaning area including the entrance/exit, when repeatedly moving through the entrance/exit to the area where the base station is located for charging or cleaning, it is prone for the cleaning robot to contaminate the cleaned area including the entrance/exit, resulting in poor cleaning effect and low cleaning efficiency.

### SUMMARY

The embodiments of this disclosure provide a cleaning control method, a cleaning control apparatus, a cleaning robot, and a storage medium, which can solve the problem that the cleaning robot passes through the cleaning area that has been cleaned including the entrance/exit during the cleaning operation thus polluting the cleaned area including the entrance/exit. The technical solution is as follows.

In one aspect, a cleaning control method is provided, which is executed when cleaning an unknown space to be cleaned by a cleaning robot, where the cleaning robot is used in conjunction with a base station, the base station is a cleaning device used by the cleaning robot, the space to be cleaned includes an entrance/exit, and the base station or the entrance/exit is configured as a reference object, and the cleaning control method includes:
S1: acquiring a map of the space to be cleaned as a first space map, where the first space map is configured to indicate the space to be cleaned or a subspace to be cleaned in the space to be cleaned, and the subspace to be cleaned is an uncleaned area in the space to be cleaned;
S2: based on the first space map, dividing the space to be cleaned into at least one cleaning area, where an entrance/exit is provided between two adjacent and connected cleaning areas;
S3: setting a cleaning sequence for the at least one cleaning area, where the cleaning sequence satisfies that any path from an entrance/exit of any cleaning area to the reference object is not allowed to pass through other cleaning area that has been cleaned; and
S4: sequentially performing cleaning operations on the at least one cleaning area of the space to be cleaned according to the cleaning sequence in unit of a cleaning area.

In another aspect, a cleaning control apparatus is provided, which is applied when cleaning an unknown space to be cleaned and used in conjunction with a base station, where the base station is a cleaning device used by the cleaning robot, the space to be cleaned includes an entrance/exit, and the base station or the entrance/exit is configured as a reference object, where the apparatus includes:
a first acquirer configured for acquiring a map of the space to be cleaned as a first space map, where the first space map is configured to indicate the space to be cleaned or a subspace to be cleaned in the space to be cleaned, and the subspace to be cleaned is an uncleaned area in the space to be cleaned;
a divider configured for based on the first space map, dividing the space to be cleaned into at least one cleaning area, where an entrance/exit is provided between two adjacent and connected cleaning areas;
a first setter configured for setting a cleaning sequence for the at least one cleaning area, where the cleaning sequence satisfies that any path from an entrance/exit of any cleaning area to the reference object is not allowed to pass through other cleaning area that has been cleaned; and
an performer configured for sequentially performing cleaning operations on the at least one cleaning area of the space to be cleaned according to the cleaning sequence in unit of a cleaning area.

In still another aspect, a cleaning robot is provided, and the cleaning robot includes:
one or more processors and one or more memories, where at least one instruction, at least one program, code set or instruction set is stored in the one or more memories and loaded and executed by the one or more processors to implement the operations performed in the foregoing cleaning control method.

In a further aspect, a computer-readable storage medium is provided, where at least one instruction, at least one program, code set or instruction set is stored thereon and loaded and executed by a processor to implement the operations performed in the foregoing cleaning control method.

The beneficial effects brought about by the technical solutions provided by the embodiments of this disclosure are as follows.

According to the cleaning control method provided by the embodiments of this disclosure, the cleaning robot acquires a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot from polluting the cleaned area that has been cleaned when it moves to the area where the base station is located for charging or cleaning a cleaning component, thereby enhancing the cleaning effect and improving the cleaning efficiency.

### BRIEF DESCRIPTION OF THE DRAWINGS

Fig. 1 is a schematic diagram of dividing cleaning areas according to the background.
Fig. 2 is a schematic diagram of an application scenario of a cleaning control method according to an embodiment of this disclosure.
Fig. 3 is a perspective schematic diagram of a cleaning robot according to an embodiment of this disclosure.
Fig. 4 is a schematic structural diagram of the cleaning robot according to an embodiment of this disclosure with a part of a housing being removed.
Fig. 5 is a bottom view of a mopping robot according to an embodiment of this disclosure.
Fig. 6 is a bottom view of another sweeping robot according to an embodiment of this disclosure.
Fig. 7 is a structural block diagram of the cleaning robot according to an embodiment of this disclosure.
Fig. 8 is a front view of a base station according to an embodiment of this disclosure.
Fig. 9 is a perspective schematic diagram of the base station according to an embodiment of this disclosure with a top cover being opened.
Fig. 10 is a structural block diagram of the base station according to an embodiment of this disclosure.
Fig. 11 is a schematic diagram of the cleaning robot driving toward the base station according to an embodiment of this disclosure.
Fig. 12 is a schematic diagram of a state in which the cleaning robot is parked on the base station according to an embodiment of this disclosure.
Fig. 13 is a flowchart of a cleaning control method according to an embodiment of this disclosure.
Fig. 14 is a flowchart of another cleaning control method according to an embodiment of this disclosure.
Fig. 15 is a schematic diagram of a first space map according to an embodiment of this disclosure.
Fig. 16 is a schematic diagram of another first space map according to an embodiment of this disclosure.
Fig. 17 is a schematic diagram of a reference direction according to an embodiment of this disclosure.
Fig. 18 is a schematic diagram of another reference direction according to an embodiment of this disclosure.
Fig. 19 is a schematic diagram of determining a first uncleaned point according to an embodiment of this disclosure.
Fig. 20 is another schematic diagram of determining the first uncleaned point according to an embodiment of this disclosure.
Fig. 21 is a schematic diagram of moving along a sidewinding trajectory according to an embodiment of this disclosure.
Fig. 22 is another schematic diagram of moving along a sidewinding trajectory according to an embodiment of this disclosure.
Fig. 23 is a flowchart of another cleaning control method according to an embodiment of this disclosure.
Fig. 24 is a schematic diagram of another first space map according to an embodiment of this disclosure.
Fig. 25 is a schematic diagram of scanning the first space map through horizontal scan lines according to an embodiment of this disclosure.
Fig. 26 is a schematic diagram of scanning the first space map through scan lines inclined at 45° according to an embodiment of this disclosure.
Fig. 27 is a schematic diagram of multiple cleaning areas obtained by merging after scanning the first space map through the horizontal scan lines according to an embodiment of this disclosure.
Fig. 28 is a schematic diagram of multiple cleaning areas obtained by merging after scanning the first space map through the scan lines inclined at 45° according to an embodiment of this disclosure.
Fig. 29 is a schematic diagram of a connected graph according to an embodiment of this disclosure.
Fig. 30 is a schematic diagram of configuring a cleaning direction for the cleaning areas according to an embodiment of this disclosure.
Fig. 31 is another schematic diagram of configuring a cleaning direction for the cleaning areas according to an embodiment of this disclosure.
Fig. 32 is a schematic diagram of determining a first uncleaned point according to an embodiment of this disclosure.
Fig. 33 is another schematic diagram of moving along a sidewinding trajectory according to an embodiment of this disclosure.
Fig. 34 is a flowchart of another cleaning control method according to an embodiment of this disclosure.
Fig. 35 is a schematic diagram of configuring weights between nodes according to an embodiment of this disclosure.
Fig. 36 is a schematic diagram of an area sequence tree according to an embodiment of this disclosure.
Fig. 37 is another schematic diagram of a connected graph according to an embodiment of this disclosure.
Fig. 38 is another schematic diagram of an area sequence tree according to an embodiment of this disclosure.
Fig. 39 is another schematic diagram of an area sequence tree according to an embodiment of this disclosure.
Fig. 40 is a flowchart of another cleaning control method according to an embodiment of this disclosure.
Fig. 41 is a schematic diagram of another first space map according to an embodiment of this disclosure.
Fig. 42 is a schematic diagram of scanning the first space map through vertical scan lines according to an embodiment of this disclosure.
Fig. 43 is a schematic diagram of multiple cleaning areas obtained by merging after scanning the first space map through the vertical scan lines according to an embodiment of this disclosure.
Fig. 44 is another schematic diagram of multiple cleaning areas obtained by merging after scanning the first space map through the vertical scan lines according to an embodiment of this disclosure.
Fig. 45 is another schematic diagram of a connected graph according to an embodiment of this disclosure.
Fig. 46 is a flowchart of another cleaning control method according to an embodiment of this disclosure.
Fig. 47 is a flowchart of another cleaning control method according to an embodiment of this disclosure.
Fig. 48 is a schematic diagram of another first space map according to an embodiment of this disclosure.
Fig. 49 is another schematic diagram of scanning the first space map through horizontal scan lines according to an embodiment of this disclosure.
Fig. 50 is another schematic diagram of scanning the first space map through vertical scan lines according to an embodiment of this disclosure.
Fig. 51 is a flowchart of another cleaning control method according to an embodiment of this disclosure.
Fig. 52 is a flowchart of another cleaning control method according to an embodiment of this disclosure.
Fig. 53 is another schematic diagram of scanning the first space map through vertical scan lines according to an embodiment of this disclosure.
Fig. 54 is another schematic diagram of scanning the first space map through horizontal scan lines according to an embodiment of this disclosure.
Fig. 55 is a flowchart of another cleaning control method according to an embodiment of this disclosure.
Fig. 56 is a flowchart of another cleaning control method according to an embodiment of this disclosure.
Fig. 57 is a schematic diagram of encountering an obstacle by the cleaning robot during a cleaning operation according to an embodiment of this disclosure.
Fig. 58 is a schematic diagram of another first space map according to an embodiment of this disclosure.
Fig. 59 is another schematic diagram of scanning the first space map through vertical scan lines according to an embodiment of this disclosure.
Fig. 60 is another schematic diagram of multiple cleaning areas obtained by merging after scanning the first space map through the vertical scan lines according to an embodiment of this disclosure.
Fig. 61 is another schematic diagram of multiple cleaning areas obtained by merging after scanning the first space map through the vertical scan lines according to an embodiment of this disclosure.
Fig. 62 is another schematic diagram of configuring a cleaning direction for the cleaning areas according to an embodiment of this disclosure.
Fig. 63 is a schematic diagram of another first space map according to an embodiment of this disclosure.
Fig. 64 is a flowchart of another cleaning control method according to an embodiment of this disclosure.
Fig. 65 is a flowchart of a cleaning control apparatus according to an embodiment of this disclosure.
Fig. 66 is a schematic diagram of another first space map according to an embodiment of this disclosure.
Fig. 67 is another schematic diagram of scanning the first space map through vertical scan lines according to an embodiment of this disclosure.
Fig. 68 is another schematic diagram of a connected graph according to an embodiment of this disclosure.
Fig. 69 is another schematic diagram of encountering an obstacle by the cleaning robot during a cleaning operation according to an embodiment of this disclosure.
Fig. 70 is a schematic diagram of another first space map according to an embodiment of this disclosure.
Fig. 71 is another schematic diagram of multiple cleaning areas obtained by merging after scanning the first space map through the horizontal scan lines according to an embodiment of this disclosure.
Fig. 72 is a flowchart of another cleaning control method according to an embodiment of this disclosure.
Fig. 73 is a flowchart of another cleaning control method according to an embodiment of this disclosure.
Fig. 74 is a schematic diagram of another first space map according to an embodiment of this disclosure.
Fig. 75 is another schematic diagram of a connected graph according to an embodiment of this disclosure.
Fig. 76 is another schematic diagram of configuring a cleaning direction for the cleaning areas according to an embodiment of this disclosure.
Fig. 77 is a flowchart of another cleaning control method according to an embodiment of this disclosure.
Fig. 78 is a schematic diagram of another first space map according to an embodiment of this disclosure.
Fig. 79 is another schematic diagram of a connected graph according to an embodiment of this disclosure.
Fig. 80 is a flowchart of another cleaning control method according to an embodiment of this disclosure.
Fig. 81 is a flowchart of another cleaning control method according to an embodiment of this disclosure.
Fig. 82 is a flowchart of another cleaning control method according to an embodiment of this disclosure.
Fig. 83 is a schematic diagram of another first space map according to an embodiment of this disclosure.
Fig. 84 is a schematic diagram of a room area according to an embodiment of this disclosure.
Fig. 85 is another schematic diagram of multiple cleaning areas obtained by merging after scanning the first space map through the horizontal scan lines according to an embodiment of this disclosure.
Fig. 86 is another schematic diagram of configuring a cleaning direction for the cleaning areas according to an embodiment of this disclosure.
Fig. 87 is a schematic structural diagram of a cleaning control apparatus according to an embodiment of this disclosure.

### DETAILED DESCRIPTION OF THE EMBODIMENTS

In order to make the technical solutions and advantages of this disclosure clearer, the embodiments of this disclosure are described in further detail below.

The embodiments of this disclosure provides an application scenario of a cleaning control method. Referring to Fig. 2, the application scenario includes a cleaning robot 100 and a base station 200. The cleaning robot 100 is configured to automatically clean a ground of a space to be cleaned. The base station 200 is a cleaning device used in conjunction with the cleaning robot 100 to charge the cleaning robot 100 or to clean a cleaning component of the cleaning robot 100. The cleaning robot 100 is provided with a cleaning component and a driving device. The driving device is configured to drive the cleaning robot 100, and the cleaning component is configured to automatically clean the ground of the space to be cleaned. The cleaning component may be a mopping module or a sweeping module. The mopping module is configured for mopping and cleaning the ground. The mopping module may be a mopping component, and the mopping component may be a rag. The sweeping module is configured for sweeping and cleaning the ground, and the sweeping module may be a side brush.

The space to be cleaned is provided with an entrance/exit for the cleaning robot 100 to enter and exit the space to be cleaned. When the cleaning robot 100 needs to go to an area where the base station 200 is located for charging or cleaning the cleaning component, it can enter and exit the space to be cleaned through the entrance/exit. The space to be cleaned may be a single room unit in a home space, a partial area of a room unit, or a room area composed of multiple room units, or a home space. The space to be cleaned may also be other public places such as an office in an office building, a large shopping mall or an airport. In the embodiments of this disclosure, the space to be cleaned is not specifically limited. When the space to be cleaned is a single room unit, the entrance/exit may be a door of the room unit; when the space to be cleaned is a partial area of the room unit, the entrance/exit may be a position where the cleaning robot 100 enters and exits the partial area; when the space to be cleaned is a home space, the entrance/exit may be a door of the home space.

In the embodiments of this disclosure, when cleaning the space to be cleaned, the cleaning robot 100 acquires a map of a space to be cleaned as a first space map, divides the space to be cleaned into at least one cleaning area based on the first space map, sets a cleaning sequence for the at least one cleaning area, and performs cleaning operations on the at least one cleaning area of the space to be cleaned in sequence according to the cleaning sequence in unit of a cleaning area. This method prevents the cleaning robot 100 from contaminating a cleaned area when it moves to an area where a base station 200 is located for charging or cleaning cleaning components, which enhances the cleaning effect and improving the cleaning efficiency.

The embodiments of this disclosure provides a cleaning robot 100 which can be used to automatically clean the ground.

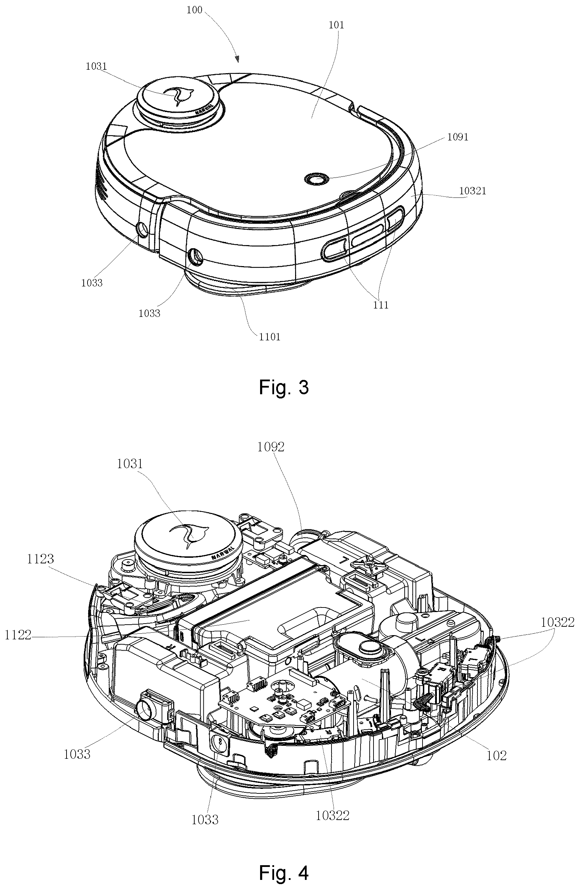

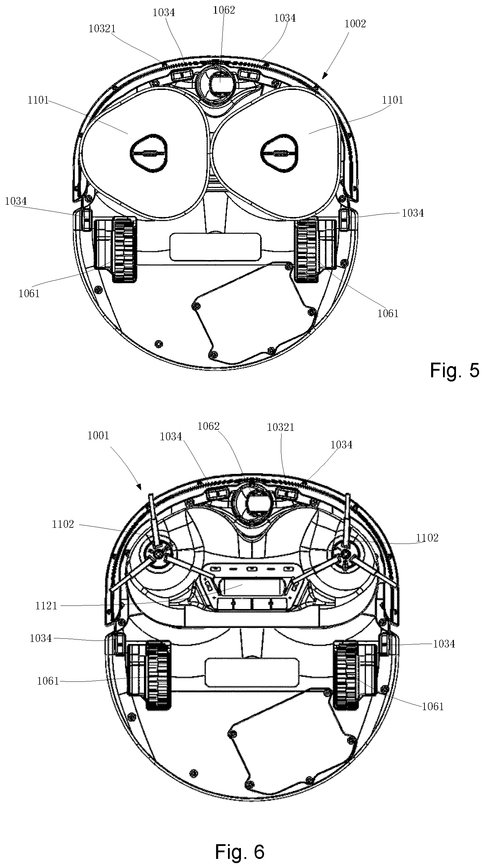

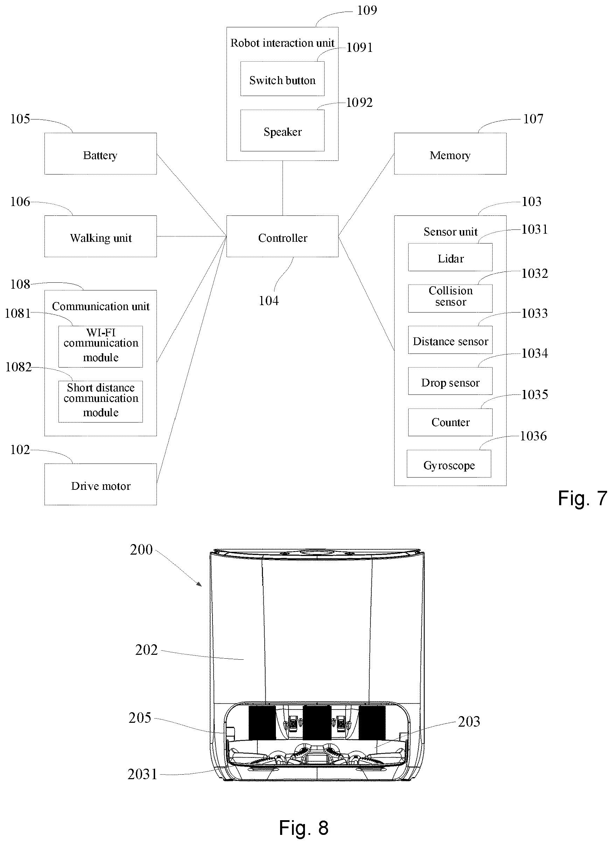

Fig. 3 is a perspective schematic diagram of the cleaning robot 100 according to an embodiment of this disclosure. Fig. 4 is a schematic structural diagram of the cleaning robot 100 with a part of a housing being removed. The cleaning robot 100 includes a sweeping robot 1001 and a mopping robot 1002. Fig. 5 is a bottom view of a mopping robot 1002 according to an embodiment of this disclosure. Fig. 6 is a bottom view of a sweeping robot 1001 according to an embodiment of this disclosure. Fig. 7 is another structural block diagram of the cleaning robot 100 according to an embodiment of this disclosure.

As shown in Figs. 3 to 7, the cleaning robot 100 includes a robot body 101, a drive motor 102, a sensor unit 103, a controller 104, a battery 105, a walking unit 106, a memory 107, a communication unit 108, a robot interaction unit 109, a cleaning component, a charging component 111 and so on.

The robot body 101 may have a circular structure, a square structure, or the like. In the embodiments of this disclosure, taking the robot body 101 having a D-shaped structure as an example for description. As shown in Fig. 3, a front part of the robot body 101 is a rectangular structure with rounded corners, and a rear part is a semicircular structure. In the embodiments of this disclosure, the robot body 101 has a left-right symmetric structure.

The cleaning component is configured to clean the ground, and a number of cleaning component may be one or more. The cleaning component is arranged at a bottom of the robot body 101, specifically at a front position of the bottom of the robot body 101. A drive motor 102 is provided inside the robot body 101, two rotating shafts extend from the bottom of the robot body 101, and the cleaning component is sleeved on the rotating shafts. The drive motor 102 can drive the rotating shafts to rotate, so that the rotating shafts drive the cleaning component to rotate.

As shown in Fig. 5, for the mopping robot 1002, the cleaning component is specifically a mopping component 1101, and the mopping component 1101 is, for example, a mop. The mopping component 1101 is configured for mopping and cleaning the ground.

As shown in Fig. 6, for the cleaning robot 1001, the cleaning component is specifically a side brush 1102, and the side brush 1102 is configured for sweeping and cleaning the ground. The cleaning robot 1001 is further provided with a dust suction device, which includes a dust suction port 1121 provided at the bottom of the robot body 101 and a dust box 1122 and a fan 1123 provided inside the robot body 101. The side brush 1102 is arranged on the rotating shafts at the bottom of the sweeping robot 1001. After the rotating shafts drive the side brush 1102, the rotating side brush 1102 sweeps garbage such as dust to the dust suction port 1121 at the bottom of the sweeping robot 1001. Due to the suction effect of the fan 1123, the garbage is sucked into the dust suction port 1121 and enters the dust box 1122 through the dust suction port 1121 for temporary storage.

In the embodiments of this disclosure, the cleaning component of the cleaning robot 100 may be set in a detachable connection mode. When mopping cleaning is required, the mopping component 1101 is installed on the bottom of the robot body 101; and when sweeping cleaning is required, the side brush 1102 is configured to replace the mopping component 1101, and the side brush 1102 is installed on the bottom of the robot body 101.

The walking unit 106 is an component related to the movement of the cleaning robot 100, and the walking unit 106 includes a driving wheel 1061 and a universal wheel 1062. The universal wheel 1062 and the driving wheel 1061 cooperate to realize steering and movement of the cleaning robot 100. A driving wheel 1061 is respectively provided on left and right sides at a position near the rear part of a bottom surface of the robot body 101. The universal wheel 1062 is arranged on a center line of the bottom surface of the robot body 101 and is located between the two cleaning components.

Each driving wheel 1061 is provided with a driving wheel motor and rotates when driven by the driving wheel motor. The driving wheel 1061 rotates to drive the cleaning robot 100 to move. By controlling a difference in rotation speed of left and right driving wheels 1061, a steering angle of the cleaning robot 100 can be controlled.

Fig. 7 is another structural schematic diagram of the cleaning robot 100 shown in Fig. 3.

The controller 104 is provided inside the robot body 101, and the controller 104 is configured to control the cleaning robot 100 to perform specific operations. The controller 104 may be, for example, a Central Processing Unit (CPU), or a microprocessor. As shown in Fig. 7, the controller 104 is electrically connected with components such as the battery 105, the memory 107, the drive motor 102, the walking unit 106, the sensor unit 103, and the robot interaction unit 109 to control these components.

The battery 105 is provided inside the robot body 101, and the battery 105 is configured to provide power to the cleaning robot 100.

The robot body 101 is further provided with a charging component 111, which is configured to obtain power from an external device to charge the battery 105 of the cleaning robot 100.

The memory 107 is arranged on the robot body 101, and a program is stored on the memory 107, and the program is executed by the controller 104 to realize corresponding operations. The memory 107 is further configured to store parameters used by the cleaning robot 100. The memory 107 includes, but is not limited to, a magnetic disk memory, a Compact Disc Read-Only Memory (CD-ROM), an optical memory, and the like.

The communication unit 108 is arranged on the robot body 101. The communication unit 108 is configured to allow the cleaning robot 100 to communicate with external devices. The communication unit 108 includes but is not limited to a Wireless-Fidelity (WI-FI) communication module 1081 and a short distance communication module 1082 and so on. The cleaning robot 100 can be connected to a WI-FI router through the WI-FI communication module 1081 to communicate with a terminal. The cleaning robot 100 communicates with the base station through the short-range communication module 1082. The base station is a cleaning device that cooperates with the cleaning robot 100.

The sensor unit 103 provided on the robot body 101 includes various types of sensors, such as a lidar 1031, a collision sensor 1032, a distance sensor 1033, a drop sensor 1034, a counter 1035, and a gyroscope 1036.

The lidar 1031 is set on a top of the robot body 101. When working, the lidar 1031 rotates and emits a laser signal through a transmitter on the lidar 1031. The laser signal is reflected by the obstacle, so that a receiver of the lidar 1031 receives the laser signal reflected by the obstacle. A circuit unit of the lidar 1031 can obtain surrounding environment information by analyzing the received laser signal, such as a distance and an angle of the obstacle relative to the lidar 1031. In addition, a camera may also be configured instead of lidar, and the distance and angle of the obstacle relative to the camera can also be obtained by analyzing the obstacle in an image taken by the camera.

The collision sensor 1032 includes a collision housing 10321 and a trigger sensor 10322. The collision housing 10321 surrounds a head of the robot body 101. Specifically, the collision housing 10321 is provided at the head of the robot body 101 and front positions of left and right sides of the robot body 101. The trigger sensor 10322 is arranged inside the robot body 101 and behind the collision housing 10321. An elastic buffer is provided between the collision housing 10321 and the robot body 101. When the cleaning robot 100 collides with an obstacle through the collision housing 10321, the collision housing 10321 moves towards the inside of the cleaning robot 100 and compresses the elastic buffer. After the collision housing 10321 moves a certain distance towards the inside of the cleaning robot 100, the collision housing 10321 contacts the trigger sensor 10322, and the trigger sensor 10322 is triggered to generate a signal, which can be sent to the controller 104 inside the robot body 101 for processing. After colliding the obstacle, the cleaning robot 100 moves away from the obstacle, and the collision housing 10321 moves back to the original position under the action of the elastic buffer. It can be seen that the collision sensor 1032 can detect the obstacle and play a buffering role when it collides with the obstacle.

The distance sensor 1033 may specifically be an infrared detection sensor, which may be configured to detect a distance from the obstacle to the distance sensor 1033. The distance sensor 1033 is arranged on a lateral side of the robot body 101, so that a distance from the obstacle located near the lateral side of the cleaning robot 100 to the distance sensor 1033 can be measured by the distance sensor 1033. The distance sensor 1033 may also be an ultrasonic distance measuring sensor, a laser distance measuring sensor or a depth sensor.

The drop sensor 1034 is provided on a bottom edge of the robot body 101, and a number can be one or more. When the cleaning robot 100 moves to an edge of the ground, the drop sensor 1034 can detect that the cleaning robot 100 is at risk of falling from a height, so as to perform a corresponding anti-drop response, for example, the cleaning robot 100 stops moving or moves away from the falling position and so on.

A counter 1035 and a gyroscope 1036 are further provided inside the robot body 101. The counter 1035 is configured to accumulate a total rotation angle of the driving wheel 1061 to calculate a distance the driving wheel 1061 drives the cleaning robot 100 to move. The gyroscope 1036 is configured to detect the rotation angle of the cleaning robot 100, so that an orientation of the cleaning robot 100 can be determined.

The robot interaction unit 109 is disposed on the robot body 101, and the user can interact with the cleaning robot 100 through the robot interaction unit 109. The robot interaction unit 109 includes components such as a switch button 1091 and a speaker 1092. The user can control the cleaning robot 100 to start or stop working by pressing the switch button 1091. The cleaning robot 100 may play a prompt sound to the user through the speaker 1092.

It should be understood that the cleaning robot 100 described in the embodiments of this disclosure is only a specific example, and does not specifically limit the cleaning robot 100 in the embodiments of this disclosure. The cleaning robot 100 in the embodiments of this disclosure may also be other specific implementations. For example, in other implementations, the cleaning robot 100 may have more or fewer components than the cleaning robot 100 shown in Fig. 3. For another example, the cleaning robot 100 may be an integrated sweeping and mopping robot, that is, the bottom of the cleaning robot 100 is provided with a mopping component, a side brush, and a suction port, so that the cleaning robot 100 can simultaneously mopping and sweeping the ground.

The embodiments of this disclosure further provides a base station 200, which is used in conjunction with the cleaning robot 100. For example, the base station 200 can charge the cleaning robot 100, and provide a parking position for the cleaning robot 100. When the cleaning robot 100 is the mopping robot 1002, the base station 200 can also clean the mopping component 1101 of the mopping robot 1002. The mopping component 1101 is configured for mopping and cleaning the ground.

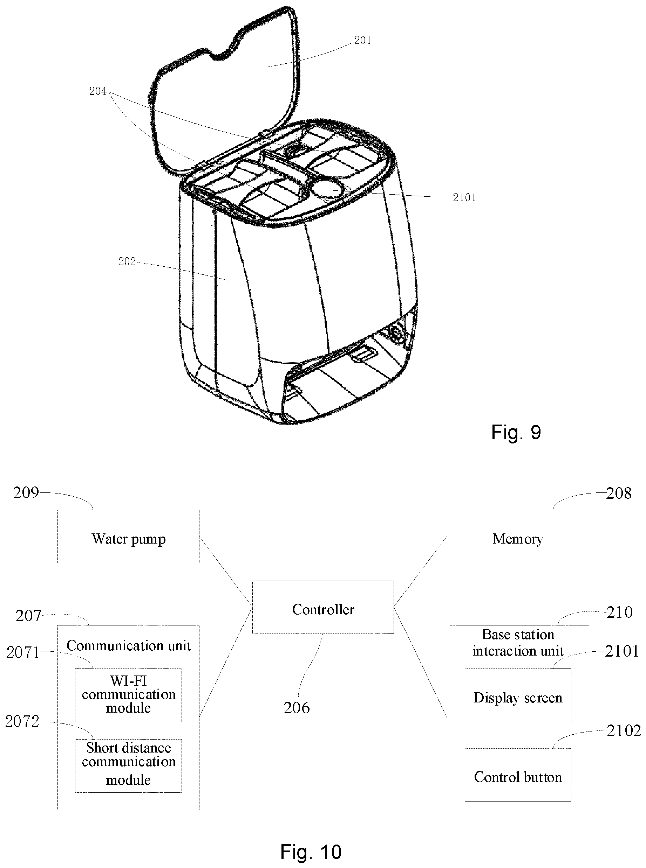

Fig. 8 is a front view of a base station 200 according to an embodiment of this disclosure. Fig. 9 is a perspective schematic diagram of the base station 200 shown in Fig. 8 with a top cover 201 being opened.

As shown in Fig. 8 and Fig. 9, the base station 200 in the embodiments of this disclosure includes a base station body 202, a cleaning tank 203 and a water tank 204.

The cleaning tank 203 is provided on the base station body 202 and configured for cleaning the mopping component 1101 of the mopping robot 1002. A cleaning rib 2031 provided in the cleaning tank 203 can scrape and clean the mopping component 1101.

An entry port 205 is provided on the base station body 202, and the entry port 205 leads to the cleaning tank 203. The cleaning robot 100 can drive into the base station 200 through the entry port 205 so that the cleaning robot 100 is parked at a preset parking position on the base station 200.

The water tank 204 is arranged inside the base station body 202, and the water tank 204 specifically includes a clean water tank and a dirty water tank. The clean water tank is configured to store clean water. When the cleaning robot 100 is a mopping robot 1002 and the mopping robot 1002 is provided with a mopping component 1101 at the bottom, the cleaning robot 100 is parked on the base station 200 and the mopping component 1101 of the cleaning robot 100 is accommodated in the cleaning tank 203. The clean water tank provides cleaning water to the cleaning tank 203, and the cleaning water is used to clean the mopping component 1101. Then, the dirty water after cleaning the mopping component 1101 is collected in the dirty water tank. A top cover 201 is provided on the base station body 202, and the user can take out the water tank 204 from the base station body 202 by opening the top cover 201.

Fig. 10 is another schematic structural diagram of the base station 200 shown in Fig. 8.

Referring to Fig. 10, the base station 200 according to the embodiments of this disclosure further includes a controller 206, a communication unit 207, a memory 208, a water pump 209, a base station interaction unit 210, and the like.

The controller 206 is arranged inside the base station body 202 and configured to control the base station 200 to perform specific operations. The controller 206 may be, for example, a Central Processing Unit (CPU), or a microprocessor. The controller 206 is electrically connected to the communication unit 207, the memory 208, the water pump 209, and the base station interaction unit 210.

The memory 208 is arranged on the base station body 202, and a program is stored on the memory 208, and the program is executed by the controller 206 to realize corresponding operations. The memory 208 is further configured to store parameters used by the base station 200. The memory 208 includes, but is not limited to, a magnetic disk memory, a CD-ROM, an optical memory, and the like.

The water pump 209 is arranged inside the base station body 202. Specifically, there are two water pumps 209. One water pump 209 is configured to control the clean water tank to provide cleaning water to the cleaning tank 203, and the other water pump 209 is configured to collect dirty water after cleaning the mopping component 1101 to the dirty water tank.

The communication unit 207 is arranged on the base station body 202. The communication unit 207 is configured to communicate with external devices. The communication unit 207 includes but is not limited to a Wireless-Fidelity (WI-FI) communication module 2071 and a short distance communication module 2072 and so on. The base station 200 can be connected to a WI-FI router through the WI-FI communication module 2071 to communicate with the terminal. The base station 200 can communicate with the cleaning robot 100 through a short-range communication module 2072.

A base station interaction unit 210 is configured to interact with the user. The base station interaction unit 210 includes, for example, a display screen 2101 and a control button 2102. The display screen 2101 and the control button 2102 are arranged on the base station body 202. The display screen 2101 is configured to display information to the user, and the control button 2102 is configured for the user to, for example, perform pressing operations to control the startup or shutdown of the base station 200, etc.

The base station body 202 is further provided with a power supply component, and the cleaning robot 100 is provided with a charging component 111. When the cleaning robot 100 is parked at the preset parking position on the base station 200, the charging component 111 of the cleaning robot 100 is in contact with the power supply component of the base station 200, so that the base station 200 charges the cleaning robot 100. The electric energy of the base station 200 can be come from the mains.

An exemplary description of a process of the cleaning robot 100 and the base station 200 working together is given as follows.

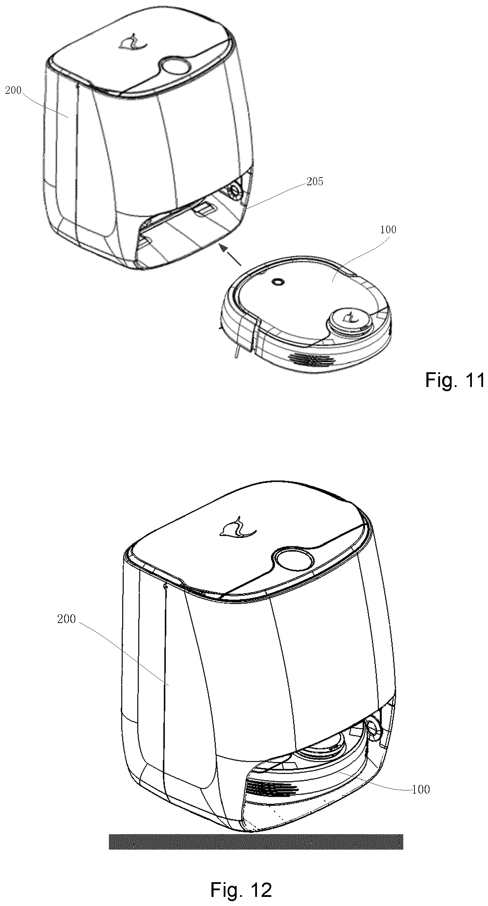

The cleaning robot 100 is used to clean the ground of the room. When the power of the battery 105 on the cleaning robot 100 is less than a preset power threshold, as shown in Fig. 11, the cleaning robot 100 automatically drives to the base station 200. The cleaning robot 100 enters the base station 200 through the entry port 205 on the base station 200 and is parked at a preset parking position on the base station 200. The state of the cleaning robot 100 parked on the base station 200 can be seen in Fig. 12.

At this time, the charging component 111 on the cleaning robot 100 is in contact with the power supply component on the base station 200, and the base station 200 obtains power from the mains and charges the battery 105 of the cleaning robot 100 through the power supply component and the charging component 111. After the cleaning robot 100 is fully charged, it drives away from the base station 200 and continues to clean the ground of the room.

When the cleaning robot 100 is a mopping robot 1002, and a mopping component 1101 is provided on the bottom of the mopping robot 1002, the cleaning robot 100 is configured for mopping and cleaning the ground. The cleaning robot 100 mops the ground of the room for a period of time. After the mopping component 1101 becomes dirty, the cleaning robot 100 drives to the base station 200. The cleaning robot 100 enters the base station 200 through the entry port 205 on the base station 200 and is parked at a preset parking position on the base station 200. The state of the cleaning robot 100 parked on the base station 200 can be seen in Fig. 12. At this time, the mopping component 1101 of the cleaning robot 100 is accommodated in the cleaning tank 203. Under the action of the water pump 209, the cleaning water from the clean water tank in the base station 200 flows to the cleaning tank 203, and sprays through a liquid inlet structure on the cleaning tank 203 to the mopping component 1101, and the mopping component 1101 scrapes with the protruded cleaning rib 2031 in the cleaning tank at the same time, so as to realize the cleaning of the mopping component 1101. The dirty water after cleaning the mopping component 1101 flows out of the cleaning tank 203 from a drainage structure on the cleaning tank, and is collected into the dirty water tank under the action of the water pump 209.

It should be understood that the base station 200 described in the embodiments of this disclosure is only a specific example, and does not constitute a specific limitation to the base station 200 in the embodiments of this disclosure. The base station 200 in the embodiments of this disclosure may also be other specific implementations. For example, the base station 200 in the embodiments of this disclosure may not include the water tank 204, and the base station body 202 may be connected to a tap water pipe and a drain pipe, so that the mopping component 1101 of the cleaning robot 100 can be cleaned with tap water from the tap water pipe, and the dirty water after cleaning the mopping component 1101 can flow out of the base station 200 through the drain pipe. Or, in other implementations, the base station 200 may have more or fewer components than the base station 200 shown in Fig. 8.

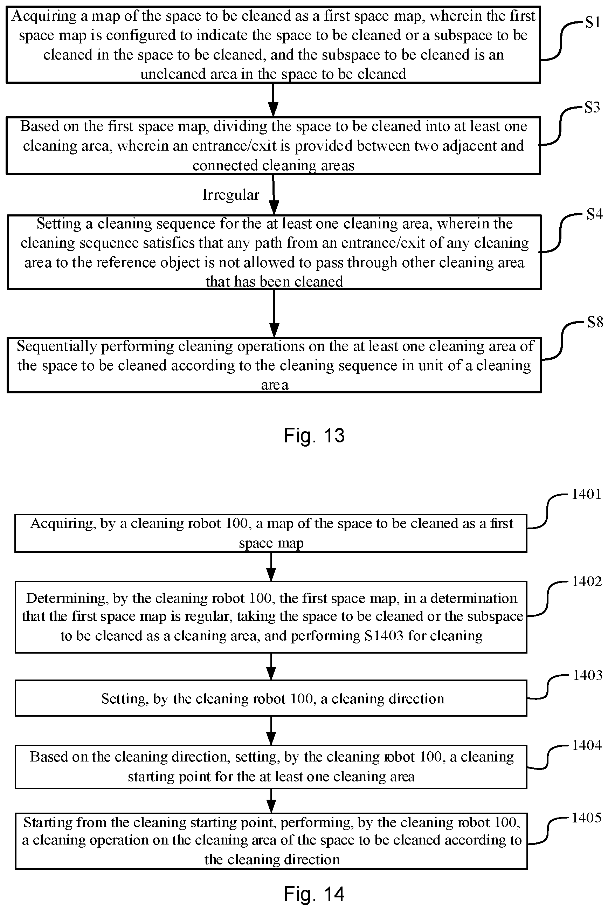

The embodiments of this disclosure provides a cleaning control method. Referring to Fig. 13, which is executed when cleaning an unknown space to be cleaned by a cleaning robot 100, where the cleaning robot 100 is used in conjunction with a base station 200, the base station 200 is a cleaning device used by the cleaning robot 100, the space to be cleaned includes an entrance/exit, and the base station 200 or the entrance/exit is configured as a reference object, and the cleaning control method includes:
S1: acquiring a map of the space to be cleaned as a first space map, where the first space map is configured to indicate the space to be cleaned or a subspace to be cleaned in the space to be cleaned, and the subspace to be cleaned is an uncleaned area in the space to be cleaned;
S2: based on the first space map, dividing the space to be cleaned into at least one cleaning area, where an entrance/exit is provided between two adjacent and connected cleaning areas;
S3: setting a cleaning sequence for the at least one cleaning area, where the cleaning sequence satisfies that any path from an entrance/exit of any cleaning area to the reference object is not allowed to pass through other cleaning area that has been cleaned; and
S4: sequentially performing cleaning operations on the at least one cleaning area of the space to be cleaned according to the cleaning sequence in unit of a cleaning area.

In a possible implementation manner, where before S2, the method further includes:
S5: determining the first space map, in a determination that the first space map is regular, taking the space to be cleaned or the subspace to be cleaned as a cleaning area, and performing S6: setting a cleaning direction and a cleaning starting point for the cleaning area, and performing a cleaning operation on the cleaning area of the space to be cleaned, otherwise, performing S2, where the first space map being regular is defined as: there is at least one path from any point in the first space map to the reference object, and the at least one path includes no movement path tending to an opposite direction to a reference direction, where the reference direction is a direction in which any point in the space to be cleaned or the subspace to be cleaned points to the reference object, and a connection line area between the point and the reference object does not pass through an obstacle.

In another possible implementation manner, where S4: sequentially performing cleaning operations on the at least one cleaning area of the space to be cleaned according to the cleaning sequence in unit of a cleaning area includes:
S41: setting a cleaning direction for the at least one cleaning area, where the cleaning direction is a reference direction;
S42: based on the cleaning direction, setting a cleaning starting point for the at least one cleaning area, where the cleaning starting point is a point on an edge of the at least one cleaning area opposite to the cleaning direction; and
S43: starting from the cleaning starting point in unit of a cleaning area, performing cleaning operations on the at least one cleaning area of the space to be cleaned according to the cleaning direction and the cleaning sequence.

In another possible implementation manner, where before S41, the method further includes:
S7: selecting a cleaning area according to the cleaning sequence, and determining an area map of the cleaning area, in a determination that the area map is regular, performing S41 for cleaning; otherwise, taking the area map as the first space map, taking the cleaning area as the space to be cleaned, and performing S2, where the area map being regular is defined as: there is at least one path from any point in the area map to the entrance/exit, and the at least one path includes no movement path tending to an opposite direction to the entrance/exit.

In another possible implementation, the method further includes:
after performing a cleaning operation on one cleaning area, moving from the one cleaning area to a next cleaning area based on a navigation path from the one cleaning area to the next cleaning area.

In another possible implementation manner, where S2: dividing the space to be cleaned into at least one cleaning area includes:
dividing the space to be cleaned according to room information of the first space map to obtain the at least one cleaning area.

In another possible implementation manner, where before S2, the method further includes:
taking the reference object as an origin, setting a right-angle reference coordinate system including an X-axis and a Y-axis, where the reference direction is perpendicular to the X-axis, and the reference direction is a positive direction of the Y-axis;
where S2: based on the first space map, dividing the space to be cleaned into at least one cleaning area includes:
   S21: at a position of the reference object, scanning the first space map by horizontal scan lines, where the horizontal scan lines are perpendicular to the reference direction;

in a determination that a scanned area in the first space map includes an adjacent and unscanned area in the positive direction of the Y-axis, advancing the horizontal scan lines along the positive direction of the Y-axis to scan the adjacent and unscanned area;
in a determination that the scanned area in the first space map includes an adjacent and unscanned area in a negative direction of the Y-axis, advancing the horizontal scan lines along the negative direction of the Y-axis to scan the adjacent and unscanned area;
S22: taking a position where lengths of the horizontal scan lines cut by the first space map are segmented and an edge of the first space map as a boundary, and merging continuous areas scanned in a same direction to dividing the space to be cleaned into the at least one cleaning area.

In another possible implementation manner, where before S2, the method further includes:
taking the reference object as an origin, setting a right-angle reference coordinate system including an X-axis and a Y-axis, where the reference direction is perpendicular to the X-axis, and the reference direction is a positive direction of the Y-axis;
where S2: based on the first space map, dividing the space to be cleaned into at least one cleaning area includes:
   S201: at a position of the reference object, scanning the first space map by vertical scan lines, where the vertical scan lines are parallel to the reference direction;

in a determination that a scanned area in the first space map includes an adjacent and unscanned area in a positive direction of the X-axis, advancing the vertical scan lines along the positive direction of the X-axis to scan the adjacent and unscanned area; and

in a determination that the scanned area in the first space map includes an adjacent and unscanned area in a negative direction of the X-axis, advancing the vertical scan lines along the negative direction of the X-axis to scan the adjacent and unscanned area; and

S202: taking a position where lengths of the vertical scan lines cut by the first space map are segmented and an edge of the first space map as a boundary, and merging continuous areas scanned in a same direction to dividing the space to be cleaned into the at least one cleaning area.

In another possible implementation manner, where before S2, the method further includes:
taking the reference object as an origin, setting a right-angle reference coordinate system including an X-axis and a Y-axis, where the reference direction is perpendicular to the X-axis, and the reference direction is a positive direction of the Y-axis;
where S2: based on the first space map, dividing the space to be cleaned into at least one cleaning area includes:
   S211: at a position of the reference object, scanning the first space map by horizontal scan lines and vertical scan lines, where the horizontal scan lines are perpendicular to the reference direction, and the vertical scan lines are parallel to the reference direction;
in a determination that a scanned area in the first space map includes an adjacent and unscanned area in the positive direction of the Y-axis, advancing the horizontal scan lines along the positive direction of the Y-axis to scan the adjacent and unscanned area;
in a determination that the scanned area in the first space map includes an adjacent and unscanned area in a negative direction of the Y-axis, advancing the horizontal scan lines along the negative direction of the Y-axis to scan the adjacent and unscanned area;
in a determination that a scanned area in the first space map includes an adjacent and unscanned area in a positive direction of the X-axis, advancing the vertical scan lines along the positive direction of the X-axis to scan the adjacent and unscanned area; and
in a determination that the scanned area in the first space map includes an adjacent and unscanned area in a negative direction of the X-axis, advancing the vertical scan lines along the negative direction of the X-axis to scan the adjacent and unscanned area; and
S212: taking positions where lengths of the horizontal scan lines and the vertical scan lines cut by the first space map are segmented and an edge of the first space map as a boundary, and merging areas scanned in a same direction to dividing the space to be cleaned into the at least one cleaning area.

In another possible implementation manner, before S3, the method further includes:
in a determination that an area of a cleaning area is smaller than a preset value, merging the cleaning area and other adjacent cleaning area having an area larger than the preset value.

In another possible implementation manner, where merging the cleaning area and other adjacent cleaning area having an area larger than the preset value includes:
merging the cleaning area into a cleaning area scanned by scan lines advanced in a same direction.

In another possible implementation manner, where S3: setting a cleaning sequence for the at least one cleaning area includes:
S301: based on the at least one cleaning area, establishing an area sequence tree, where the area sequence tree includes at least one node, each node represents a cleaning area in the space to be cleaned and is connected to at least one another node of the at least one node, the at least one node includes a top node, a parent node and a child node, one node close to the top node of two connected nodes is the parent node, the other node far from the top node of the two connected nodes is the child node, a cleaning area represented by the parent node is adjacent to a cleaning area represented by the child node, or, one of the parent node and the child node represents an isolated cleaning area, the other one of the parent node and the child node represents a cleaning area closest to the isolated cleaning area, a cleaning area represented by the top node is a cleaning area where the reference object is located, and there is only one path from any non-top node in the area sequence tree to the top node; and
S302: based on the area sequence tree, setting the cleaning sequence for cleaning areas.

In another possible implementation manner, where S301: based on the at least one cleaning area, establishing an area sequence tree includes:
S3011: setting a node representing each cleaning area;
S3012: according to connection relationship between the cleaning areas, in a determination that cleaning areas represented by any two nodes are adjacent, or one of the two nodes represents the isolated cleaning area, the other one of the two nodes represents the cleaning area closest to the isolated cleaning area, connecting the two nodes to construct a connected graph of the cleaning areas; and
S3013: establishing the area sequence tree according to the connected graph.

In another possible implementation manner, where S3013: establishing the area sequence tree according to the connected graph includes:
in a determination that there is only one path from any non-top node to the top node in the connected graph, taking the connected graph as the area sequence tree; and
in a determination that there are multiple paths from a non-top node to the top node in the connected graph, performing cycle removal processing on the connected graph to obtain the area sequence tree, where a cycle is a circular path formed by successively connecting at least three nodes, and the cycle makes the multiple paths from the non-top node to the top node in the connected graph.

In another possible implementation manner, where S302: based on the area sequence tree, setting the cleaning sequence for cleaning areas includes:
S3021: determining a first target cleaning area based on the area sequence tree;
S3022: based on the area sequence tree, querying a parent node of a first target node representing the first target cleaning area, and querying whether the parent node of the first target node includes a child node representing a non-first target cleaning area, if not, taking a cleaning area represented by the parent node of the first target node as a second target cleaning area, and if yes, taking a cleaning area represented by a bottom node in the child node as the second target cleaning area;
S3023: based on the area sequence tree, querying a parent node of a second target node representing the second target cleaning area, and querying whether the parent node of the second target node includes a child node representing a non-first and non-second target cleaning area, if not, taking a cleaning area represented by the parent node of the second target node as a third target cleaning area, and if yes, taking a cleaning area represented by a bottom node in the child node as the third target cleaning area; and
S3024: querying the third target cleaning area in the area sequence tree until a cleaning area represented by the top node is taken as a last target cleaning area.

In another possible implementation manner, where S3021: determining a first target cleaning area based on the area sequence tree includes:
in the first space map, determining a first cleaning area closest to a current first position of the cleaning robot;
based on the area sequence tree, taking the first cleaning area as a starting node to determine whether there are leaf nodes in a target subtree, where the target subtree is a local area sequence tree with the starting node as the top node in the area sequence tree, and the leaf node is a node including a parent node and no child node in the area sequence tree;
in a determination that there are the leaf nodes in the target subtree, selecting a leaf node from the leaf nodes of the target subtree, and taking a cleaning area represented by the selected leaf node as the first target cleaning area; and in a determination that there is no leaf node in the target subtree, taking a cleaning area represented by the starting node as the first target cleaning area.

In another possible implementation, a cleaning direction of the cleaning area represented by the top node is the same as the reference direction, for any child node of a non-top node in the area sequence tree, a cleaning direction of a cleaning area represented by the child node points to a cleaning area represented by a parent node of the child node, and the cleaning direction of the cleaning area represented by the child node is parallel or perpendicular to the reference direction.

In another possible implementation manner, where S42: setting a cleaning starting point for the at least one cleaning area includes:
based on the area map, in the at least one cleaning area, searching for a first uncleaned point closest to a current first position of the cleaning robot; in the at least one cleaning area, within a preset length range perpendicular to the cleaning direction, searching for a second uncleaned point in the at least one cleaning area in an opposite direction to the cleaning direction, where the second uncleaned point is a farthest uncleaned point from the first uncleaned point in the cleaning direction; based on the second uncleaned point, determining the cleaning starting point for the at least one cleaning area; or,
based on the area map, in the at least one cleaning area, starting from the current first position of the cleaning robot, scanning in the opposite direction to the cleaning direction in a form of scan lines to search for a first uncleaned point in the at least one cleaning area, where the scan lines are perpendicular to the cleaning direction, and the first uncleaned point is a farthest uncleaned point from the first position in the cleaning direction; based on the first uncleaned point, determining the cleaning starting point for the at least one cleaning area; or,
based on the area map, in the at least one cleaning area, taking an entrance edge of the at least one cleaning area as a starting position of the cleaning robot, and searching for the first uncleaned point in the at least one cleaning area in the opposite direction to the cleaning direction, where the first uncleaned point is a farthest uncleaned point from the starting position of the at least one cleaning area in the cleaning direction; based on the first uncleaned point, determining the cleaning starting point for the at least one cleaning area; or,
based on the area map, in the at least one cleaning area, searching for the first uncleaned point closest to the current first position of the cleaning robot; based on the first uncleaned point, determining the cleaning starting point for the at least one cleaning area.

In another possible implementation manner, where based on the first uncleaned point, determining the cleaning starting point for the at least one cleaning area includes:
taking the first uncleaned point as the cleaning starting point of the at least one cleaning area; or,
in a determination that there is an uncleaned point on an edge where the first uncleaned point is located, moving to an end point of the edge, and taking the end point of the edge as the cleaning starting point of the at least one cleaning area.

In another possible implementation, the method further includes:
S8: in response to encountering an obstacle during the cleaning operations, in a determination that the obstacle crosses at least two cleaning areas, and a crossing distance of the obstacle is greater than a first threshold, acquiring a second space map of the uncleaned area in the space to be cleaned, taking the second space map as the first space map, and performing S2: based on the first space map, dividing the space to be cleaned into at least one cleaning area.

In another possible implementation manner, the cleaning robot is provided with a cleaning component, and the cleaning component is configured for the cleaning robot to perform cleaning operations on the ground; the cleaning component is a mopping module, and the mopping module is configured for mopping and cleaning the ground; and the space to be cleaned is a room unit.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned area that has been cleaned when it moves to the area where the base station is located for charging or cleaning a cleaning component, thereby enhancing the cleaning effect and improving the cleaning efficiency.

### Embodiment 1

An embodiment of this disclosure provides a cleaning control method. Referring to Fig. 14, in an embodiment of this disclosure, a situation in which the space to be cleaned is a room unit, and the room unit is a regular room unit, and the cleaning robot 100 directly takes the room unit as a cleaning area to perform a cleaning operation on the room unit is described as an example, and the method includes:
S1401: acquiring, by a cleaning robot 100, a map of the space to be cleaned as a first space map.

The timing of execution of the cleaning control method in all embodiments of this disclosure may be: edgeless cleaning, or a part of the area has been cleaned, or edge cleaning ends and before the sidewinding cleaning starts. Where, edge cleaning refers that the cleaning robot 100 cleans the ground along the edge of the wall, and end of the edge cleaning refers that the cleaning robot 100 finishes cleaning the edge along the wall of the space to be cleaned. The cleaning robot 100 can obtain edge information of the space to be cleaned by edge cleaning. The sidewinding cleaning refers that the cleaning robot 100 gradually advances in the cleaning direction and turns back and forth in a direction perpendicular to the cleaning direction. In addition, the first space map is configured to indicate the space to be cleaned or a subspace to be cleaned in the space to be cleaned, and the subspace to be cleaned is an uncleaned area in the space to be cleaned.

In a possible implementation, before this step, the cleaning robot 100 acquires a first space map of the space to be cleaned, and stores the first space map; and in this step, the cleaning robot 100 performs the cleaning control method to directly acquire the stored first space map. The cleaning robot 100 can store the first space map on the memory, and accordingly, the cleaning robot 100 can read the first space map from the memory. In another possible implementation manner, the cleaning robot 100 can acquire the first space map of the space to be cleaned in this step.

The cleaning robot 100 acquires the first space map of the space to be cleaned in the following six implementation manners. For a first implementation manner, a lidar is installed on the cleaning robot 100. Correspondingly, the step of acquiring, by a cleaning robot 100, a map of the space to be cleaned as a first space map may be: the cleaning robot 100 can detect the space to be cleaned by the lidar installed on the cleaning robot 100 to obtain the first space map of the space to be cleaned.

For a second implementation manner, the cleaning robot 100 can obtain the first space map of the space to be cleaned by edge cleaning. Correspondingly, the step of acquiring, by a cleaning robot 100, a map of the space to be cleaned as a first space map may be: cleaning, by the cleaning robot 100, the edge of the space to be cleaned, and obtaining, by the cleaning robot 100, the first space map according to the cleaning trajectory of the edge. When the space to be cleaned is a home space including multiple room units, the step of cleaning, by the cleaning robot 100, the edge of the space to be cleaned may be: cleaning, by the cleaning robot 100, an edge of each room unit of the space to be cleaned.

For a third implementation manner, an inertial measurement unit and a collision sensor are installed on the cleaning robot 100. Correspondingly, the step of acquiring, by a cleaning robot 100, a map of the space to be cleaned as a first space map may be: detecting, by the cleaning robot 100, the space to be cleaned by using the inertial measurement unit and the collision sensor to obtain the first space map of the space to be cleaned.

For a fourth implementation manner, a vision sensor is installed on the cleaning robot 100. Correspondingly, the step of acquiring, by a cleaning robot 100, a map of the space to be cleaned as a first space map may be: detecting, by the cleaning robot 100, the space to be cleaned by using the vision sensor to obtain the first space map of the space to be cleaned.

For a fifth implementation manner, the server stores the first space map of the space to be cleaned, and the cleaning robot 100 acquires the first space map of the space to be cleaned from the server. Accordingly, the step of acquiring, by a cleaning robot 100, a map of the space to be cleaned as a first space map may be: sending, by the cleaning robot 100, an acquisition request to the server, where the acquisition request carries an area identifier of the space to be cleaned; receiving, by the server, the acquisition request, acquiring, by the server, the first space map of the space to be cleaned according to the area identifier, and sending, by the server, the first space map of the space to be cleaned to the cleaning robot 100; and receiving, by the cleaning robot 100, the first space map of the space to be cleaned.

For a sixth implementation manner, the user directly inputs the first space map of the space to be cleaned to the cleaning robot 100 through the terminal. Correspondingly, the step of acquiring, by a cleaning robot 100, a map of the space to be cleaned as a first space map may be: receiving, by the cleaning robot 100, the first space map of the space to be cleaned input by the terminal.

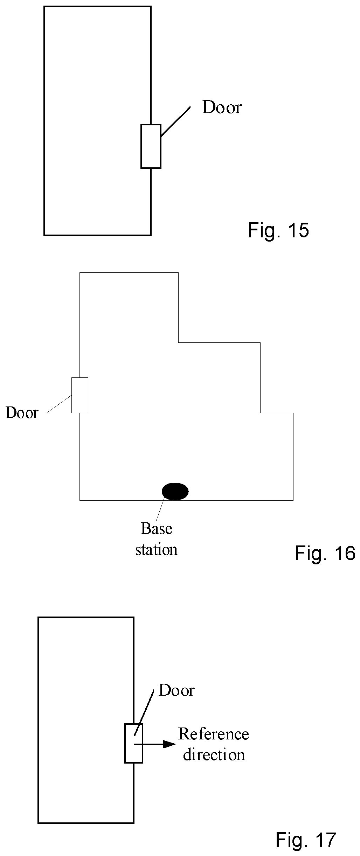

In the embodiments of this disclosure, the manner in which the cleaning robot 100 acquires the first space map is not specifically limited. In addition, the first space map acquired by the cleaning robot 100 may include an area size of the space to be cleaned, a location of the entrance/exit, a location of the base station, or a location of the door. When the space to be cleaned includes multiple room units, the first space map may also include an area size of each room unit and a position of the door between two adjacent room units. In an embodiment of this disclosure, the space to be cleaned is a room unit, and the first space map acquired by the cleaning robot 100 may be the first space map shown in Fig. 15, and there is only one room unit in the first space map. The first space map acquired by the cleaning robot 100 may also be the first space map shown in Fig. 16, in which there is only one room unit and there is a base station in the room unit.

S1402: determining, by the cleaning robot 100, the first space map, in a determination that the first space map is regular, taking the space to be cleaned or the subspace to be cleaned as a cleaning area, and performing S1403 for cleaning.

The first space map being regular is defined as: there is at least one path from any point on the first space map to the reference object and there is no movement path that tends to the opposite direction to the reference direction. The reference object is the base station or the entrance/exit, the reference direction is a direction in which any point in the space to be cleaned or the subspace to be cleaned points to the reference object, and a connection line area between the point and the reference object does not pass through the obstacle. The step of determining, by the cleaning robot 100, whether the first space map is regular may be: for any point in the first space map, determining, by the cleaning robot 100, at least one path from the point to the reference object; for each path in the at least one path, determining, by the cleaning robot 100, whether there is a movement path opposite to the reference direction; in a determination that there is no movement path opposite to the reference direction, determining, by the cleaning robot 100, the first space map is regular; and in a determination that there is a movement path opposite to the reference direction, determining, by the cleaning robot 100, the first space map is irregular. In a determination that the first space map is regular, the cleaning robot 100 performs S1403.

For example, when the first space map is the map shown in Fig. 15, there is no base station in the map, so the door can be taken as a reference for the space to be cleaned. There is at least one path from any point on the map to the door and there is no movement path that tends to the opposite direction to the reference direction, where the reference direction is the direction in which any point on the map points to the door, and the connection line area between the point and the door does not pass through the obstacle. Therefore, the cleaning robot 100 determines that the map is regular. When the first space map is the map shown in Fig. 16, there are a base station and a door in the map. For example, taking the base station as a reference, there is at least one path from any point on the map to the door and there is no movement path that tends to the opposite direction to the reference direction, where the reference direction is the direction in which any point on the map points to the base station, and the connection line area between the point and the base station does not pass through the obstacle. Therefore, the cleaning robot 100 determines that the map is regular.

Step S1403: setting, by the cleaning robot 100, a cleaning direction.

In a determination that the first space map is regular, the cleaning robot 100 directly takes the space to be cleaned or the subspace to be cleaned as the cleaning area. There is only one cleaning area in the first space map, and a cleaning direction of the one cleaning area is the reference direction. The reference direction is a direction in which any point in the space to be cleaned or the subspace to be cleaned points to the reference object, and a connection line area between the point and the reference object does not pass through the obstacle.

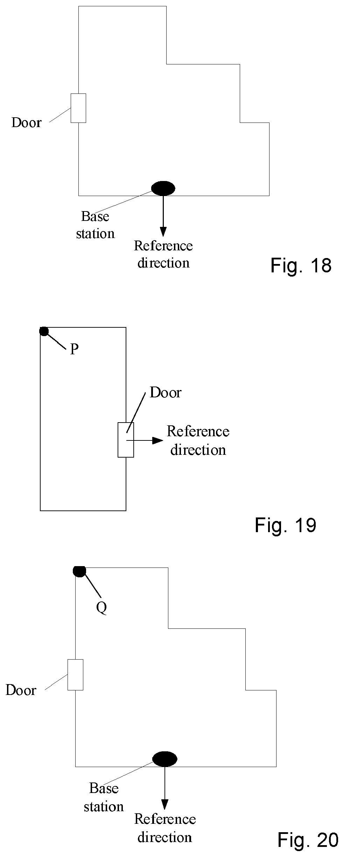

For example, when the first space map is the first space map shown in Fig. 15 or Fig. 16, the maps shown in Fig. 15 and Fig. 16 are both regular maps. Therefore, the cleaning robot 100 directly takes the space to be cleaned or the subspace to be cleaned as a cleaning area, and sets a cleaning direction for the cleaning area, and the cleaning direction is a reference direction. For the map shown in Fig. 15, the door in the map is the reference object, and the reference direction may be a direction horizontally pointing to the door, that is, the cleaning direction, see Fig. 17. For the map shown in Fig. 16, when the base station in the map is the reference object, the reference direction may be a direction vertically pointing to the base station, that is, the cleaning direction, see Fig. 18.

S1404: based on the cleaning direction, setting, by the cleaning robot 100, a cleaning starting point for the at least one cleaning area.

This step can be implemented by any of the following implementation manners.

In a first implementation manner, the step can be implemented by the cleaning robot 100 through the following steps (A1) to (A2), including:
(A1) based on the area map, in the at least one cleaning area, searching, by the cleaning robot 100, for a first uncleaned point closest to a current first position of the cleaning robot.

The cleaning robot 100 determines the current first position of the cleaning robot 100 in the area map, searches for a closest point to the current first position of the cleaning robot 100 in the area map according to the first position, and takes a position represented by the closest point of the current first position of the cleaning robot 100 in the cleaning area as the first uncleaned point.

When the cleaning robot 100 performs a search, the cleaning robot 100 can start the search from the current first position of the cleaning robot 100, so that the first uncleaned point closest to the current position of the cleaning robot 100 can be searched as soon as possible, thereby improving the search efficiency. Also, when the cleaning robot 100 searches for multiple uncleaned points that are closest to the current first position of the cleaning robot 100, the cleaning robot 100 may select the first uncleaned point from the multiple uncleaned points. The cleaning robot 100 may randomly select an uncleaned point from the multiple uncleaned points, and take the selected uncleaned point as the first uncleaned point. The cleaning robot 100 may also select an uncleaned point in a opposite direction to the cleaning direction from the multiple uncleaned points based on the cleaning direction, and take the selected uncleaned point as the first uncleaned point.

It should be noted that the cleaning robot 100 selects an uncleaned point in a opposite direction to the cleaning direction from multiple uncleaned points as the first cleaning point, so as to ensure that the selected uncleaned point is a point far from the entrance edge, thereby further improving the subsequent cleaning efficiency.

(A2) in the at least one cleaning area, within a preset length range perpendicular to the cleaning direction, searching, by the cleaning robot 100, for a second uncleaned point in the at least one cleaning area in an opposite direction to the cleaning direction, where the second uncleaned point is a farthest uncleaned point from the first uncleaned point in the cleaning direction.

The preset length may be smaller than a length of the edge of the cleaning area, thereby reducing a range of searching for the second uncleaned point, so as to reduce the searching time. The preset length may be set and changed as needed. In the embodiments of this disclosure, the preset length is not specifically limited; for example, the preset length may be 1 body width, 2 body widths or 3 body widths of the cleaning robot 100.

In this step, the cleaning robot 100 may also directly search for the second uncleaned point in the space to be cleaned in the opposite direction to the cleaning direction in the cleaning area, so as to ensure that the searched second uncleaned point is farthest uncleaned point from the first uncleaned point in the cleaning direction, thereby further improving the subsequent cleaning efficiency.

(A3) based on the second uncleaned point, determining, by the cleaning robot 100, the cleaning starting point for the at least one cleaning area.

In a possible implementation manner, the cleaning robot 100 directly takes the second uncleaned point as the cleaning starting point of the at least one cleaning area. In another possible implementation manner, the cleaning robot 100 determines whether there is an uncleaned point on the edge where the second uncleaned point is located, and in a determination that there is an uncleaned point on an edge where the second uncleaned point is located, moving, by the cleaning robot 100, to an end point of the edge, and taking the end point of the edge as the cleaning starting point of the at least one cleaning area.

In a second implementation manner, the step can be implemented by the cleaning robot 100 through the following steps (B1) to (B2), including:
(B1) based on the area map, in the at least one cleaning area, starting from the current first position of the cleaning robot 100, scanning in the opposite direction to the cleaning direction in a form of scan lines to search for a first uncleaned point in the at least one cleaning area, where the first uncleaned point is a farthest uncleaned point from the first position in the cleaning direction.

The cleaning robot 100 starts from the current first position of the cleaning robot 100 and scans in the opposite direction to the cleaning direction in the form of horizontal scan lines in the area map. When a third uncleaned point is scanned, a position of the third uncleaned point is recorded, and then continue to scan. When a fourth uncleaned point is scanned, and in a determination that a first distance between the third uncleaned point and the current first position of the cleaning robot 100 is less than a second distance between the fourth uncleaned point and the current first position of the cleaning robot 100, the position of the third uncleaned point is deleted, and a position of the fourth uncleaned point is recorded. In a determination that the first distance is greater than the second distance, the position of the fourth uncleaned point is discarded, and then continue scanning until the area map is fully scanned. The cleaning robot 100 maps the finally recorded position to the cleaning area to obtain the first uncleaned point.

For example, when the first space map is the map shown in Fig. 15 and the cleaning direction is the cleaning direction shown in Fig. 17, the first uncleaned point finally determined by the cleaning robot 100 is P, see Fig. 19. For another example, when the first space map is the map shown in Fig. 16, and the cleaning direction is the cleaning direction shown in Fig. 18, the first uncleaned point finally determined by the cleaning robot 100 is Q, see Fig. 20.

(B2) based on the first uncleaned point, determining, by the cleaning robot 100, the cleaning starting point for the at least one cleaning area.

In a possible implementation manner, the cleaning robot 100 directly takes the first uncleaned point as the cleaning starting point of the at least one cleaning area. In another possible implementation manner, the cleaning robot 100 determines whether there is an uncleaned point on the edge where the first uncleaned point is located, and in a determination that there is an uncleaned point on an edge where the first uncleaned point is located, moving to an end point of the edge, and taking the end point of the edge as the cleaning starting point of the at least one cleaning area. In a determination that there is no uncleaned point on an edge where the first uncleaned point is located, directly taking the first uncleaned point as the cleaning starting point of the cleaning area.

It should be noted that there may be multiple endpoints on the edge where the first uncleaned point is located; for example, there are two endpoints, namely a left endpoint and a right endpoint. The cleaning robot 100 can move to either end point of the edge, for example, move to the left end point of the edge or move to the right end point of the edge.

In a third implementation manner, the step can be implemented by the cleaning robot 100 through the following steps (C1) to (C2), including:
(C1) based on the area map, in the at least one cleaning area, taking, by the cleaning robot 100, an entrance edge of the at least one cleaning area as a starting position of the cleaning robot 100, and searching for the first uncleaned point in the at least one cleaning area in the opposite direction to the cleaning direction, where the first uncleaned point is a farthest uncleaned point from the starting position of the at least one cleaning area in the cleaning direction.

The cleaning robot 100 can take any point on the edge of the entrance of the cleaning area as the starting position of the cleaning robot 100. A center point of the edge of the entrance of the cleaning area is taken as the starting position of the cleaning robot 100, or an end point of the edge of the entrance of the cleaning area is taken as the starting position of the cleaning robot 100. For example, a left end point of the edge of the entrance of the cleaning area is taken as the starting position of the cleaning robot 100 or a right end point of the edge of the entrance of the cleaning area is taken as the starting position of the cleaning robot 100.

(C2) based on the first uncleaned point, determining, by the cleaning robot 100, the cleaning starting point for the at least one cleaning area.

This step is the same as step (B2), and will not be repeated here.

In a fourth implementation manner, the step can be implemented by the cleaning robot 100 through the following steps (D1) to (D2), including:
(D1) based on the area map, in the at least one cleaning area, searching, by the cleaning robot 100, for a first uncleaned point closest to a current first position of the cleaning robot.

This step is the same as step (A1), and will not be repeated here.

(D2) based on the first uncleaned point, determining, by the cleaning robot 100, the cleaning starting point for the at least one cleaning area.

This step is the same as step (B2), and will not be repeated here.

It should be noted that the cleaning robot 100 can determine the cleaning starting point of the cleaning area through any one of the above four implementation manners. The cleaning robot 100 can also select any one of the above four implementation manners to determine the cleaning starting point of the cleaning area according to the current first position of the cleaning robot 100. For example, when the current first position of the cleaning robot 100 is in the cleaning area, the cleaning robot 100 can determine the cleaning starting point of the cleaning area through the above first, second, and fourth implementation manners. When the current first position of the cleaning robot 100 is not in the cleaning area, the cleaning robot 100 can determine the cleaning starting point of the cleaning area through the above third implementation manner.

S1405: starting from the cleaning starting point, performing, by the cleaning robot 100, a cleaning operation on the cleaning area of the space to be cleaned according to the cleaning direction.

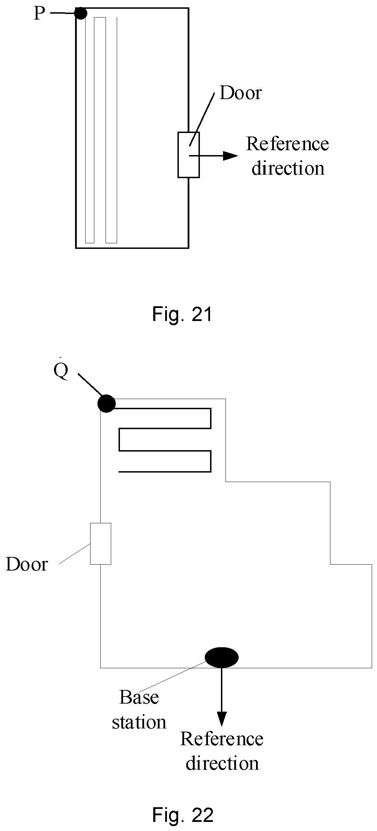

In this step, the cleaning robot 100 takes a cleaning area as a unit, and moves along a sidewinding trajectory from the cleaning starting point. The sidewinding trajectory gradually advances in the cleaning direction and turns back and forth in a direction perpendicular to the cleaning direction. For example, when the cleaning robot 100 takes a cleaning area as a unit and the determined cleaning starting point is a cleaning starting point shown in Fig. 19, the cleaning robot 100 starts from point P and gradually advances in a horizontal direction along a sidewinding trajectory, see Fig. 21. When the cleaning robot 100 takes a cleaning area as a unit and the determined cleaning starting point is a cleaning starting point shown in Fig. 20, the cleaning robot 100 starts from point Q and gradually advances in a vertical direction along a sidewinding trajectory, see Fig. 22.

It should be noted that when the cleaning robot 100 encounters an obstacle during the cleaning operation, the cleaning robot 100 first moves around the obstacle, and at the same time the cleaning component cleans the ground, so as to clean the ground around the edge of the obstacle. Since the first space map acquired in step S1401 by the cleaning robot 100 often does not include obstacle information, the cleaning robot 100 can detect obstacles through the sensors provided on the cleaning robot 100 during the cleaning process. In particular, the obstacle information can only be fully detected after the obstacle is surrounded. The obstacle information mainly includes a crossing distance and a coverage area of the obstacle. Since there is only one cleaning area in this embodiment of this disclosure, the cleaning robot 100 can still perform the cleaning operation in the original cleaning direction after encountering an obstacle.

In all embodiments of this disclosure, when a battery power in the cleaning robot 100 is insufficient and reaches a power threshold, the cleaning robot 100 records the current cleaning position, moves to the base station for charging operation, and returns to the cleaning position after the charging is completed to continue the cleaning operation. When contamination of the cleaning component of the cleaning robot 100 reaches a dirt threshold, or a cleaning time of the cleaning component reaches a time threshold, the cleaning robot 100 records the current cleaning position and moves to the base station to perform the cleaning operation of the cleaning component. After the cleaning operation is completed, the cleaning robot 100 returns to the cleaning position and continues to perform the cleaning operation. In addition, the cleaning robot 100 can simultaneously perform the charging operation and the cleaning operation at the base station.

Another point that needs to be explained is that a cleaning component is provided on the cleaning robot 100, and the cleaning component is configured for the cleaning robot 100 to perform a cleaning operation on the ground. The cleaning component is a mopping module or a sweeping module. When the cleaning component is a mopping module, the mopping module is configured for mopping and cleaning the ground, and the mopping module may be a mop. When the cleaning component is a sweeping module, the sweeping module is configured for sweeping and cleaning the ground, and the sweeping module may be a side brush.

According to the cleaning control method provided by the embodiments of this disclosure, the cleaning robot 100 acquires a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned area that has been cleaned when it moves to the area where the base station is located for charging or cleaning a cleaning component, thereby enhancing the cleaning effect and improving the cleaning efficiency.

### Embodiment 2

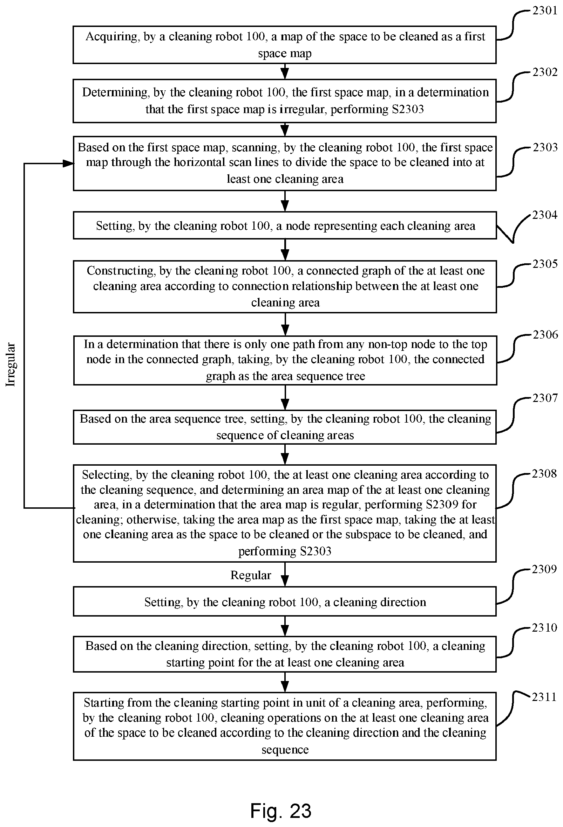

An embodiment of this disclosure provides a cleaning control method. Referring to Fig. 23, in an embodiment of this disclosure, a situation in which the space to be cleaned is a room unit, the room unit is an irregular room unit, the cleaning robot 100 scans the first space map through horizontal scan lines to divide the space to be cleaned into at least one cleaning area, and directly takes an acyclic connected graph as an area sequence tree, sets a cleaning sequence according to the area sequence tree, and no obstacles are encountered during the cleaning operation of the room unit is described as an example, and the method includes:
S2301: acquiring, by a cleaning robot 100, a map of the space to be cleaned as a first space map.

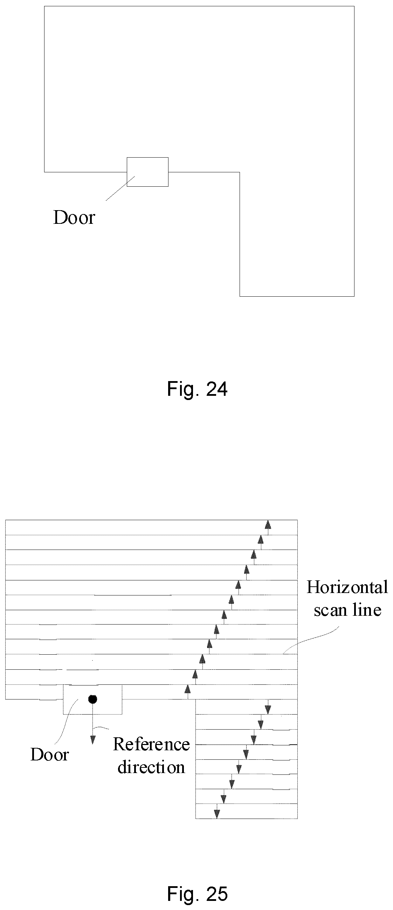

Step S2301 is the same as step S1401, and will not be repeated here. For example, the first space map acquired by the cleaning robot 100 is the map shown in Fig. 24.

S2302: determining, by the cleaning robot 100, the first space map, in a determination that the first space map is irregular, performing S2303.

In this step, the process of the cleaning robot 100 determining the first space map is the same as step S1402, and will not be repeated here. In a determination that the first space map is irregular, the cleaning robot 100 performs S2303.

For example, when the first space map acquired by the cleaning robot 100 is the first space map shown in Fig. 24, there is only a door in the map, and the cleaning robot 100 takes the door as a reference object. There is at least one path for some points in the map to the door, but there is a movement path that tends in the opposite direction to a reference direction, where the reference direction is a direction in which any point on the map points to the door, and the connection line area between the point and the door does not pass through the obstacle. Therefore, the map is irregular. Then the cleaning robot 100 executes step S2303.

S2303: based on the first space map, scanning, by the cleaning robot 100, the first space map through the horizontal scan lines to divide the space to be cleaned into at least one cleaning area.

Before this step, the cleaning robot 100 takes the reference object as an origin to set a right-angle reference coordinate system, including a X-axis and a Y-axis. The reference direction may be perpendicular to the X-axis and the reference direction is a positive direction of the Y-axis; or the reference direction may be perpendicular to the Y-axis and the reference direction is a positive direction of the X-axis. In the embodiments of this disclosure, this is not specifically limited. For example, the cleaning robot 100 takes the reference direction as the positive direction of the Y-axis.

This step can be achieved through the following steps (1) to (4), including:
(1) at a position of the reference object, scanning, by the cleaning robot 100, the first space map by horizontal scan lines.

The horizontal scan lines are perpendicular to the reference direction, and the reference direction is the positive direction of the Y-axis. When the cleaning robot 100 scans the first space map through the horizontal scan lines, the first space map is scanned along the positive direction of the Y-axis or the negative direction of the Y-axis with the position of the reference object as a starting point. When the cleaning robot 100 scans the first space map through the horizontal scan lines, it can scan the first space map every time through the horizontal scan lines to determine whether there is an unscanned area in the first space map along the positive direction of the Y-axis or the negative direction of the Y-axis. When the cleaning robot 100 determines that there is an unscanned area along the positive direction of the Y-axis in the first space map, the cleaning robot 100 performs step (2); when the cleaning robot 100 determines that there is an unscanned area along the negative direction of the Y-axis in the first space map, the cleaning robot 100 performs step (3). When the cleaning robot 100 scans the first space map through the horizontal scan lines, it may scan the first space map along the positive direction of the Y-axis first, or scan the first space map along the negative direction of the Y-axis first, or scan the first space map simultaneously along the positive direction of the Y-axis and the negative direction of the Y-axis, which is not specifically limited in the embodiments of this disclosure.

The horizontal scan lines are scan lines in the horizontal direction. The horizontal scan lines may start from one side edge of the first space map and stop at the other side edge. For example, the horizontal scan lines start from the left edge of the first space map and stop at the right edge; or start from the right edge of the first space map and stop at the left edge. In the embodiments of this disclosure, this is not specifically limited. The thickness of the horizontal scan line can be set and changed as required, and in the embodiments of this disclosure, this is not specifically limited. In addition, when the cleaning robot 100 scans the first space map through the horizontal scan lines, the cleaning robot 100 does not need to move, and the cleaning robot 100 can scan the first space map through a scanner inside the cleaning robot 100.

For example, for the first space map shown in Fig. 24, the cleaning robot 100 may take a direction in which any point on the map points to the door as a reference direction, for example, a direction perpendicular to the door or 45° from the direction perpendicular to the door, which is not specifically limited in the embodiments of this disclosure.

(2) in a determination that a scanned area in the first space map includes an adjacent and unscanned area in the positive direction of the Y-axis, advancing, by the cleaning robot 100, the horizontal scan lines along the positive direction of the Y-axis to scan the adjacent and unscanned area.

In a possible implementation manner, every time the cleaning robot 100 scans the first space map along the positive direction of the Y-axis through the horizontal scan lines, the cleaning robot 100 determines whether there is an unscanned area along the positive direction of the Y-axis. When there is an unscanned area, the cleaning robot 100 advances in the positive direction of the Y-axis for a first interval, scans the first space map at the first interval from the last horizontal scan lines, and the cleaning robot 100 determines whether there is still an unscanned area in the positive direction along the Y-axis. In a determination than there is still an unscanned area, the cleaning robot 100 continues to advance along the positive direction of the Y-axis for the first interval until there is no unscanned area along the positive direction of the Y-axis, and the cleaning robot 100 performs step (4).

(3) in a determination that a scanned area in the first space map includes an adjacent and unscanned area in the negative direction of the Y-axis, advancing, by the cleaning robot 100, the horizontal scan lines along the negative direction of the Y-axis to scan the adjacent and unscanned area.

This step is similar to step (2), every time the cleaning robot 100 scans the first space map along the negative direction of the Y-axis through the horizontal scan lines, the cleaning robot 100 determines whether there is an unscanned area along the negative direction of the Y-axis. In a determination that there is an unscanned area, the cleaning robot 100 advances in the negative direction of the Y-axis for a first interval, scans the first space map at the first interval from the last horizontal scan lines, and the cleaning robot 100 determines whether there is still an unscanned area in the negative direction along the Y-axis. In a determination that there is still an unscanned area, the cleaning robot 100 continues to advance along the negative direction of the Y-axis for the first interval until there is no unscanned area along the negative direction of the Y-axis, and the cleaning robot 100 performs step (4).

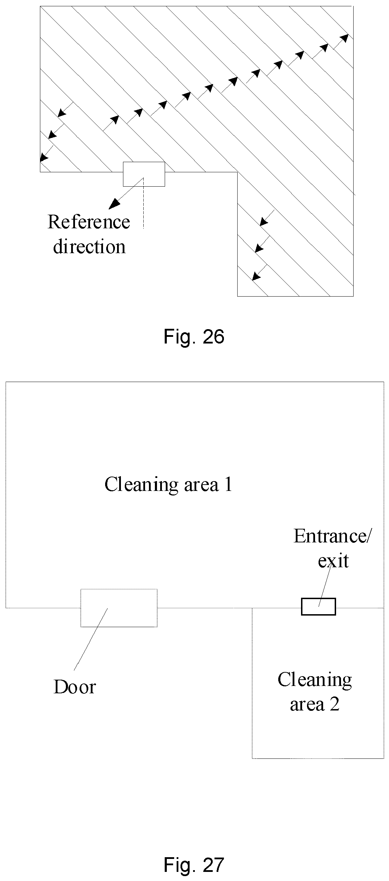

For example, referring to Fig. 25 and Fig. 26, Fig. 25 is a schematic diagram of scanning the first space map through horizontal scan lines by taking a direction perpendicular to the door direction as the reference direction; and Fig. 26 is a schematic diagram of scanning the first space map through scan lines by taking a direction inclined at 45° perpendicular to the door direction as the reference direction.

(4) taking, by the cleaning robot 100, a position where lengths of the horizontal scan lines cut by the first space map are segmented and an edge of the first space map as a boundary, and merging continuous areas scanned in a same direction to dividing the first space map into the at least one cleaning area.

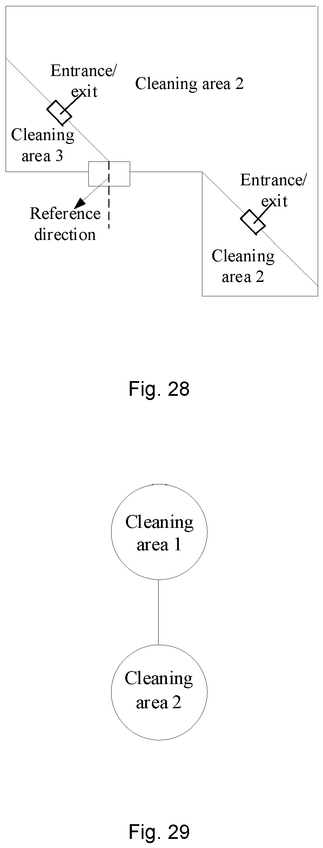

In this step, the cleaning robot 100 takes a position where lengths of the horizontal scan lines cut by the first space map are segmented and an edge of the first space map as a boundary, and merges the areas scanned in the positive direction of the Y-axis into one cleaning area, and merges the areas scanned in the negative direction of the Y-axis into one cleaning area. Moreover, when the horizontal scan lines are segmented, the cleaning robot 100 starts from the segmented scan lines and merges the areas scanned in the same direction into one cleaning area until the horizontal scan lines are segmented again or reach the edge of the first space map. The cleaning robot 100 repeats the above process until it traverses all the room units in the space to be cleaned. Referring to Fig. 27, Fig. 27 shows multiple cleaning areas obtained by merging the areas scanned in the same direction as shown in Fig. 25 according to the above steps. Referring to Fig. 28, Fig. 28 shows multiple cleaning areas obtained by merging the areas scanned in the same direction as shown in Fig. 26.

In a possible implementation manner, after the cleaning robot 100 divides the space to be cleaned into at least one cleaning area through the above steps, step S1404 may be directly performed.

In another possible implementation manner, after the cleaning robot 100 performs step S1403, it can confirm an area of each divided cleaning area. For each cleaning area, in a determination that the area of the cleaning area is less than a preset value, after merging the cleaning area with other adjacent cleaning areas whose area is larger than the preset value, the cleaning robot 100 performs the step S2304. Correspondingly, the step of merging, by the cleaning robot 100, the cleaning area with other adjacent cleaning areas whose area is larger than the preset value may be: merging, by the cleaning robot 100, the cleaning area into a cleaning area scanned by scan lines advanced in a same direction. In another possible implementation manner, after the cleaning robot 100 performs step S2303, it can determine a ratio of a length to a width of each cleaning area. For each cleaning area, when the ratio of the length to the width of the cleaning area is greater than a preset ratio, after merging the cleaning area with other adjacent cleaning areas whose ratio is less than the preset ratio, the cleaning robot 100 performs the step S2304. The length of the cleaning area is a length of an edge parallel to the reference direction, and the width of the cleaning area is a length of an edge perpendicular to the reference direction.

Both the preset value and the preset ratio can be set and changed as needed, which is not specifically limited in the embodiments of this disclosure.

S2304: setting, by the cleaning robot 100, a node representing each cleaning area.

The cleaning robot 100 takes a node to represent each cleaning area in the multiple cleaning areas, one node represents one cleaning area, and one node is connected to at least one node. Nodes include a top node, a parent node and a child node. For two connected nodes, one node close to the top node is the parent node, the other node far from the top node is the child node. A cleaning area represented by the parent node is adjacent to a cleaning area represented by the child node, or, one of the parent node and the child node represents an isolated cleaning area, the other one of the parent node and the child node represents a cleaning area closest to the isolated cleaning area. A cleaning area represented by the top node is a cleaning area where the reference object is located.

S2305: constructing, by the cleaning robot 100, a connected graph of the at least one cleaning area according to connection relationship between the at least one cleaning area.

According to connection relationship between the cleaning areas, in a determination that cleaning areas represented by any two nodes are adjacent, or one of the two nodes represents the isolated cleaning area, the other one of the two nodes represents the cleaning area closest to the isolated cleaning area, connecting, by the cleaning robot 100, the two nodes to construct a connected graph of the cleaning areas.

The isolated cleaning area indicates a cleaning area that is not adjacent to other cleaning areas. The cleaning areas represented by two connected nodes in the connected graph are adjacent, or one of the two nodes represents the isolated cleaning area, the other one of the two nodes represents the cleaning area closest to the isolated cleaning area. Correspondingly, this step may be: selecting, by the cleaning robot 100, multiple sets of nodes from multiple nodes, each set of nodes includes a first node and a second node, and a cleaning area represented by the first node and a cleaning area represented by the second node are adjacent, or a cleaning area represented by the first node is an isolated cleaning area, and a cleaning area represented by the second node is the cleaning area closest to the isolated cleaning area. For each set of nodes, the cleaning robot 100 connects the first node and the second node, obtains connection relationship of the set of nodes, and generates a connected graph according to the connection relationship of each set of nodes.

The step of the cleaning robot 100 connecting the first node and the second node may be: in a determination that there is a node representing the cleaning area where the reference object is located in the first node and the second node, taking, by the cleaning robot 100, the node representing the cleaning area where the reference object is located as the top node, and another node as a child node of the top node. For example, when the first node is a node representing the cleaning area where the reference object is located, the cleaning robot 100 takes the first node as the top node and the second node as the child node of the first node.

In a determination that there is no node representing the cleaning area where the reference object is located in the first node and the second node, but there is a node representing a cleaning area connected to the cleaning area where the reference object is located, the cleaning robot 100 takes a node representing the cleaning area adjacent to the cleaning area where the reference object is located as a child node of the top node, and a node representing a cleaning area not adjacent to the cleaning area where the reference object is located as the child node of the node. For example, in a determination that a cleaning area represented by the first node is adjacent to the cleaning area where the reference object is located, the cleaning robot 100 takes the first node as a child node of the top node and the second node as a child node of the first node.

In a determination that there is no node representing the cleaning area where the reference object is located in the first node and the second node, and there is no node representing a cleaning area adjacent to the cleaning area where the reference object is located, the cleaning robot 100 determines a first distance between the cleaning area represented by the first node and the cleaning area where the reference object is located, and determines a second distance between a cleaning area represented by the second node and the cleaning area where the reference object is located. In a determination that the first distance is greater than the second distance, the first node is taken as a child node of the second node; and in a determination that the first distance is less than the second distance, the first node is taken as a parent node of the second node.

S2306: in a determination that there is only one path from any non-top node to the top node in the connected graph, taking, by the cleaning robot 100, the connected graph as the area sequence tree.

In a determination that there is only one path from any non-top node in the connected graph to the top node, the connected graph is an acyclic connected graph, and the cleaning robot 100 directly takes the acyclic connected graph as an area sequence tree.

For example, for the cleaning areas 1 and 2 shown in Fig. 27, the connected graph obtained by the cleaning robot 100 is shown in Fig. 29. In this figure, a node representing the cleaning area 1 is a top node, and the node representing the cleaning area 2 is a child node of the top node. In Fig. 29, there is only one path from the child node to the top node. Therefore, the cleaning robot 100 directly takes the connected graph as the area sequence tree.

It should be noted that the cleaning robot 100 may take a label of the cleaning area as a label of the node. For example, node 1 represents cleaning area 1, and node 2 represents cleaning area 2. In the embodiments of this disclosure, this is not specifically limited.

S2307: based on the area sequence tree, setting, by the cleaning robot 100, the cleaning sequence of cleaning areas.

This step can be achieved through the following steps (1) to (4), including:
(1) determining, by the cleaning area, a first target cleaning area based on the area sequence tree.

The first target cleaning area is a cleaning area to be cleaned first in the space to be cleaned.

In a determination that the current first position of the cleaning robot 100 is in the space to be cleaned, this step can be implemented through the following steps (1-1) to (1-4), including:
(1-1) in the first space map, determining, by the cleaning robot 100, a first cleaning area closest to a current first position of the cleaning robot 100.

In this step, the cleaning robot 100 first determines the current first position of the cleaning robot 100. Where, the cleaning robot 100 may periodically position itself, so as to acquire the current first position of the cleaning robot 100. The first position may be in the space to be cleaned or outside the space to be cleaned.

Determining, by the cleaning robot 100, a first cleaning area closest to the first position according to the first location on the first space map. Correspondingly, this step may be: determining, by the cleaning robot 100, the first cleaning area through a distance between the first position and each cleaning area. The distance between the current first position of the cleaning robot 100 and each cleaning area may be a distance between the first position and a geometric center of each cleaning area. Determining, by the cleaning robot 100, a distance from the first position to a geometric center of each cleaning area, and selecting a shortest distance from multiple distances, and taking a cleaning area corresponding to the shortest distance as the first cleaning area.

(1-2) according to the area sequence tree, taking, by the cleaning robot 100, the first cleaning area as a starting node to determine whether there are leaf nodes in a target subtree.

The target subtree is a local area sequence tree with a starting node as the top node in the area sequence tree. Leaf nodes are nodes that have parent nodes and no child nodes in the area sequence tree. Determining, by the cleaning robot 100, whether there are leaf nodes in the target subtree, in a determination that there are leaf nodes, the cleaning robot 100 performs step (1-3); in a determination that there are no leaf nodes, the cleaning robot 100 performs step (1-4).

(1-3) in a determination that there are the leaf nodes in the target subtree, selecting, by the cleaning robot 100, a leaf node from the leaf nodes of the target subtree, and taking a cleaning area represented by the selected leaf node as the first target cleaning area.

The step of selecting, by the cleaning robot 100, a leaf node from the leaf nodes of the target subtree may be: in a determination that there are multiple leaf nodes in the target subtree, selecting, by the cleaning robot 100, a leaf node whose cleaning area is the closest to the first position from the multiple leaf nodes. The leaf node selected by the cleaning robot 100 through this method can minimize the moving distance of the cleaning robot 100 and improve the cleaning efficiency. The step of selecting, by the cleaning robot 100, a leaf node whose cleaning area is the closest to the first position from the multiple leaf nodes may be: determining, by the cleaning robot 100, a distance between a geometric center of the cleaning area represented by each leaf node and the first position, and selecting a leaf node corresponding to a cleaning area with a smallest distance from multiple distances.

(1-4) in a determination that there is no leaf node in the target subtree, taking, by the cleaning robot 100, a cleaning area represented by the starting node as the first target cleaning area.

In a determination that there is no leaf node in the target subtree, directly taking, by the cleaning robot 100, a first cleaning area represented by the starting node as the first target cleaning area.

In a determination that the current first position of the cleaning robot 100 is not in the space to be cleaned, the cleaning robot 100 directly selects any leaf node from the leaf nodes of the area sequence tree according to the area sequence tree, and takes the cleaning area represented by the leaf node as a first target cleaning area. The cleaning robot 100 can also select a leaf node representing a cleaning area with a farthest distance from the cleaning area where the reference object is located, and takes a cleaning area represented by the leaf node as the first target cleaning area. The cleaning robot 100 gradually performs cleaning operations from far to near, so as to avoid passing through the cleaned area and polluting the cleaned area, thereby improving the cleaning efficiency.

(2) based on the area sequence tree, querying, by the cleaning robot 100, a parent node of a first target node representing the first target cleaning area, and querying whether the parent node of the first target node includes a child node representing a non-first target cleaning area, if not, taking a cleaning area represented by the parent node of the first target node as a second target cleaning area, and if yes, taking a cleaning area represented by a bottom node in the child node as the second target cleaning area.

The second target cleaning area is a next cleaning area to be cleaned after the first target cleaning area.

According to the area sequence tree, querying, by the cleaning robot 100, a parent node of a first target node representing the first target cleaning area from the area sequence tree. In a determination that the parent node of the first target node further includes a child node other than the first target node, taking the child node as the parent node to determine whether the child node includes a child node, and repeating the operations until it is determined that the child node is a bottom node, and taking a cleaning area represented by the bottom node as a second target cleaning area. In a determination that the parent node of the first target node includes no child node other than the first target node, taking, by the cleaning robot 100, a cleaning area represented by the parent node as the second target cleaning area.

(3) based on the area sequence tree, querying, by the cleaning robot 100, a parent node of a second target node representing the second target cleaning area, and querying whether the parent node of the second target node includes a child node representing a non-first and non-second target cleaning area, if not, taking a cleaning area represented by the parent node of the second target node as a third target cleaning area, and if yes, taking a cleaning area represented by a bottom node in the child node as the third target cleaning area.

The third target cleaning area is a next cleaning area to be cleaned after the second target cleaning area. In this step, the step of the cleaning robot 100 determining the third target cleaning area is similar to the above step (2), and will not be repeated here.

(4) querying, by the cleaning area 100, the third target cleaning area in the area sequence tree until a cleaning area represented by the top node is taken as a last target cleaning area.

The cleaning robot 100 determines the third target cleaning area and the fourth target cleaning area according to the above method until the cleaning area indicated by the top node is taken as the final target cleaning area. Where, a cleaning area represented by the top node is a cleaning area that is cleaned last in the cleaning sequence.

For example, for the area sequence tree obtained in Fig. 29, the cleaning robot 100 determines that a node representing cleaning area 1 is a top node, and a node representing cleaning area 2 is a child node of the top node. Therefore, the cleaning robot 100 determines that the first target cleaning area is the cleaning area 2, and the cleaning area 1 is a cleaning area that is cleaned after the cleaning area 2.

S2308: selecting, by the cleaning robot 100, the at least one cleaning area according to the cleaning sequence, and determining an area map of the at least one cleaning area, in a determination that the area map is regular, performing S2309 for cleaning; otherwise, taking the area map as the first space map, taking the at least one cleaning area as the space to be cleaned or the subspace to be cleaned, and performing S2303.

The area map being regular is defined as: there is at least one path from any point on the area map to the entrance/exit and there is no movement path that tends to the opposite direction to the entrance/exit direction. There is an entrance/exit between two cleaning areas. For any one of the two cleaning areas, when a connection line area between any point in the cleaning area and the entrance/exit does not pass through an obstacle, a direction that the point points to the entrance/exit is defined as the entrance/exit direction of the cleaning area, and entrance/exit directions of two adjacent cleaning areas are opposite to each other. The step of the cleaning robot 100 determining whether the area map is regular is similar to the step of the cleaning robot 100 determining whether the first space map is regular in step S1402, and will not be repeated here.

In this step, in a determination that the area map is irregular, the cleaning robot 100 takes the area map as the first space map, and the cleaning area as the space to be cleaned or the subspace to be cleaned, and performs step S2303; and in a determination that the area map is regular, the cleaning robot 100 performs step S2309.

For example, when the cleaning areas divided by the cleaning robot 100 is the cleaning area 1 and the cleaning area 2 shown in Fig. 27, there is an entrance/exit between the cleaning area 1 and the cleaning area 2. For the cleaning area 1, there is at least one path from any point in the cleaning area to the entrance/exit and there is no movement path tends to the opposite direction to the entrance/exit direction of the cleaning area. Therefore, the cleaning area 1 is regular. For the cleaning area 2, there is at least one path from any point in the cleaning area to the entrance/exit and there is no movement path tends to the opposite direction to the entrance/exit direction of the cleaning area. Therefore, the cleaning area 2 is regular. The cleaning robot 100 performs step S2309.

S2309: setting, by the cleaning robot 100, a cleaning direction.

For the top node in the area sequence tree, the cleaning robot 100 configures a cleaning direction of a cleaning area represented by the top node to be the same as the reference direction, and the reference direction is the direction pointing to the reference object.

For any child node of a non-top node in the area sequence tree, the cleaning robot 100 configures a cleaning direction of a cleaning area represented by the child node points to a cleaning area represented by a parent node of the child node, and the cleaning direction of the cleaning area represented by the child node is parallel or perpendicular to the reference direction.

It should be noted that, when the cleaning area is the cleaning area merged by the cleaning robot 100 in step S2303, the step of setting, by the cleaning robot 100, the cleaning direction to the merged cleaning area may be implemented in any of the following manners.

In a first implementation manner, the cleaning robot 100 merges a cleaning area with an area smaller than a preset value and other adjacent cleaning areas with an area larger than a preset value. For the merged cleaning area, the cleaning direction of the merged cleaning area is a cleaning direction of a cleaning area with an area larger than the preset value and adjacent to a cleaning area with an area smaller than the preset value.

In a second implementation manner, the cleaning robot 100 merges a cleaning area with a length to width ratio greater than the preset ratio and other adjacent cleaning areas with a length to width ratio greater than the preset ratio. For the merged cleaning area, the cleaning direction of the merged cleaning area is a cleaning direction of a cleaning area with a length to width ratio smaller than the preset ratio and adjacent to a cleaning area with a length to width ratio larger than the preset ratio.

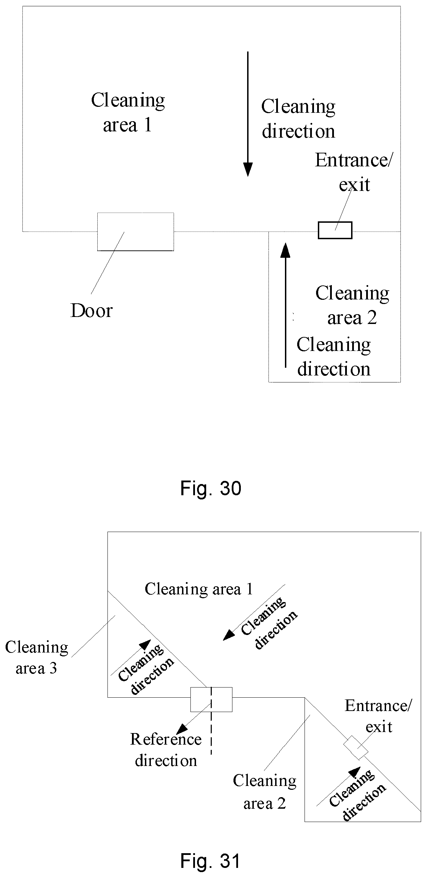

Referring to Fig. 30, which is a schematic diagram of a cleaning direction configured for the cleaning area obtained in Fig. 27. Referring to Fig. 31, which is a schematic diagram of a cleaning direction configured for the cleaning area obtained in Fig. 28.

S2310: based on the cleaning direction, setting, by the cleaning robot 100, a cleaning starting point for the at least one cleaning area.

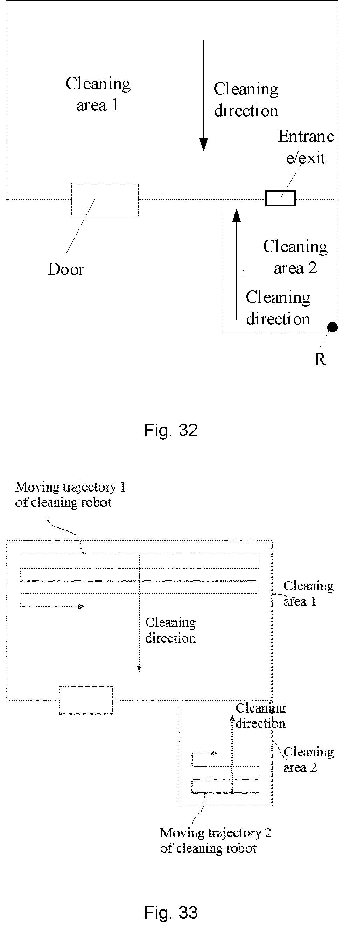

For example, for the cleaning area and cleaning direction shown in Fig. 30, the first uncleaned point finally determined by the cleaning robot 100 is R, see Fig. 32.

This step is the same as step S1404, and will not be repeated here.

S2311: starting from the cleaning starting point in unit of a cleaning area, performing, by the cleaning robot 100, cleaning operations on the at least one cleaning area of the space to be cleaned according to the cleaning direction and the cleaning sequence.

In this step, the cleaning robot 100 takes a cleaning area as a unit, starts from the cleaning starting point of the first target cleaning area, moves along a sidewinding trajectory according to the cleaning direction of the first target cleaning area, and performs cleaning operations on the first target cleaning area. After performing the cleaning operations on the first target cleaning area, the cleaning robot 100 starts from a second cleaning starting point of the second target cleaning area, and moves along a sidewinding trajectory according to the cleaning direction of the second target cleaning area. After performing the cleaning operations on the second target cleaning area, the cleaning robot 100 starts from a third cleaning starting point of the third target cleaning area, and moves along a sidewinding trajectory according to the cleaning direction of the third target cleaning area, and performs cleaning operations on the third target cleaning area until the cleaning operation is performed on the cleaning area where the reference object is located.

It should be noted that after the cleaning robot 100 performs a cleaning operation on a cleaning area, it can move from the cleaning area to a next cleaning area based on a preset navigation path to perform a cleaning operation on the next cleaning area.

When the cleaning robot 100 performs a cleaning operation, it moves along a sidewinding trajectory from the cleaning starting point. The sidewinding trajectory gradually advances in the cleaning direction and turns back and forth in a direction perpendicular to the cleaning direction. Referring to Fig. 33, which is a schematic diagram of moving in the cleaning area in Fig. 32 along a sidewinding trajectory.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned area that has been cleaned when it moves to the area where the base station is located for charging or cleaning a cleaning component, thereby enhancing the cleaning effect and improving the cleaning efficiency.

### Embodiment 3

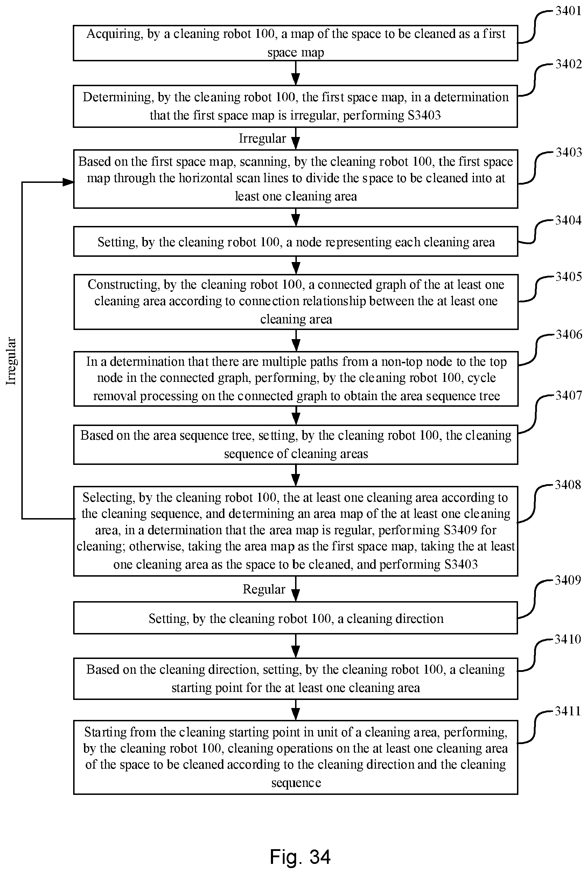

An embodiment of this disclosure provides a cleaning control method. Referring to Fig. 34, in an embodiment of this disclosure, a situation in which the space to be cleaned is a room unit, the room unit is an irregular room unit, the cleaning robot 100 scans the first space map through horizontal scan lines to divide the space to be cleaned into at least one cleaning area, and obtains an area sequence tree by performing cycle removal processing on a cyclic connected graph, sets a cleaning sequence according to the area sequence tree, and no obstacles are encountered during the cleaning operation of the room unit is described as an example, and the method includes:
S3401: acquiring, by a cleaning robot 100, a map of the space to be cleaned as a first space map.

S3402: determining, by the cleaning robot 100, the first space map, in a determination that the first space map is irregular, performing S3403.

S3403: based on the first space map, scanning, by the cleaning robot 100, the first space map through the horizontal scan lines to divide the space to be cleaned into at least one cleaning area.

S3404: setting, by the cleaning robot 100, a node representing each cleaning area.

S3405: constructing, by the cleaning robot 100, a connected graph of the at least one cleaning area according to connection relationship between the at least one cleaning area.

Steps S3401-S3405 are the same as steps S2301-S2305 respectively, and will not be repeated here.

S3406: in a determination that there are multiple paths from a non-top node to the top node in the connected graph, performing, by the cleaning robot 100, cycle removal processing on the connected graph to obtain the area sequence tree.

A cycle mentioned above is a circular path formed by successively connecting at least three nodes, and the cycle makes the multiple paths from the non-top node to the top node in the connected graph. In this step, after the cleaning robot 100 performs cycle removal processing on the circular path, there is only one path from any non-top node to the top node in the area sequence tree. The cleaning robot 100 can take any algorithm to perform cycle removal processing on the circular path. For example, the cleaning robot 100 can take the minimum spanning tree algorithm, the maximum flow minimum cut algorithm, or the Tarjan algorithm. In the embodiments of this disclosure, the algorithm is not specifically limited.

In a possible implementation manner, the cleaning robot 100 may perform cycle removal processing through the minimum spanning tree algorithm to obtain the area sequence tree. Correspondingly, this step may be: configuring, by the cleaning robot 100, a weight between two connected nodes, determining a path weight from each node to the top node in the circular path according to the weight between the two connected nodes, and according to the path weight from each node to the top node, selecting a path with the smallest path weight, and deleting a connection line between two nodes corresponding to the unselected path in the circular path to obtain the area sequence tree.

Where, for each node in the circular path, the step of determining a path weight from each node to the top node in the circular path according to the weight between the two connected nodes may be: determining, by the cleaning robot 100, a sum of weights between nodes in the path from the node to the top node as the path weight from the node to the top node. The cleaning robot 100 may take a value of the connection line between two nodes to represent the weight, and may also take a distance between centroids of two adjacent cleaning areas to represent the weight, which is not specifically limited in the embodiments of this disclosure.

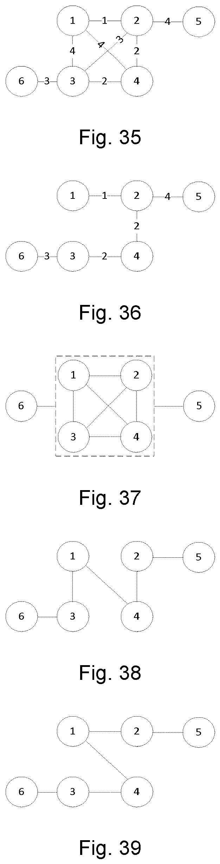

Referring to Fig. 35, the cleaning robot 100 takes the value of the connection line between the two nodes to represent the weight. Node 5 in the figure represents the top node. After processing the connected graph shown in Fig. 35 through the minimum spanning tree algorithm, the area sequence tree shown in Fig. 36 is obtained.

In another possible implementation manner, when there are multiple paths from the non-top node to the top node in the connected graph, the cycle in the connected graph constitutes a strong connected component. The cleaning robot 100 may perform cycle removal processing on the connected graph through the Tarjan algorithm to obtain the area sequence tree. Correspondingly, this step may be: removing, by the cleaning robot 100, the edge of the cycle within the cycle through the Tarjan algorithm to change the strongly connected components into non-edge connected components to obtain the area sequence tree.

Referring to Fig. 37, nodes 1, 2, 3, and 4 in the graph constitute strong connected components. The cleaning robot 100 takes node 3 as an initial node and node 2 as a termination node, and takes the Tarjan algorithm to remove the edge within the cycle to obtain the area sequence tree shown in Fig. 38 or Fig. 39.

S3407: based on the area sequence tree, setting, by the cleaning robot 100, the cleaning sequence of cleaning areas.

For example, for the area sequence tree shown in Fig. 38, the cleaning robot 100 first cleans a cleaning area represented by node 6, and then cleans a cleaning area represented by node 3, a cleaning area represented by node 1, a cleaning area represented by node 4, a cleaning area represented by node 2, and finally a cleaning area represented by node 5, that is, the cleaning sequence is node 6, node 3, node 1, node 4, node 2, and node 5.

For the area sequence tree shown in Fig. 39, the cleaning robot 100 first cleans a cleaning area represented by node 6, and then cleans a cleaning area represented by node 3, a cleaning area represented by node 4, a cleaning area represented by node 1, a cleaning area represented by node 2, and finally a cleaning area represented by node 5, that is, the cleaning sequence is node 6, node 3, node 4, node 1, node 2, and node 5.

The remaining steps are the same as step S2307, and will not be repeated here.

S3408: selecting, by the cleaning robot 100, the at least one cleaning area according to the cleaning sequence, and determining an area map of the at least one cleaning area, in a determination that the area map is regular, performing S3409 for cleaning; otherwise, taking the area map as the first space map, taking the at least one cleaning area as the space to be cleaned, and performing S3403.

S3409: setting, by the cleaning robot 100, a cleaning direction.

S3410: based on the cleaning direction, setting, by the cleaning robot 100, a cleaning starting point for the at least one cleaning area.

S3411: starting from the cleaning starting point in unit of a cleaning area, performing, by the cleaning robot 100, cleaning operations on the at least one cleaning area of the space to be cleaned according to the cleaning direction and the cleaning sequence.

Steps S3408-S3411 are the same as steps S2308-S2311 respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned area that has been cleaned when it moves to the area where the base station is located for charging or cleaning a cleaning component, thereby enhancing the cleaning effect and improving the cleaning efficiency.

### Embodiment 4

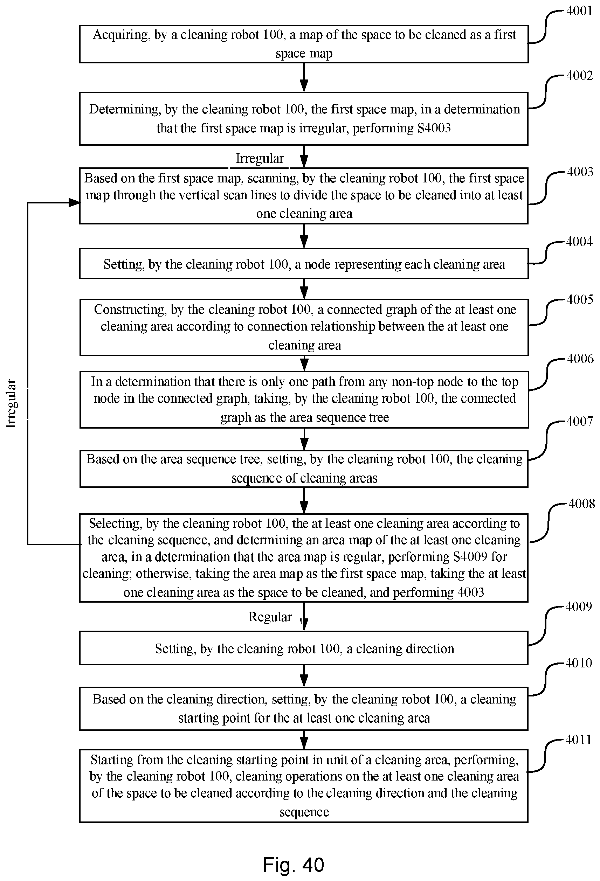

An embodiment of this disclosure provides a cleaning control method. Referring to Fig. 40, in an embodiment of this disclosure, a situation in which the space to be cleaned is a room unit, and the room unit is an irregular room unit, the cleaning robot 100 scans the first space map through vertical scan lines to divide the space to be cleaned into at least one cleaning area, and directly takes an acyclic connected graph as an area sequence tree, sets a cleaning sequence according to the area sequence tree, and no obstacles are encountered during the cleaning operation of the room unit is described as an example, and the method includes:
S4001: acquiring, by a cleaning robot 100, a map of the space to be cleaned as a first space map.

This step is the same as step S2301 and will not be repeated here.

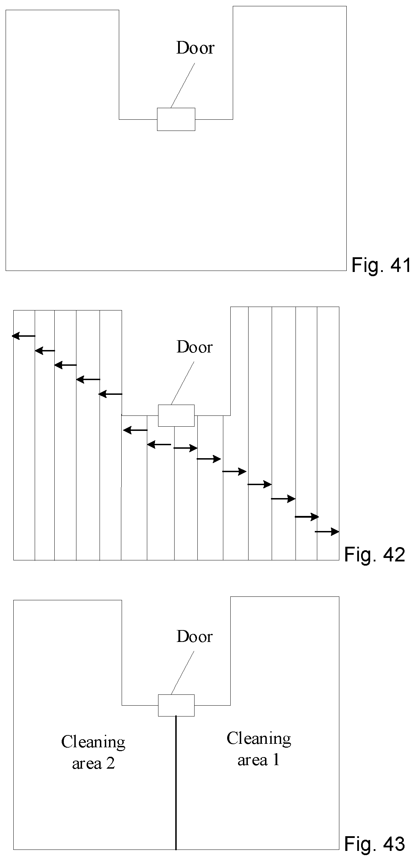

For example, the first space map acquired by the cleaning robot 100 is the space map shown in Fig. 41.

S4002: determining, by the cleaning robot 100, the first space map, in a determination that the first space map is irregular, performing S4003.

This step is the same as step S2302 and will not be repeated here.

S3403: based on the first space map, scanning, by the cleaning robot 100, the first space map through the vertical scan lines to divide the space to be cleaned into at least one cleaning area.

Before this step, the cleaning robot 100 takes the reference object as an origin to set a right-angle reference coordinate system, including a X-axis and a Y-axis. The reference direction may be perpendicular to the X-axis and the reference direction is a positive direction of the Y-axis; or the reference direction may be perpendicular to the Y-axis and the reference direction is a positive direction of the X-axis. In the embodiments of this disclosure, this is not specifically limited. For example, the cleaning robot 100 takes the reference direction as the positive direction of the Y-axis.

This step can be achieved through the following steps (1) to (4), including:
(1) at a position of the reference object, scanning, by the cleaning robot 100, the first space map by vertical scan lines.

The vertical scan lines are parallel to the reference direction, and the reference direction is the positive direction of the Y-axis. When the cleaning robot 100 scans the first space map through the vertical scan lines, the first space map is scanned along the positive direction of the X-axis or the negative direction of the X-axis with the position of the reference object as a starting point. When the cleaning robot 100 scans the first space map through the vertical scan lines, it can scan the first space map every time through the vertical scan lines to determine whether there is an unscanned area in the first space map along the positive direction of the X-axis or the negative direction of the X-axis. When the cleaning robot 100 determines that there is an unscanned area along the positive direction of the X-axis in the first space map, the cleaning robot 100 performs step (2); when the cleaning robot 100 determines that there is an unscanned area along the negative direction of the X-axis in the first space map, the cleaning robot 100 performs step (3). When the cleaning robot 100 scans the first space map through the vertical scan lines, it may scan the first space map along the positive direction of the X-axis first, or scan the first space map along the negative direction of the X-axis first, which is not specifically limited in the embodiments of this disclosure.

The vertical scan lines are scan lines in the vertical direction. The vertical scan lines may start from one side edge of the first space map and stop at the other side edge. For example, the vertical scan lines start from a top edge of the first space map and stop at a bottom edge; or start from the bottom edge of the first space map and stop at the top edge. In the embodiments of this disclosure, this is not specifically limited. The thickness of the vertical scan line can be set and changed as required, and in the embodiments of this disclosure, this is not specifically limited.

(2) in a determination that a scanned area in the first space map includes an adjacent and unscanned area in a positive direction of the X-axis, advancing, by the cleaning robot 100, the vertical scan lines along the positive direction of the X-axis to scan the adjacent and unscanned area.

In a possible implementation manner, every time the cleaning robot 100 scans the first space map along a positive direction of the X-axis through the vertical scan lines, the cleaning robot 100 determines whether there is an unscanned area along the positive direction of the X-axis. In a determination that there is an unscanned area, the cleaning robot 100 advances in the positive direction of the X-axis for a second interval, scans the first space map at the second interval from the last vertical scan lines, and the cleaning robot 100 determines whether there is still an unscanned area in the positive direction along the X-axis. In a determination that there is still an unscanned area, the cleaning robot 100 continues to advance along the positive direction of the X-axis for the second interval until there is no unscanned area along the positive direction of the X-axis, and the cleaning robot 100 performs step (4).

(3) in a determination that a scanned area in the first space map includes an adjacent and unscanned area in the negative direction of the X-axis, advancing, by the cleaning robot 100, the vertical scan lines along the negative direction of the X-axis to scan the adjacent and unscanned area.

This step is similar to step (2), every time the cleaning robot 100 scans the first space map along the negative direction of the X-axis through the vertical scan lines, the cleaning robot 100 determines whether there is an unscanned area along the negative direction of the X-axis. When there is an unscanned area, the cleaning robot 100 advances in the negative direction of the X-axis for a second interval, scans the first space map at the second interval from the last vertical scan lines, and the cleaning robot 100 determines whether there is still an unscanned area in the negative direction along the X-axis. In a determination that there is still an unscanned area, the cleaning robot 100 continues to advance along the negative direction of the X-axis for the second interval until there is no unscanned area along the negative direction of the X-axis, and the cleaning robot 100 performs step (4). Referring to Fig. 42, which is a schematic diagram of scanning the first space map shown in Fig. 41 through vertical scan lines according to the above steps.

(4) taking, by the cleaning robot 100, a position where lengths of the vertical scan lines cut by the first space map are segmented and an edge of the first space map as a boundary, and merging areas scanned in a same direction to dividing the first space map into the at least one cleaning area.

In this step, the cleaning robot 100 takes a position where lengths of the vertical scan lines cut by the first space map are segmented and an edge of the first space map as a boundary, and merges the areas scanned in the positive direction of the X-axis into one cleaning area, and merges the areas scanned in the negative direction of the X-axis into one cleaning area. Alternatively, the cleaning robot 100 sets an area adjacent to the reference object as a cleaning area before merging the areas scanned in the same direction. In the embodiments of this disclosure, the area size of the cleaning area adjacent to the reference object is not specifically limited.

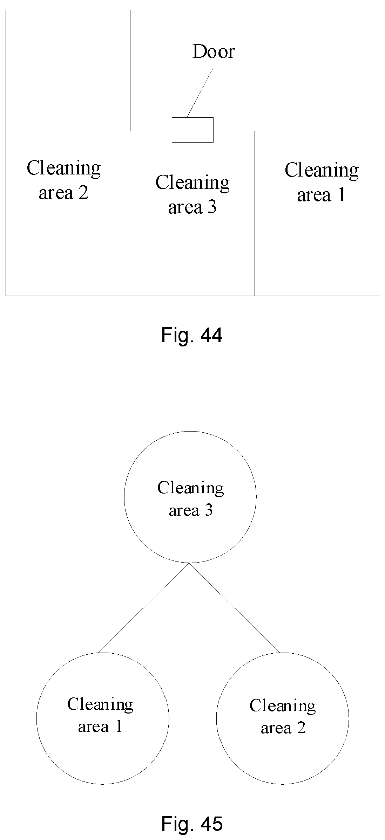

The cleaning robot 100 merges the areas scanned in the positive direction of the X-axis into one cleaning area until the vertical scan lines are segmented or reach the edge of the first space map. The cleaning robot 100 merges the areas scanned in the negative direction of the X-axis into one cleaning area until the vertical scan lines are segmented or reach the edge of the first space map. When the vertical scan lines are segmented, the cleaning robot 100 starts from the segmented scan lines and merges the areas scanned in the same direction into one cleaning area until the vertical scan lines are segmented again or reach the edge of the first space map. Fig. 43 is a schematic diagram of the cleaning robot 100 directly merging the cleaning areas scanned in the same direction shown in Fig. 42 to obtain multiple cleaning areas. Fig. 44 is a schematic diagram of multiple cleaning areas obtained by the cleaning robot 100 firstly setting a cleaning area in the adjacent range of the reference object, and then merging the areas scanned in the same direction as shown in Fig. 42 according to the above steps.

S4004: setting, by the cleaning robot 100, a node representing each cleaning area.

This step is the same as step S2304, and will not be repeated here.

S4005: constructing, by the cleaning robot 100, a connected graph of the at least one cleaning area according to connection relationship between the at least one cleaning area.

This step is the same as step S2305, and will not be repeated here.

For example, for the multiple cleaning areas shown in Fig. 44, the connection graph constructed by the cleaning robot 100 according to the connection relationship between the cleaning areas can be seen in Fig. 45.

S4006: in a determination that there is only one path from any non-top node to the top node in the connected graph, taking, by the cleaning robot 100, the connected graph as the area sequence tree.

This step is the same as step S2306, and will not be repeated here.

S4007: based on the area sequence tree, setting, by the cleaning robot 100, the cleaning sequence of cleaning areas.

For example, for the connected graph in Fig. 45, the cleaning robot 100 determines that a node representing cleaning area 3 is a top node, and a node representing cleaning area 1 and a node representing cleaning area 2 are both child nodes of the top node. Therefore, the cleaning robot 100 determines that the cleaning sequence is the cleaning area 1, the cleaning area 2, and the cleaning area 3, or the cleaning area 2, the cleaning area 1, and the cleaning area 3.

The remaining steps are the same as step S2307, and will not be repeated here.

S4008: selecting, by the cleaning robot 100, the at least one cleaning area according to the cleaning sequence, and determining an area map of the at least one cleaning area, in a determination that the area map is regular, performing S4009 for cleaning; otherwise, taking the area map as the first space map, taking the at least one cleaning area as the space to be cleaned, and performing 4003.

S4009: setting, by the cleaning robot 100, a cleaning direction.

S4010: based on the cleaning direction, setting, by the cleaning robot 100, a cleaning starting point for the at least one cleaning area.

S4011: starting from the cleaning starting point in unit of a cleaning area, performing, by the cleaning robot 100, cleaning operations on the at least one cleaning area of the space to be cleaned according to the cleaning direction and the cleaning sequence.

Steps S4004-S4011 are the same as steps S2304-S2311, respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned area that has been cleaned when it moves to the area where the base station is located for charging or cleaning a cleaning component, thereby enhancing the cleaning effect and improving the cleaning efficiency.

### Embodiment 5

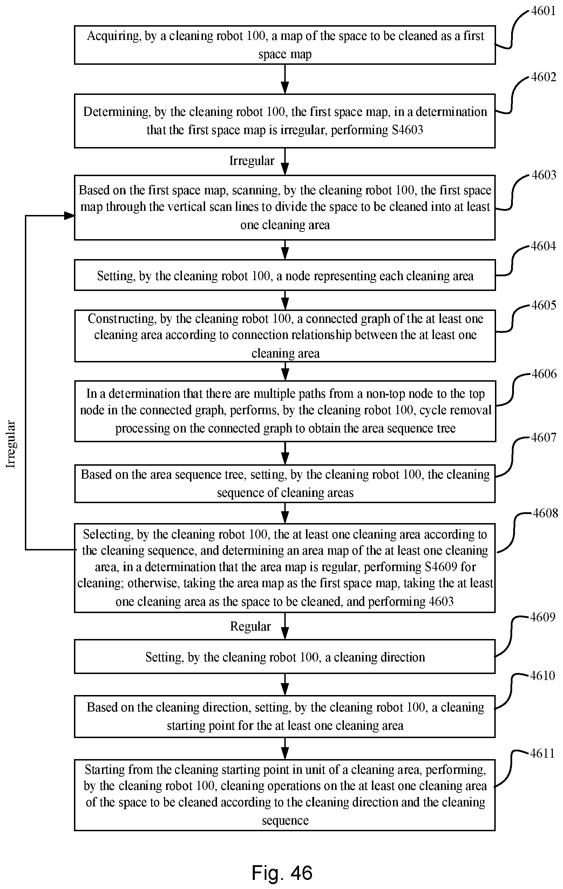

An embodiment of this disclosure provides a cleaning control method. Referring to Fig. 46, in an embodiment of this disclosure, a situation in which the space to be cleaned is a room unit, and the room unit is an irregular room unit, the cleaning robot 100 scans the first space map through vertical scan lines to divide the space to be cleaned into at least one cleaning area, and obtains an area sequence tree by performing cycle removal processing on a cyclic connected graph, sets a cleaning sequence according to the area sequence tree, and no obstacles are encountered during the cleaning operation of the room unit is described as an example, and the method includes:
S4601: acquiring, by a cleaning robot 100, a map of the space to be cleaned as a first space map.

S4602: determining, by the cleaning robot 100, the first space map, in a determination that the first space map is irregular, performing S4603.

S4603: based on the first space map, scanning, by the cleaning robot 100, the first space map through the vertical scan lines to divide the space to be cleaned into at least one cleaning area.

S4604: setting, by the cleaning robot 100, a node representing each cleaning area.

S4605: constructing, by the cleaning robot 100, a connected graph of the at least one cleaning area according to connection relationship between the at least one cleaning area.

Steps S4601-S4605 are the same as steps S4001-S4005, respectively, and will not be repeated here.

S4606: in a determination that there are multiple paths from a non-top node to the top node in the connected graph, performs, by the cleaning robot 100, cycle removal processing on the connected graph to obtain the area sequence tree.

Step S4606 is the same as step S3406, and will not be repeated here.

S4607: based on the area sequence tree, setting, by the cleaning robot 100, the cleaning sequence of cleaning areas.

S4608: selecting, by the cleaning robot 100, the at least one cleaning area according to the cleaning sequence, and determining an area map of the at least one cleaning area, in a determination that the area map is regular, performing S4609 for cleaning; otherwise, taking the area map as the first space map, taking the at least one cleaning area as the space to be cleaned, and performing 4603.

S4609: setting, by the cleaning robot 100, a cleaning direction.

S4610: based on the cleaning direction, setting, by the cleaning robot 100, a cleaning starting point for the at least one cleaning area.

S4611: starting from the cleaning starting point in unit of a cleaning area, performing, by the cleaning robot 100, cleaning operations on the at least one cleaning area of the space to be cleaned according to the cleaning direction and the cleaning sequence.

Steps S4607-S4611 are the same as steps S4007-S4011 respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned area that has been cleaned when it moves to the area where the base station is located for charging or cleaning a cleaning component, thereby enhancing the cleaning effect and improving the cleaning efficiency.

### Embodiment 6

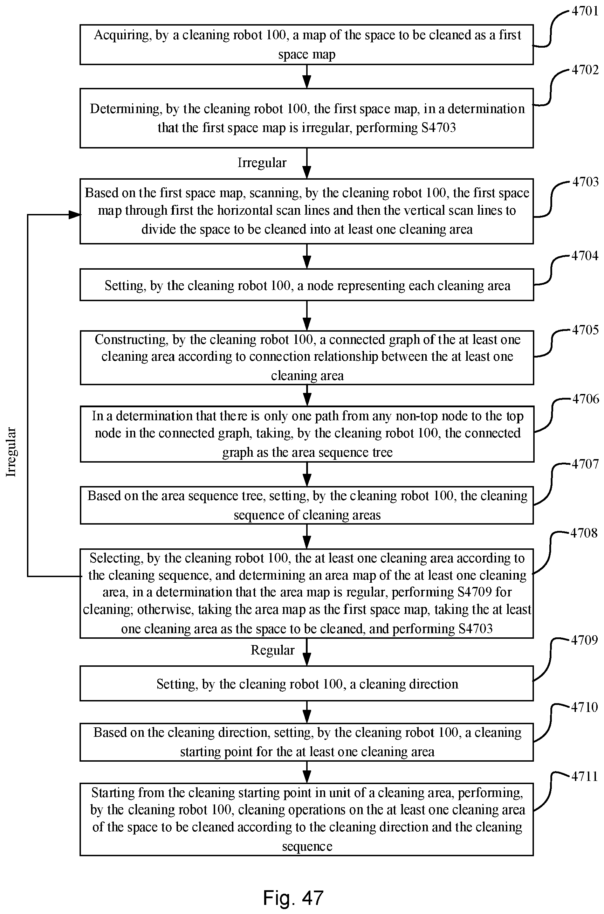

An embodiment of this disclosure provides a cleaning control method. Referring to Fig. 47, in an embodiment of this disclosure, a situation in which the space to be cleaned is a room unit, and the room unit is an irregular room unit, the cleaning robot 100 first scans the first space map through horizontal scan lines and then scans the first space map through vertical scan lines to divide the space to be cleaned into at least one cleaning area, and directly takes an acyclic connected graph as an area sequence tree, sets a cleaning sequence according to the area sequence tree, and no obstacles are encountered during the cleaning operation of the room unit is described as an example, and the method includes:
S4701: acquiring, by a cleaning robot 100, a map of the space to be cleaned as a first space map.

This step is the same as step S2301 and will not be repeated here.

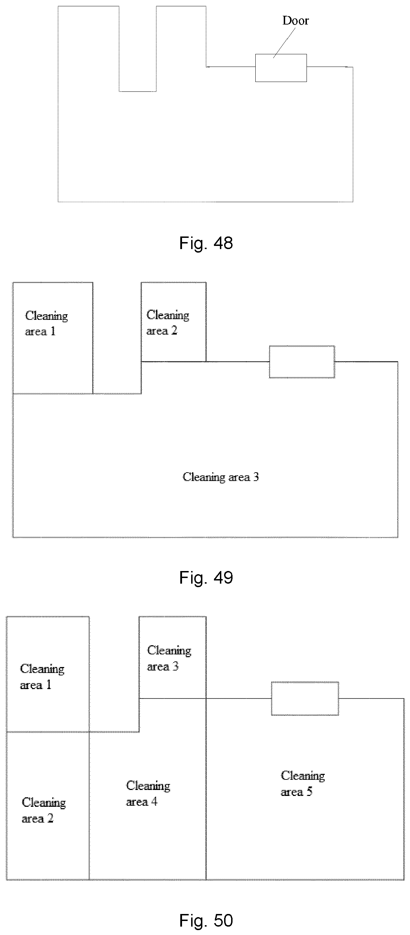

For example, the first space map acquired by the cleaning robot 100 is the first space map shown in Fig. 48.

S4702: determining, by the cleaning robot 100, the first space map, in a determination that the first space map is irregular, performing S4703.

This step is the same as step S2302 and will not be repeated here.

S4703: based on the first space map, scanning, by the cleaning robot 100, the first space map through first the horizontal scan lines and then the vertical scan lines to divide the space to be cleaned into at least one cleaning area.

In this step, the cleaning robot 100 first scans the first space map through the horizontal scan lines. Where, the step of the cleaning robot 100 scanning the first space map through the horizontal scan lines is the same as the step of the cleaning robot 100 scanning the first space map through the horizontal scan lines in step S2303, and will not be repeated here.

After the cleaning robot 100 scans the first space map through the horizontal scan lines, it can scan the first space map through the vertical scan lines. Where, the step of the cleaning robot 100 scanning the first space map through the vertical scan lines is the same as the step of the cleaning robot 100 scanning the first space map through the vertical scan lines in step S4003, and will not be repeated here.

After scanning the first space map through the horizontal scan lines, taking, by the cleaning robot 100, a position where lengths of the horizontal scan lines cut by the first space map are segmented and an edge of the first space map as a boundary, and merging continuous areas scanned in a same direction to obtain the at least one cleaning area. After scanning the first space map through the vertical scan lines, taking, by the cleaning robot 100, a position where lengths of the vertical scan lines cut by the first space map are segmented, an edge of the first space map, and an interaction of two cleaning areas obtained by scanning by the horizontal scanning lines as a boundary, and merging continuous areas scanned in a same direction to obtain the at least one cleaning area.

The cleaning robot 100 scans through the horizontal scan lines first, and then scans through the vertical scan lines. When the first space map is the space map shown in Fig. 48, the cleaning robot 100 first scans the first space map through horizontal scan lines, and the divided cleaning areas are shown in Fig. 49. The cleaning areas in Fig. 49 are cleaning area 1, cleaning area 2, and cleaning area 3. When the cleaning robot 100 scans the first space map shown in Fig. 49 through the vertical scan lines then, the multiple cleaning areas that are finally divided are shown in Fig. 50. The cleaning areas in Fig. 50 are cleaning area 1, cleaning area 2, cleaning area 3, cleaning area 4, and cleaning area 5 respectively.

S4704: setting, by the cleaning robot 100, a node representing each cleaning area.

S4705: constructing, by the cleaning robot 100, a connected graph of the at least one cleaning area according to connection relationship between the at least one cleaning area.

S4706: in a determination that there is only one path from any non-top node to the top node in the connected graph, taking, by the cleaning robot 100, the connected graph as the area sequence tree.

S4707: based on the area sequence tree, setting, by the cleaning robot 100, the cleaning sequence of cleaning areas.

S4708: selecting, by the cleaning robot 100, the at least one cleaning area according to the cleaning sequence, and determining an area map of the at least one cleaning area, in a determination that the area map is regular, performing S4709 for cleaning; otherwise, taking the area map as the first space map, taking the at least one cleaning area as the space to be cleaned, and performing S4703.

S4709: setting, by the cleaning robot 100, a cleaning direction.

S4710: based on the cleaning direction, setting, by the cleaning robot 100, a cleaning starting point for the at least one cleaning area.

S4711: starting from the cleaning starting point in unit of a cleaning area, performing, by the cleaning robot 100, cleaning operations on the at least one cleaning area of the space to be cleaned according to the cleaning direction and the cleaning sequence.

Steps S4704-S4711 are the same as steps S2304-S2311 respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned area that has been cleaned when it moves to the area where the base station is located for charging or cleaning a cleaning component, thereby enhancing the cleaning effect and improving the cleaning efficiency.

### Embodiment 7

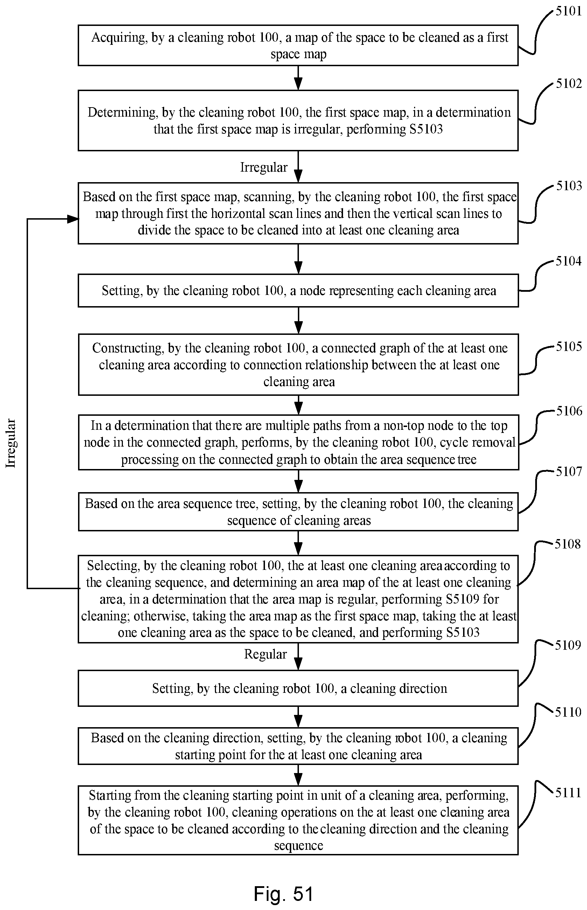

An embodiment of this disclosure provides a cleaning control method. Referring to Fig. 51, in an embodiment of this disclosure, a situation in which the space to be cleaned is a room unit, the room unit is an irregular room unit, the cleaning robot 100 first scans the first space map through horizontal scan lines and then scans the first space map through vertical scan lines to divide the space to be cleaned into at least one cleaning area, and performs cycle removal processing on a cyclic connected graph to obtain an area sequence tree, sets a cleaning sequence according to the area sequence tree, and no obstacles are encountered during the cleaning operation of the room unit is described as an example, and the method includes:
S5101: acquiring, by a cleaning robot 100, a map of the space to be cleaned as a first space map.

S5102: determining, by the cleaning robot 100, the first space map, in a determination that the first space map is irregular, performing S5103.

S5103: based on the first space map, scanning, by the cleaning robot 100, the first space map through first the horizontal scan lines and then the vertical scan lines to divide the space to be cleaned into at least one cleaning area.

S5104: setting, by the cleaning robot 100, a node representing each cleaning area.

S5105: constructing, by the cleaning robot 100, a connected graph of the at least one cleaning area according to connection relationship between the at least one cleaning area.

Steps S5101-S5105 are the same as steps S4701-S4705, respectively, and will not be repeated here.

S5106: in a determination that there are multiple paths from a non-top node to the top node in the connected graph, performs, by the cleaning robot 100, cycle removal processing on the connected graph to obtain the area sequence tree.

S5107: based on the area sequence tree, setting, by the cleaning robot 100, the cleaning sequence of cleaning areas.

S5108: selecting, by the cleaning robot 100, the at least one cleaning area according to the cleaning sequence, and determining an area map of the at least one cleaning area, in a determination that the area map is regular, performing S5109 for cleaning; otherwise, taking the area map as the first space map, taking the at least one cleaning area as the space to be cleaned, and performing S5103.

S5109: setting, by the cleaning robot 100, a cleaning direction.

S5110: based on the cleaning direction, setting, by the cleaning robot 100, a cleaning starting point for the at least one cleaning area.

S5111: starting from the cleaning starting point in unit of a cleaning area, performing, by the cleaning robot 100, cleaning operations on the at least one cleaning area of the space to be cleaned according to the cleaning direction and the cleaning sequence.

Steps S5106-S5111 are the same as steps S3406-S3411 respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned area that has been cleaned when it moves to the area where the base station is located for charging or cleaning a cleaning component, thereby enhancing the cleaning effect and improving the cleaning efficiency.

### Embodiment 8

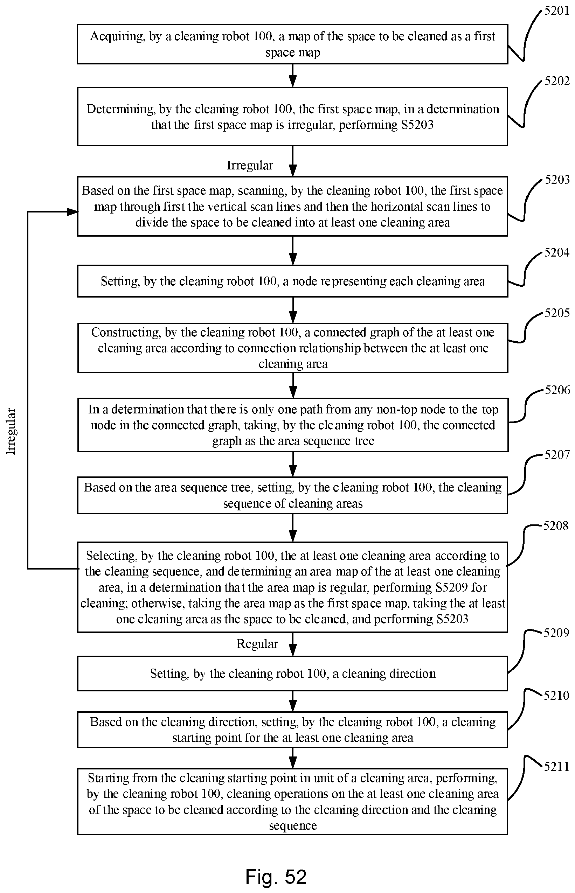

An embodiment of this disclosure provides a cleaning control method. Referring to Fig. 52, in an embodiment of this disclosure, a situation in which the space to be cleaned is a room unit, the room unit is an irregular room unit, the cleaning robot 100 first scans the first space map through vertical scan lines and then scans the first space map through horizontal scan lines to divide the space to be cleaned into at least one cleaning area, and directly takes an acyclic connected graph as an area sequence tree, sets a cleaning sequence according to the area sequence tree, and no obstacles are encountered during the cleaning operation of the room unit is described as an example, and the method includes:
S5201: acquiring, by a cleaning robot 100, a map of the space to be cleaned as a first space map.

S5202: determining, by the cleaning robot 100, the first space map, in a determination that the first space map is irregular, performing S5203.

S5203: based on the first space map, scanning, by the cleaning robot 100, the first space map through first the vertical scan lines and then the horizontal scan lines to divide the space to be cleaned into at least one cleaning area.

Where, the step of the cleaning robot 100 scanning the first space map through the vertical scan lines is the same as the step of the cleaning robot 100 scanning the first space map through the vertical scan lines in step S4003, and will not be repeated here.

Where, the step of the cleaning robot 100 scanning the first space map through the horizontal scan lines is the same as the step of the cleaning robot 100 scanning the first space map through the horizontal scan lines in step S2303, and will not be repeated here.

After scanning the first space map through the vertical scan lines, merging, by the cleaning robot 100, continuous areas scanned in the same direction until the vertical scan lines are segmented or reach the edge of the room to obtain the at least one cleaning area. Taking, by the cleaning robot 100, a position where lengths of the vertical scan lines cut by the first space map are segmented and an edge of the first space map as a boundary, and merging continuous areas scanned in a same direction to obtain the at least one cleaning area.

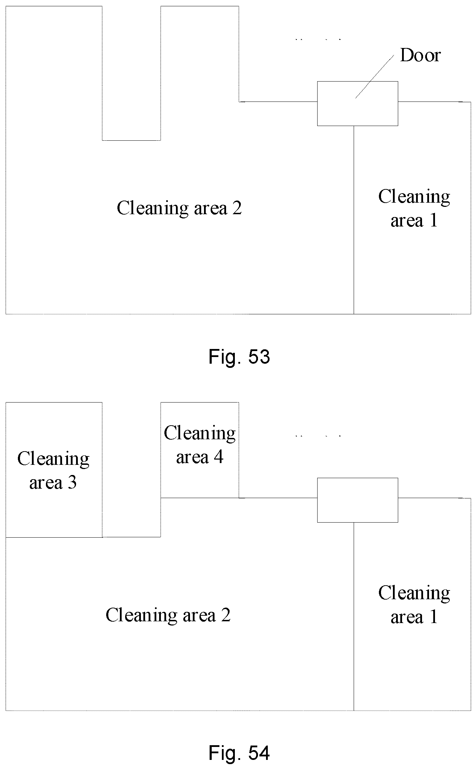

The cleaning robot 100 scans the first space map through the vertical scan lines first, and then scans through the horizontal scan lines. When the first space map is the space map shown in Fig. 48, the cleaning robot 100 first scans the first space map through the vertical scan lines, and the divided cleaning areas are shown in Fig. 53. The cleaning areas in Fig. 53 are cleaning area 1 and cleaning area 2 respectively. After the cleaning robot 100 scans the first space map shown in Fig. 53 through the horizontal scan lines, the final divided cleaning areas are shown in Fig. 54. The cleaning areas in Fig. 54 are cleaning area 1, cleaning area 2, cleaning area 3, and cleaning area 4.

S5204: setting, by the cleaning robot 100, a node representing each cleaning area.

S5205: constructing, by the cleaning robot 100, a connected graph of the at least one cleaning area according to connection relationship between the at least one cleaning area.

S5206: in a determination that there is only one path from any non-top node to the top node in the connected graph, taking, by the cleaning robot 100, the connected graph as the area sequence tree.

S5207: based on the area sequence tree, setting, by the cleaning robot 100, the cleaning sequence of cleaning areas.

S5208: selecting, by the cleaning robot 100, the at least one cleaning area according to the cleaning sequence, and determining an area map of the at least one cleaning area, in a determination that the area map is regular, performing S5209 for cleaning; otherwise, taking the area map as the first space map, taking the at least one cleaning area as the space to be cleaned, and performing S5203.

S5209: setting, by the cleaning robot 100, a cleaning direction.

S5210: based on the cleaning direction, setting, by the cleaning robot 100, a cleaning starting point for the at least one cleaning area.

S5211: starting from the cleaning starting point in unit of a cleaning area, performing, by the cleaning robot 100, cleaning operations on the at least one cleaning area of the space to be cleaned according to the cleaning direction and the cleaning sequence.

Steps S5204-S5211 are the same as steps S1404-S1411 respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned area that has been cleaned when it moves to the area where the base station is located for charging or cleaning a cleaning component, thereby enhancing the cleaning effect and improving the cleaning efficiency.

### Embodiment 9

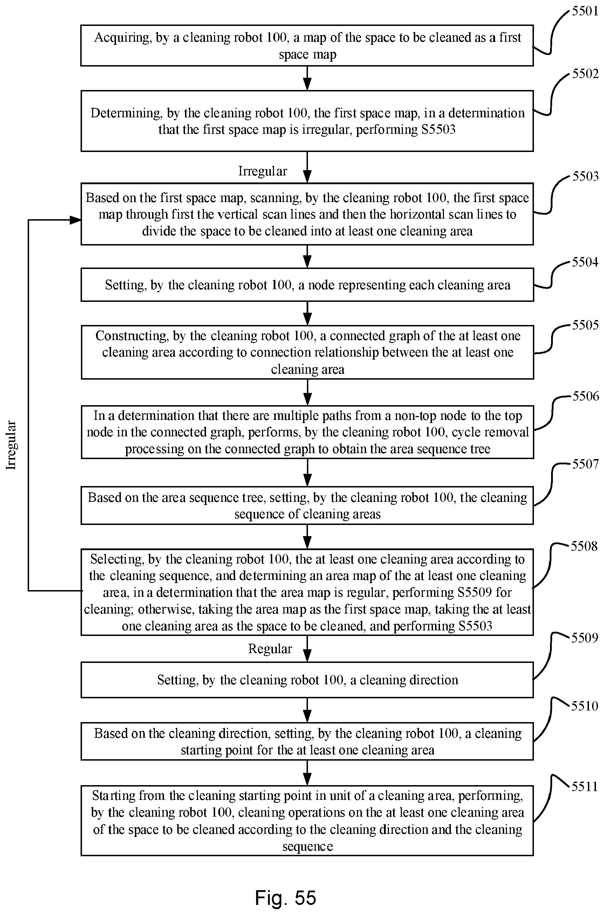

An embodiment of this disclosure provides a cleaning control method. Referring to Fig. 55, in an embodiment of this disclosure, a situation in which the space to be cleaned is a room unit, the room unit is an irregular room unit, the cleaning robot 100 first scans the first space map through vertical scan lines and then scans the first space map through horizontal scan lines to divide the space to be cleaned into at least one cleaning area, and performs cycle removal processing on a cyclic connected graph to obtain an area sequence tree, sets a cleaning sequence according to the area sequence tree, and no obstacles are encountered during the cleaning operation of the room unit is described as an example, and the method includes:
S5501: acquiring, by a cleaning robot 100, a map of the space to be cleaned as a first space map.

S5502: determining, by the cleaning robot 100, the first space map, in a determination that the first space map is irregular, performing S5503.

S5503: based on the first space map, scanning, by the cleaning robot 100, the first space map through first the vertical scan lines and then the horizontal scan lines to divide the space to be cleaned into at least one cleaning area.

S5504: setting, by the cleaning robot 100, a node representing each cleaning area.

S5505: constructing, by the cleaning robot 100, a connected graph of the at least one cleaning area according to connection relationship between the at least one cleaning area.

Steps S5501-S5505 are the same as steps S5201-S5205, respectively, and will not be repeated here.

S5506: in a determination that there are multiple paths from a non-top node to the top node in the connected graph, performs, by the cleaning robot 100, cycle removal processing on the connected graph to obtain the area sequence tree.

S5507: based on the area sequence tree, setting, by the cleaning robot 100, the cleaning sequence of cleaning areas.

S5508: selecting, by the cleaning robot 100, the at least one cleaning area according to the cleaning sequence, and determining an area map of the at least one cleaning area, in a determination that the area map is regular, performing S5509 for cleaning; otherwise, taking the area map as the first space map, taking the at least one cleaning area as the space to be cleaned, and performing S5503.

S5509: setting, by the cleaning robot 100, a cleaning direction.

S5510: based on the cleaning direction, setting, by the cleaning robot 100, a cleaning starting point for the at least one cleaning area.

S5511: starting from the cleaning starting point in unit of a cleaning area, performing, by the cleaning robot 100, cleaning operations on the at least one cleaning area of the space to be cleaned according to the cleaning direction and the cleaning sequence.

Steps S5506-S5511 are the same as steps S3406-S3411 respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned area that has been cleaned when it moves to the area where the base station is located for charging or cleaning a cleaning component, thereby enhancing the cleaning effect and improving the cleaning efficiency.

### Embodiment 10

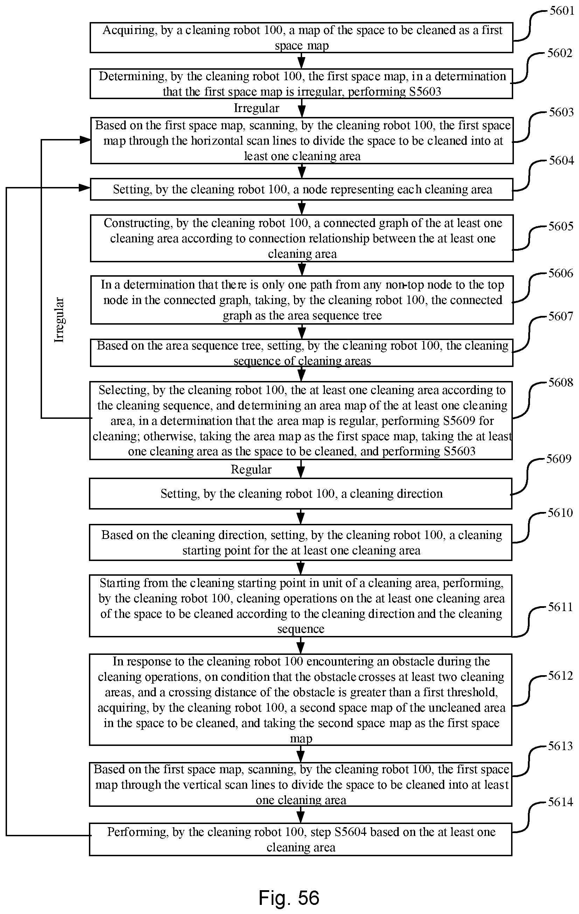

An embodiment of this disclosure provides a cleaning control method. Referring to Fig. 56, in an embodiment of this disclosure, a situation in which the space to be cleaned is a room unit, the room unit is an irregular room unit, the cleaning robot 100 first scans the first space map through horizontal scan lines to divide the space to be cleaned into at least one cleaning area; when encountering an obstacle during performing a cleaning operation on the cleaning area of the space to be cleaned, scans a redetermined first space map through vertical scan lines to redivide the space to be cleaned into at least one cleaning area, and takes an acyclic connected graph as an area sequence tree, sets a cleaning sequence according to the area sequence tree is described as an example, and the method includes:
S5601: acquiring, by a cleaning robot 100, a map of the space to be cleaned as a first space map.

For example, the first space map acquired by the cleaning robot 100 is the space map shown in Fig. 24.

S5602: determining, by the cleaning robot 100, the first space map, in a determination that the first space map is irregular, performing S5603.

S5603: based on the first space map, scanning, by the cleaning robot 100, the first space map through the horizontal scan lines to divide the space to be cleaned into at least one cleaning area.

S5604: setting, by the cleaning robot 100, a node representing each cleaning area.

S5605: constructing, by the cleaning robot 100, a connected graph of the at least one cleaning area according to connection relationship between the at least one cleaning area.

S5606: in a determination that there is only one path from any non-top node to the top node in the connected graph, taking, by the cleaning robot 100, the connected graph as the area sequence tree.

S5607: based on the area sequence tree, setting, by the cleaning robot 100, the cleaning sequence of cleaning areas.

S5608: selecting, by the cleaning robot 100, the at least one cleaning area according to the cleaning sequence, and determining an area map of the at least one cleaning area, in a determination that the area map is regular, performing S5609 for cleaning; otherwise, taking the area map as the first space map, taking the at least one cleaning area as the space to be cleaned, and performing S5603.

S5609: setting, by the cleaning robot 100, a cleaning direction.

Before the cleaning robot 100 encounters an obstacle, a cleaning direction of a cleaning area represented by the top node is the same as the reference direction, and the reference direction is the direction pointing to the reference object. For any child node of a non-top node, the cleaning robot 100 configures a cleaning direction of a cleaning area represented by the child node points to a cleaning area represented by a parent node of the child node, and the cleaning direction of the cleaning area represented by the child node is parallel to the reference direction.

When the cleaning robot 100 encounters an obstacle, the cleaning robot 100 needs to redivide the cleaning area, and the cleaning direction of the cleaning area represented by the top node remains unchanged and remains the same as the reference direction. While for any child node of a non-top node, a cleaning direction of a cleaning area represented by the child node still points to a cleaning area represented by a parent node of the child node, but the cleaning direction of the cleaning area represented by the child node is perpendicular to the reference direction.

It should be noted that, every time the cleaning robot 100 redivides the cleaning area, the cleaning direction is reset according to the above method.

S5610: based on the cleaning direction, setting, by the cleaning robot 100, a cleaning starting point for the at least one cleaning area.

S5611: starting from the cleaning starting point in unit of a cleaning area, performing, by the cleaning robot 100, cleaning operations on the at least one cleaning area of the space to be cleaned according to the cleaning direction and the cleaning sequence.

Steps S5601-S5611 are the same as steps S2301-S2311, respectively, and will not be repeated here.

S5612: in response to the cleaning robot 100 encountering an obstacle during the cleaning operations, in a determination that the obstacle crosses at least two cleaning areas, and a crossing distance of the obstacle is greater than a first threshold, acquiring, by the cleaning robot 100, a second space map of the uncleaned area in the space to be cleaned, and taking the second space map as the first space map.

When the cleaning robot 100 encounters an obstacle during the cleaning operation, the cleaning robot 100 first moves around the obstacle, and at the same time the cleaning component cleans the ground, so as to clean the ground around the edge of the obstacle. Since the first space map acquired in step S5601 by the cleaning robot 100 often does not include obstacle information, the cleaning robot 100 can detect obstacles through the sensors provided on the cleaning robot 100 during the cleaning process. In particular, the obstacle information can only be fully detected after the obstacle is surrounded. The obstacle information mainly includes a crossing distance and a coverage area of the obstacle.

When the obstacle encountered by the cleaning robot 100 crosses at least two cleaning areas, and a crossing distance of the obstacle is greater than a first threshold, the cleaning robot 100 determines the second space map based on the first space map, a coverage area of the obstacle, and the cleaned area, and take the second space map as the first space map, where the second space map is a space map corresponding to an uncleaned area after removing the coverage area of the obstacle and the cleaned area from the space to be cleaned. The cleaning robot 100 takes the second space map as the first space map.

S5613: based on the first space map, scanning, by the cleaning robot 100, the first space map through the vertical scan lines to divide the space to be cleaned into at least one cleaning area.

In this step, the cleaning robot 100 redivides the cleaning area based on the first space map. When the cleaning robot 100 redivides the cleaning area, the horizontal scan lines and the vertical scan lines are alternately used. The scan lines used by the cleaning robot 100 in step S5613 are different from the scan lines used by the cleaning robot 100 in step S5603. In the embodiments of this disclosure, in step S5603, the cleaning robot 100 scans the first space map through the horizontal scan lines, then in step S5612, the cleaning robot 100 encounters an obstacle and redivides the cleaning area, the cleaning robot 100 scans the first space map through the vertical scan lines. When the cleaning robot 100 encounters an obstacle again in the process of performing the cleaning operation, the cleaning robot 100 scans the redetermined first space map through the horizontal scan lines. Therefore, the cleaning robot 100 may divide the cleaning area one or more times when cleaning the space to be cleaned.

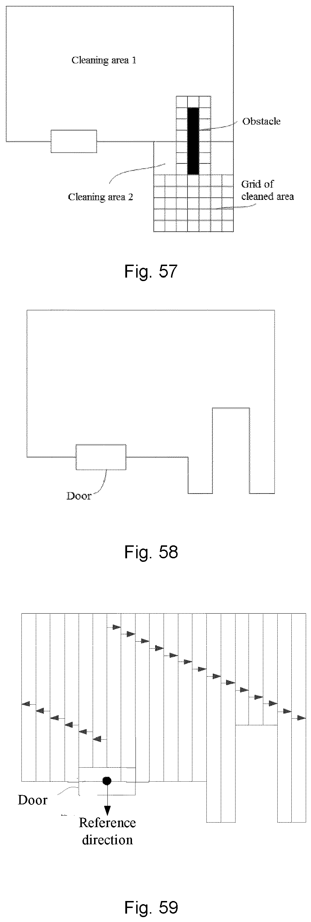

When the first space map is the space map shown in Fig. 24, after the cleaning robot 100 scans the first space map through the horizontal scan lines to obtain the cleaning area as shown in Fig. 27, the cleaning robot 100 performs cleaning operations on the cleaning area as shown in Fig. 27. When the cleaning robot 100 encounters an obstacle during the cleaning operation of the cleaning area 2, the cleaning robot 100 determines the second space map of the uncleaned area in the space to be cleaned. Referring to Fig. 57, the cleaning robot 100 takes the second space map as the first space map. Referring to Fig. 58, the first space map shown in Fig. 58 is determined by the cleaning robot 100 according to the space map shown in Fig. 57. The cleaning robot 100 scans the first space map shown in Fig. 58 through the vertical scan lines, see Fig. 59.

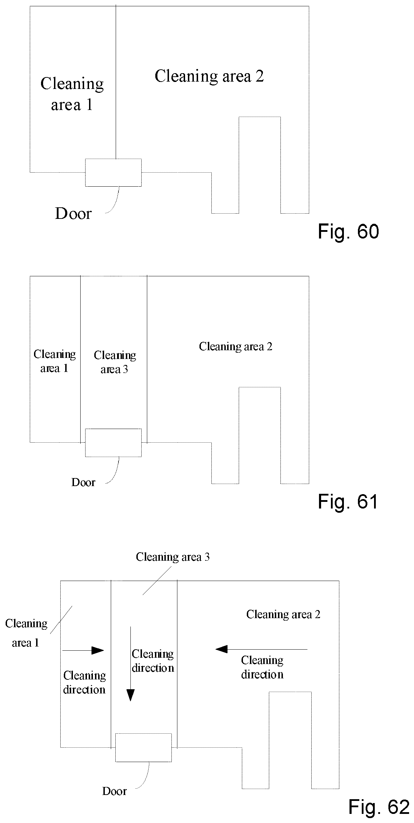

After the cleaning robot 100 scans the first space map through the vertical scan lines, it can directly merge the areas scanned in the same direction to obtain multiple cleaning areas; or the cleaning robot 100 sets a cleaning area in front of the reference object, one end of the cleaning area is connected with the reference object, the other end reaches the edge of the first space map, and then the cleaning robot 100 takes a position where lengths of the vertical scan lines are segmented by the first space map and the edge of the first space map as the boundary, and merges the areas scanned in the same direction to obtain multiple cleaning areas. Referring to Fig. 60, Fig. 60 is a schematic diagram of multiple cleaning areas obtained by merging in the same direction of the cleaning robot 100 directly scanning the first space map through the vertical scan lines shown in Fig. 59. Referring to Fig. 61, Fig. 61 is a schematic diagram of multiple cleaning areas obtained by merging the areas scanned in the same direction after the cleaning robot 100 first setting a cleaning area in front of the door.

After the cleaning robot 100 redivides the cleaning area, it resets a cleaning direction to the redivided cleaning area. For the cleaning area represented by the top node, the cleaning direction is the same as the reference direction. For any child node of a non-top node, a cleaning direction of a cleaning area represented by the child node points to a cleaning area represented by a parent node of the child node, and the cleaning direction of the cleaning area represented by the child node is perpendicular to the reference direction.

For example, for the multiple cleaning areas shown in Fig. 61, cleaning area 3 is the cleaning area represented by the top node, and the cleaning direction of the cleaning area is vertical downward; and cleaning area 1 and cleaning area 2 are cleaning areas represented by child nodes of the top node, and the cleaning directions of these two cleaning areas all point to the cleaning area 3, see Fig. 62.

In the embodiments of this disclosure, if the cleaning robot 100 does not redivide the cleaning area, after the cleaning robot 100 cleans the ground around the obstacle, the layout of the cleaning area crossed by the obstacle is likely to change, resulting in cleaning oscillations, so that the cleaning robot 100 turns back and forth for cleaning to pollute the cleaned area, resulting in low cleaning efficiency. Therefore, the cleaning robot 100 needs to redivide the cleaning area each time after encountering an obstacle.

In order to facilitate the understanding of the necessity of the cleaning robot 100 to redivide the cleaning area in a determination that the cleaning robot 100 encounters an obstacle and the crossing distance of the obstacle is greater than the first threshold, the embodiments of this disclosure also describe a situation where the cleaning robot 100 does not redivide the cleaning area when encountering an obstacle.

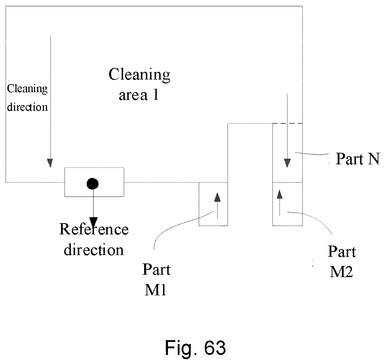

Referring to Fig. 63. Fig. 63 is a space map corresponding to an uncleaned area after removing the coverage area of the obstacle and the cleaned cleaning area shown in Fig. 57. The space map includes cleaning area 1 and cleaning area 2. Cleaning area 2 is divided into two parts by the obstacle: part M1 and part M2. Part N is generated in cleaning area 1. The generation of part M1, part M2, and part N may cause cleaning oscillations and contaminate the cleaned cleaning area.

If the cleaning robot 100 does not redivide the cleaning area, for example, in the process of the cleaning robot 100 performing a cleaning operation on the part M2 in the cleaning area 2, when the cleaning robot 100 needs to go back to the base station for charging or cleaning the cleaning component, after the cleaning robot 100 returns back from the base station, since the original setting rule is: for a cleaning area, the cleaning robot 100 moves along a sidewinding trajectory, and cleans from deep to shallow perpendicular to the cleaning direction. The cleaning direction of the cleaning area 2 points to the cleaning area 1 and is parallel to the reference direction. When the cleaning robot 100 performs a cleaning operation on the cleaning area 2, it moves along a sidewinding trajectory. The sidewinding trajectory gradually advances from deep to shallow in the cleaning direction and turns back and forth in a direction perpendicular to the cleaning direction. Before the cleaning robot 100 moves to the base station, because the cleaning robot 100 has already cleaned part of the area of part M2, after the cleaning robot 100 returns from the base station, the cleaning area 2 moves along the sidewinding trajectory, a deepest part in the direction perpendicular to the cleaning direction is at the part M1, so the cleaning robot 100 will reselect the cleaning starting point, first go to the part M1 of the cleaning area 2, and perform cleaning along the sidewinding trajectory perpendicular to the cleaning direction. In this way, the cleaning robot 100 may alternately clean between the part M1 and part M2, causing cleaning oscillations and low cleaning efficiency. Or the cleaning robot 100 first cleans the part M2, then moves to the part M1 for cleaning. Then the cleaning robot 100 moves to the part N for cleaning, and the cleaning robot 100 turns back and forth, which will also cause cleaning oscillations and low cleaning efficiency.

In addition, for the cleaning area 1, the cleaning robot 100 may also generate cleaning oscillations between the part N and other cleaning areas in the cleaning area 1 except the part N. When the cleaning robot 100 finishes cleaning the part N, the cleaning robot 100 needs to move back to avoid obstacles or walls, and then clean other cleaning areas in the cleaning area 1 except the part N. At this time, it may pass through the cleaned cleaning area, causing dirty cleaning components to contaminate the cleaned cleaning area.

Therefore, in the embodiments of this disclosure, as long as the obstacle encountered by the cleaning robot 100 crosses at least two cleaning areas, and the crossing distance is greater than the first threshold, the cleaning robot 100 redivides the cleaning area. Where, the horizontal scan lines and the vertical scan lines are used alternately, and the cleaning direction may change due to the change of the scan line direction. Therefore, the cleaning robot 100 may divide the cleaning area one or more times when cleaning the space to be cleaned.

In summary, when the cleaning robot 100 encounters an obstacle during the cleaning operation, but the crossing distance of the obstacle is not greater than the first threshold, the cleaning robot 100 continues to perform the cleaning operation according to the cleaning direction and cleaning sequence; when the robot 100 encounters an obstacle, and the crossing distance of the obstacle is greater than the first threshold, the cleaning robot 100 needs to redivide the cleaning area, and reset the cleaning sequence, cleaning direction, and cleaning starting point based on the redivided cleaning area, and takes the redivided cleaning area as a unit, starts from the redivided cleaning starting point and performs cleaning operation on the cleaning area of the space to be cleaned according to the redivided cleaning direction and the redivided cleaning sequence.

S5614: performing, by the cleaning robot 100, step S5604 based on the at least one cleaning area.

In this step, the cleaning robot 100 performs step S5604 based on the redivided at least one cleaning area to reset the node representing each cleaning area, which will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned cleaning area that has been cleaned when it moves to the area where the base station is located for charging or cleaning a cleaning component, thereby enhancing the cleaning effect and improving the cleaning efficiency.

### Embodiment 11

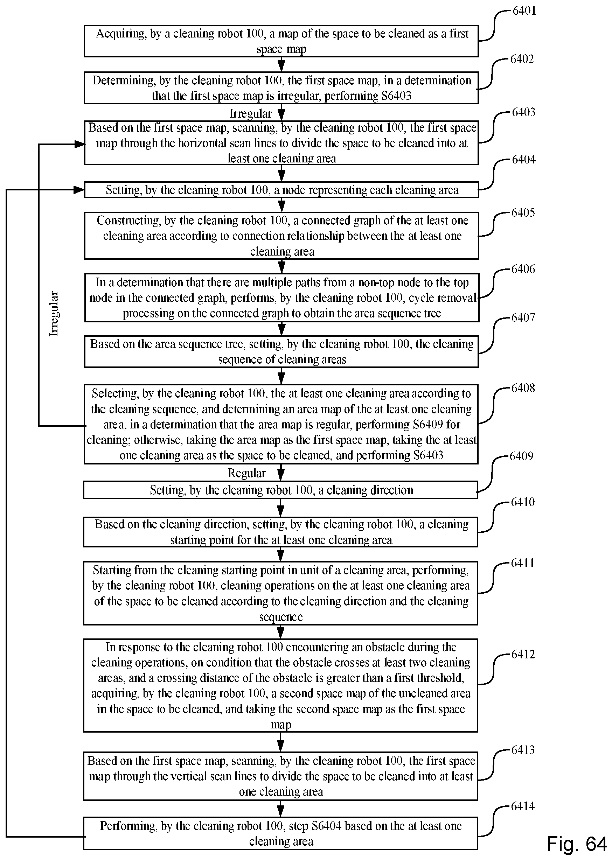

An embodiment of this disclosure provides a cleaning control method. Referring to Fig. 64, in an embodiment of this disclosure, a situation in which the space to be cleaned is a room unit, the room unit is an irregular room unit, the cleaning robot 100 first scans the first space map through horizontal scan lines to divide the space to be cleaned into at least one cleaning area; when encountering an obstacle during performing a cleaning operation on the cleaning area of the space to be cleaned, scans a redetermined first space map through vertical scan lines to redivide the space to be cleaned into at least one cleaning area, and performs cycle removal processing on a cyclic connected graph to obtain an area sequence tree, sets a cleaning sequence according to the area sequence tree is described as an example, and the method includes:
S6401: acquiring, by a cleaning robot 100, a map of the space to be cleaned as a first space map.

S6402: determining, by the cleaning robot 100, the first space map, in a determination that the first space map is irregular, performing S6403.

S6403: based on the first space map, scanning, by the cleaning robot 100, the first space map through the horizontal scan lines to divide the space to be cleaned into at least one cleaning area.

S6404: setting, by the cleaning robot 100, a node representing each cleaning area.

S6405: constructing, by the cleaning robot 100, a connected graph of the at least one cleaning area according to connection relationship between the at least one cleaning area.

S6406: in a determination that there are multiple paths from a non-top node to the top node in the connected graph, performs, by the cleaning robot 100, cycle removal processing on the connected graph to obtain the area sequence tree.

S6407: based on the area sequence tree, setting, by the cleaning robot 100, the cleaning sequence of cleaning areas.

S6408: selecting, by the cleaning robot 100, the at least one cleaning area according to the cleaning sequence, and determining an area map of the at least one cleaning area, in a determination that the area map is regular, performing S6409 for cleaning; otherwise, taking the area map as the first space map, taking the at least one cleaning area as the space to be cleaned, and performing S6403.

S6409: setting, by the cleaning robot 100, a cleaning direction.

S6410: based on the cleaning direction, setting, by the cleaning robot 100, a cleaning starting point for the at least one cleaning area.

S6411: starting from the cleaning starting point in unit of a cleaning area, performing, by the cleaning robot 100, cleaning operations on the at least one cleaning area of the space to be cleaned according to the cleaning direction and the cleaning sequence.

Steps S6401-S6411 are the same as steps S3401-S3411, respectively, and will not be repeated here.

S6412: in response to the cleaning robot 100 encountering an obstacle during the cleaning operations, in a determination that the obstacle crosses at least two cleaning areas, and a crossing distance of the obstacle is greater than a first threshold, acquiring, by the cleaning robot 100, a second space map of the uncleaned area in the space to be cleaned, and taking the second space map as the first space map.

S6413: based on the first space map, scanning, by the cleaning robot 100, the first space map through the vertical scan lines to divide the space to be cleaned into at least one cleaning area.

S6414: performing, by the cleaning robot 100, step S6404 based on the at least one cleaning area.

Steps S6412-S6414 are the same as steps S5612-S5614, respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned cleaning area that has been cleaned when it moves to the area where the base station is located for charging or cleaning a cleaning component, thereby enhancing the cleaning effect and improving the cleaning efficiency.

### Embodiment 12

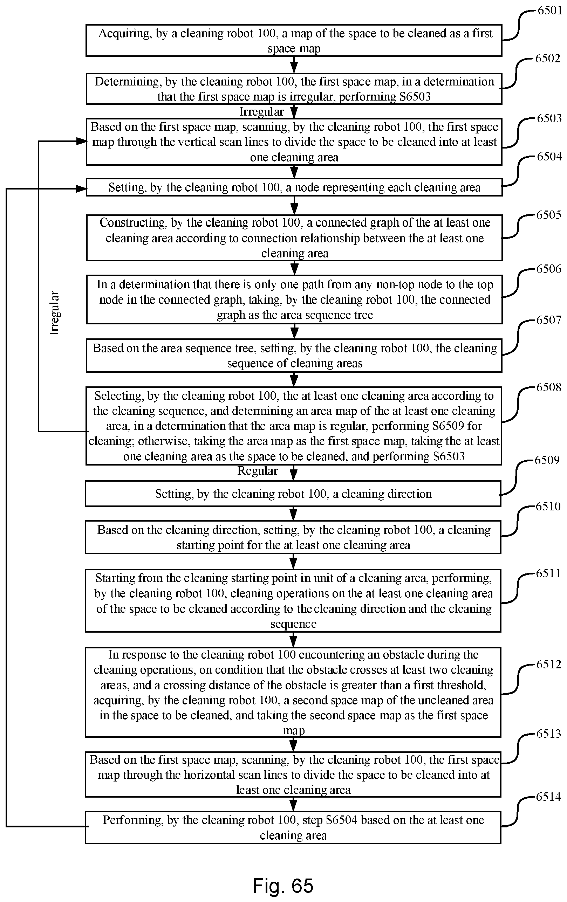

An embodiment of this disclosure provides a cleaning control method. Referring to Fig. 65, in an embodiment of this disclosure, a situation in which the space to be cleaned is a room unit, the room unit is an irregular room unit, the cleaning robot 100 first scans the first space map through vertical scan lines to divide the space to be cleaned into at least one cleaning area; when encountering an obstacle during performing a cleaning operation on the cleaning area of the space to be cleaned, scans a redetermined first space map through horizontal scan lines to redivide the space to be cleaned into at least one cleaning area, and directly takes an acyclic connected graph as an area sequence tree, sets a cleaning sequence according to the area sequence tree is described as an example, and the method includes:
S6501: acquiring, by a cleaning robot 100, a map of the space to be cleaned as a first space map.

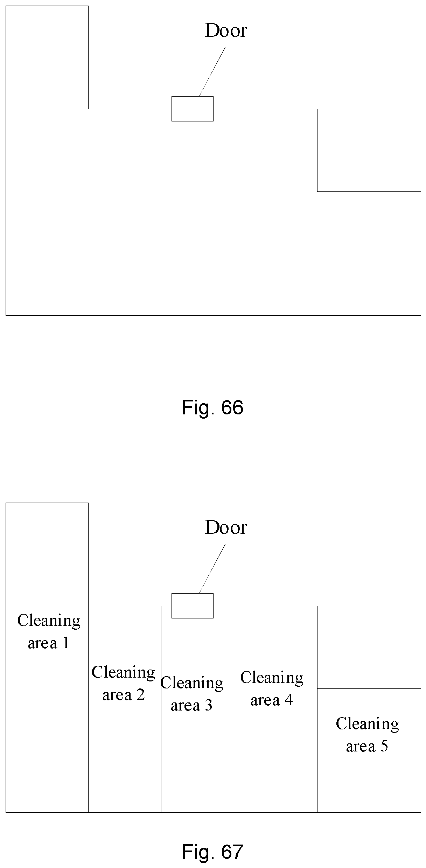

For example, the first space map acquired by the cleaning robot 100 is the space map shown in Fig. 66.

This step is the same as step S2301 and will not be repeated here.

S6502: determining, by the cleaning robot 100, the first space map, in a determination that the first space map is irregular, performing S6503.

This step is the same as step S6502, and will not be repeated here.

S6503: based on the first space map, scanning, by the cleaning robot 100, the first space map through the vertical scan lines to divide the space to be cleaned into at least one cleaning area.

For example, when the first space map acquired by the cleaning robot 100 is the space map shown in Fig. 66, after the cleaning robot 100 scans the first space map through the vertical scan lines, the at least one cleaning area divided by the space to be cleaned can be seen in Fig. 67.

The remaining steps are the same as step S4003, and will not be repeated here.

S6504: setting, by the cleaning robot 100, a node representing each cleaning area.

This step is the same as step S4004, and will not be repeated here.

S6505: constructing, by the cleaning robot 100, a connected graph of the at least one cleaning area according to connection relationship between the at least one cleaning area.

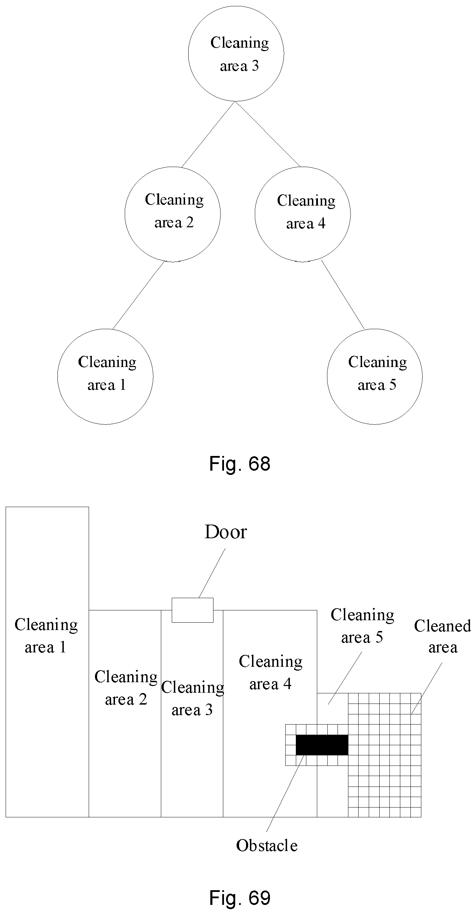

For example, for the cleaning areas shown in Fig. 67, the connection graph obtained by the cleaning robot 100 according to the connection relationship between the cleaning areas can be seen in Fig. 68.

The remaining steps are the same as step S4005, and will not be repeated here.

S6506: in a determination that there is only one path from any non-top node to the top node in the connected graph, taking, by the cleaning robot 100, the connected graph as the area sequence tree.

This step is the same as step S4006, and will not be repeated here.

S6507: based on the area sequence tree, setting, by the cleaning robot 100, the cleaning sequence of cleaning areas.

For example, when the connected graph acquired by the cleaning robot 100 is the connected graph shown in Fig. 68, the cleaning robot 100 determines that the node representing the cleaning area 3 is the top node, and the node representing the cleaning area 2 and the node representing the cleaning area 4 are both the child nodes of the top node, where the node representing cleaning area 1 is a child node of the node representing cleaning area 2, and the node representing cleaning area 5 is a child node of the node representing cleaning area 4. Therefore, the cleaning sequence determined by the cleaning robot 100 is cleaning area 5, cleaning area 4, cleaning area 1, cleaning area 2, cleaning area 3; or cleaning area 1, cleaning area 2, cleaning area 5, cleaning area 4, and cleaning area 3.

The remaining steps are the same as step S4007, and will not be repeated here.

S6508: selecting, by the cleaning robot 100, the at least one cleaning area according to the cleaning sequence, and determining an area map of the at least one cleaning area, in a determination that the area map is regular, performing S6509 for cleaning; otherwise, taking the area map as the first space map, taking the at least one cleaning area as the space to be cleaned, and performing S6503.

S6509: setting, by the cleaning robot 100, a cleaning direction.

S6510: based on the cleaning direction, setting, by the cleaning robot 100, a cleaning starting point for the at least one cleaning area.

S6511: starting from the cleaning starting point in unit of a cleaning area, performing, by the cleaning robot 100, cleaning operations on the at least one cleaning area of the space to be cleaned according to the cleaning direction and the cleaning sequence.

Steps S6508-S6511 are the same as steps S4008-S4011 respectively, and will not be repeated here.

S6512: in response to the cleaning robot 100 encountering an obstacle during the cleaning operations, in a determination that the obstacle crosses at least two cleaning areas, and a crossing distance of the obstacle is greater than a first threshold, acquiring, by the cleaning robot 100, a second space map of the uncleaned area in the space to be cleaned, and taking the second space map as the first space map.

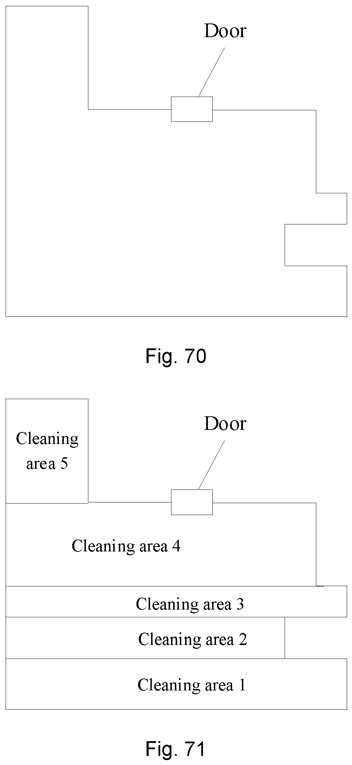

For example, the cleaning robot 100 encounters an obstacle during the cleaning operation of the multiple cleaning areas shown in Fig. 67. When the obstacle crosses the cleaning area 4 and the cleaning area 5, and the crossing distance of the obstacle is greater than the first threshold, referring to Fig. 69, the cleaning robot 100 acquires a second space map of the uncleaned cleaning area, and takes the second space map as the first space map, see Fig. 70.

Step S6512 is the same as step S5612, and will not be repeated here.

S6513: based on the first space map, scanning, by the cleaning robot 100, the first space map through the horizontal scan lines to divide the space to be cleaned into at least one cleaning area.

For example, for the space map shown in Fig. 70, the cleaning robot 100 scans through horizontal scan lines, and the multiple cleaning areas obtained can be seen in Fig. 71.

The remaining steps are the same as the step of the cleaning robot 100 scanning the first space map through the horizontal scan lines in step S2303, and will not be repeated here.

S6514: performing, by the cleaning robot 100, step S6504 based on the at least one cleaning area.

Step S6514 is the same as step S5614, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned cleaning area that has been cleaned when it moves to the area where the base station is located for charging or cleaning a cleaning component, thereby enhancing the cleaning effect and improving the cleaning efficiency.

### Embodiment 13

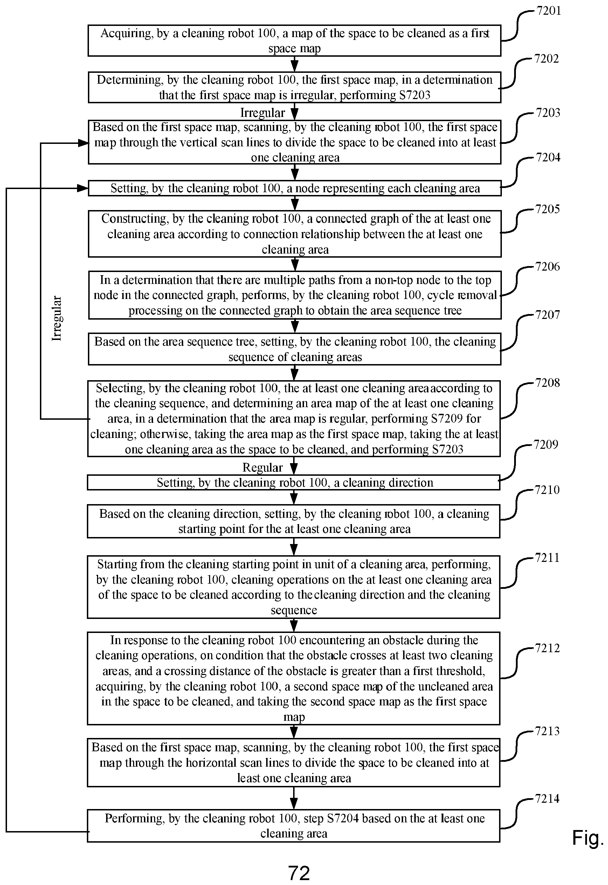

An embodiment of this disclosure provides a cleaning control method. Referring to Fig. 72, in an embodiment of this disclosure, a situation in which the space to be cleaned is a room unit, the room unit is an irregular room unit, the cleaning robot 100 first scans the first space map through vertical scan lines to redivide the space to be cleaned into at least one cleaning area; when encountering an obstacle during performing a cleaning operation on the cleaning area of the space to be cleaned, scans a redetermined first space map through horizontal scan lines to redivide the space to be cleaned into at least one cleaning area, and performs cycle removal processing on a cyclic connected graph to obtain an area sequence tree, sets a cleaning sequence according to the area sequence tree is described as an example, and the method includes:
S7201: acquiring, by a cleaning robot 100, a map of the space to be cleaned as a first space map.

S7202: determining, by the cleaning robot 100, the first space map, in a determination that the first space map is irregular, performing S7203.

S7203: based on the first space map, scanning, by the cleaning robot 100, the first space map through the vertical scan lines to divide the space to be cleaned into at least one cleaning area.

S7204: setting, by the cleaning robot 100, a node representing each cleaning area.

S7205: constructing, by the cleaning robot 100, a connected graph of the at least one cleaning area according to connection relationship between the at least one cleaning area.

S7206: in a determination that there are multiple paths from a non-top node to the top node in the connected graph, performs, by the cleaning robot 100, cycle removal processing on the connected graph to obtain the area sequence tree.

S7207: based on the area sequence tree, setting, by the cleaning robot 100, the cleaning sequence of cleaning areas.

S7208: selecting, by the cleaning robot 100, the at least one cleaning area according to the cleaning sequence, and determining an area map of the at least one cleaning area, in a determination that the area map is regular, performing S7209 for cleaning; otherwise, taking the area map as the first space map, taking the at least one cleaning area as the space to be cleaned, and performing S7203.

S7209: setting, by the cleaning robot 100, a cleaning direction.

S7210: based on the cleaning direction, setting, by the cleaning robot 100, a cleaning starting point for the at least one cleaning area.

S7211: starting from the cleaning starting point in unit of a cleaning area, performing, by the cleaning robot 100, cleaning operations on the at least one cleaning area of the space to be cleaned according to the cleaning direction and the cleaning sequence.

Steps S7201-S7211 are the same as steps S4601-S4611 respectively, and will not be repeated here.

S7212: in response to the cleaning robot 100 encountering an obstacle during the cleaning operations, in a determination that the obstacle crosses at least two cleaning areas, and a crossing distance of the obstacle is greater than a first threshold, acquiring, by the cleaning robot 100, a second space map of the uncleaned area in the space to be cleaned, and taking the second space map as the first space map.

S7213: based on the first space map, scanning, by the cleaning robot 100, the first space map through the horizontal scan lines to divide the space to be cleaned into at least one cleaning area.

S7214: performing, by the cleaning robot 100, step S7204 based on the at least one cleaning area.

Steps S7212-S7214 are the same as steps S6512-S6514 respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned cleaning area that has been cleaned when it moves to the area where the base station is located for charging or cleaning a cleaning component, thereby enhancing the cleaning effect and improving the cleaning efficiency.

### Embodiment 14

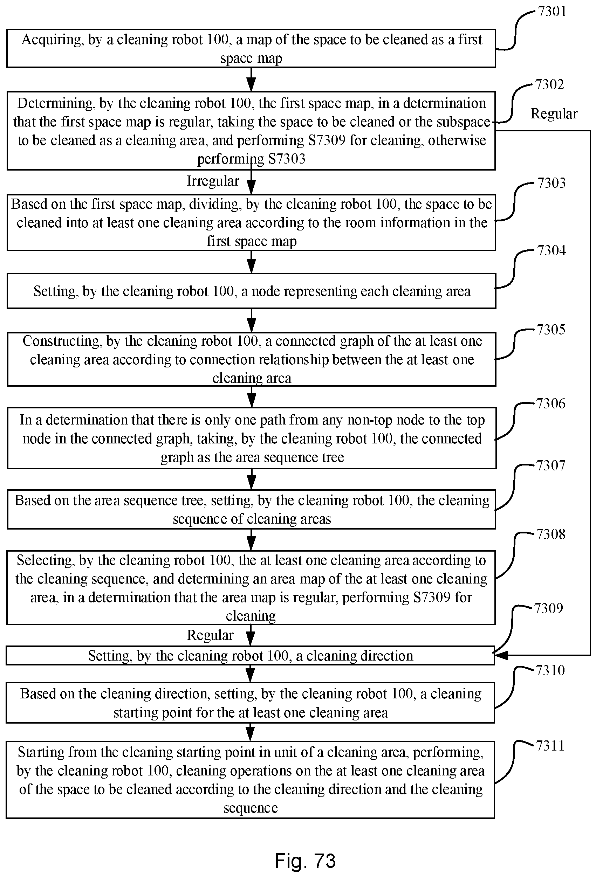

An embodiment of this disclosure provides a cleaning control method. Referring to Fig. 73, in an embodiment of this disclosure, a situation in which the space to be cleaned is multiple room units, each room unit of the multiple room units is a regular room unit, the cleaning robot 100 divides the space to be cleaned into at least one cleaning area according to the room information in the first space map, and directly takes an acyclic connected graph as an area sequence tree, sets a cleaning sequence according to the area sequence tree is described as an example, and the method includes:
S7301: acquiring, by a cleaning robot 100, a map of the space to be cleaned as a first space map.

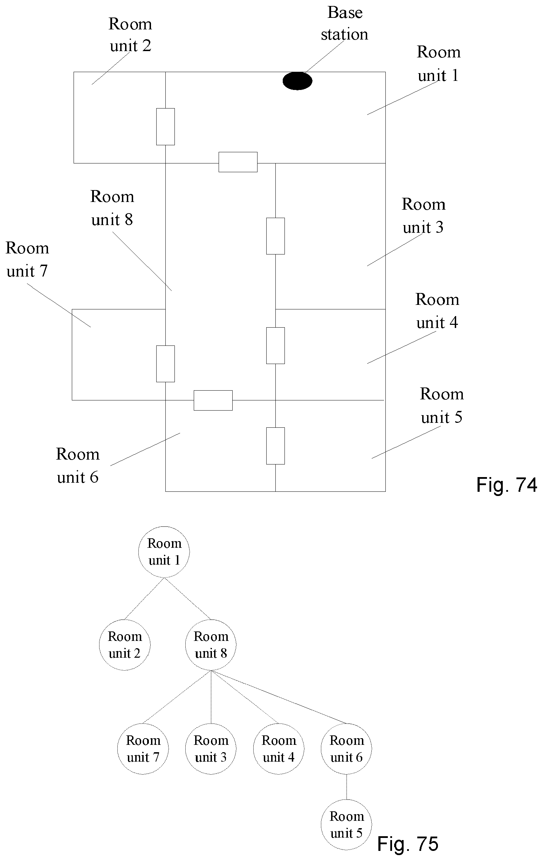

For example, the first space map acquired by the cleaning robot 100 is the space map shown in Fig. 74. There are multiple room units in the space map, namely room unit 1 to room unit 8, and every two room units are connected through the door.

This step is the same as step S2301 and will not be repeated here.

S7302: determining, by the cleaning robot 100, the first space map, in a determination that the first space map is regular, taking the space to be cleaned or the subspace to be cleaned as a cleaning area, and performing S7309 for cleaning, otherwise performing S7303.

Step S7302 is the same as step S2302, and will not be repeated here.

Step S7303: based on the first space map, dividing, by the cleaning robot 100, the space to be cleaned into at least one cleaning area according to the room information in the first space map.

The room information includes information such as a number of room units, area sizes of the room units, a door position of each room unit, an edge of each room unit, and connection relationship between the room units. The cleaning robot 100 can enter and exit the room unit through the door of the room unit, and can also enter other room units through the door of the room unit.

In this step, the space to be cleaned includes multiple room units. The cleaning robot 100 divides the space to be cleaned into at least one cleaning area according to the number of room units in the first space map, and one room unit is one cleaning area. For example, the first space map acquired by the cleaning robot 100 is the map shown in Fig. 74, and the first space map includes 8 room units, where the room unit where the base station is located is room unit 1. The cleaning robot 100 divides the space to be cleaned into 8 cleaning areas according to the room information of the 8 room units in the first space map, and one room unit is a cleaning area.

S7304: setting, by the cleaning robot 100, a node representing each cleaning area.

This step is the same as step 2304 and will not be repeated here.

S7305: constructing, by the cleaning robot 100, a connected graph of the at least one cleaning area according to connection relationship between the at least one cleaning area.

For example, for the multiple room units shown in Fig. 74, the cleaning robot 100 constructs a connection graph of the cleaning areas according to the connection relationship between the cleaning areas, see Fig. 75.

The remaining steps are the same as step S2305, and will not be repeated here.

S7306: in a determination that there is only one path from any non-top node to the top node in the connected graph, taking, by the cleaning robot 100, the connected graph as the area sequence tree.

This step is the same as step S2306, and will not be repeated here.
S7307: based on the area sequence tree, setting, by the cleaning robot 100, the cleaning sequence of cleaning areas.

For example, when the area sequence tree is the connected graph shown in Fig. 75, the cleaning robot 100 obtains the cleaning sequence of the multiple cleaning areas as: room unit 5, room unit 6, room unit 4, room unit 3, room unit 7, room unit 8, room unit 2, and finally room unit 1 where the base station is located.

The remaining steps are the same as step S2307, and will not be repeated here.

S7308: selecting, by the cleaning robot 100, the at least one cleaning area according to the cleaning sequence, and determining an area map of the at least one cleaning area, in a determination that the area map is regular, performing S7309 for cleaning.

For example, when the multiple cleaning areas divided by the cleaning robot 100 are the cleaning areas shown in Fig. 74, the cleaning robot 100 may take the connecting door between two adjacent cleaning areas as a reference object, determines the space map of each cleaning area, determines an area map rule corresponding to each cleaning area shown in Fig. 74, and performs step S7309 for cleaning.

The remaining steps are the same as step S1408, and will not be repeated here.

S7309: setting, by the cleaning robot 100, a cleaning direction.

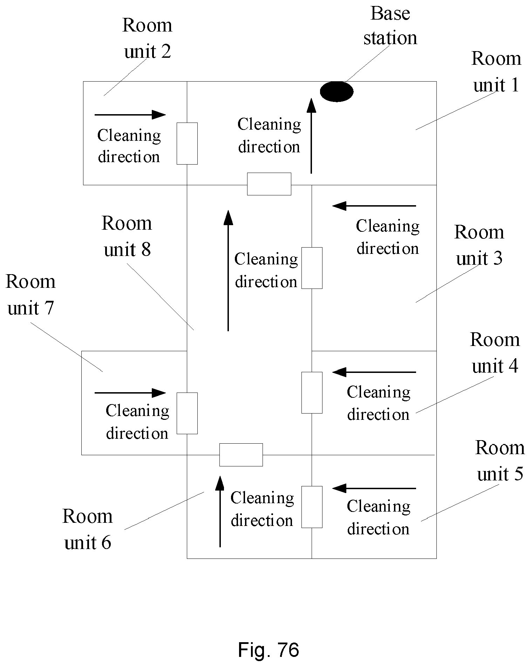

For example, the cleaning robot 100 sets a cleaning direction for each room unit shown in Fig. 74 based on the connection graph shown in Fig. 75. Referring to Fig. 76, since the node representing room unit 5 is a child node of the node representing room unit 6, the cleaning direction of room unit 5 points to room unit 6. Since the node representing room unit 6 and the node representing room unit 4, the node representing room unit 3 and the node representing room unit 7 are all child nodes of the node representing room unit 8, the cleaning direction of room unit 6, the cleaning direction of room unit 4, the cleaning direction of room unit 3, and the cleaning direction of room unit 7 all point to room unit 8. Since the node representing room unit 8 and the node representing room unit 2 are child nodes of the node representing room unit 1, the cleaning direction of room unit 8 and the cleaning direction of room unit 2 both point to room unit 1. There is a base station in room unit 1, and the base station can be taken as a reference object, and a direction vertically pointing to the base station can be taken as the reference direction. The node representing room unit 1 is the top node, and the cleaning direction of the top node is the same as the reference direction. Therefore, the cleaning direction of the room unit 1 is a direction vertically pointing to the base station.

S7310: based on the cleaning direction, setting, by the cleaning robot 100, a cleaning starting point for the at least one cleaning area.

This step is the same as step S2310, and will not be repeated here.

S7311: starting from the cleaning starting point in unit of a cleaning area, performing, by the cleaning robot 100, cleaning operations on the at least one cleaning area of the space to be cleaned according to the cleaning direction and the cleaning sequence.

This step is the same as step S2311, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned cleaning area that has been cleaned when it moves to the area where the base station is located for charging or cleaning a cleaning component, thereby enhancing the cleaning effect and improving the cleaning efficiency.

### Embodiment 15

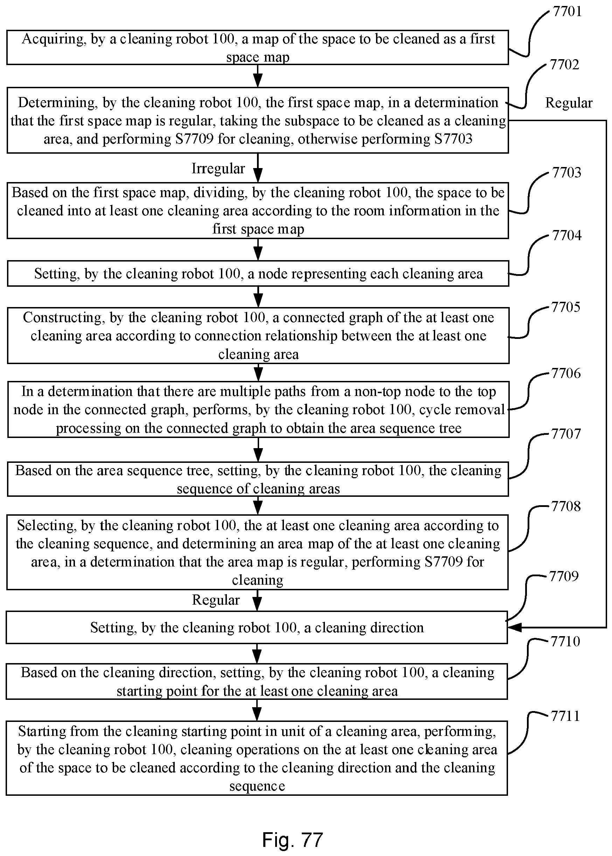

An embodiment of this disclosure provides a cleaning control method. Referring to Fig. 77, in an embodiment of this disclosure, a situation in which the space to be cleaned is multiple room units, each room unit of the multiple room units is a regular room unit, the cleaning robot 100 divides the space to be cleaned into at least one cleaning area according to the room information in the first space map, and performs cycle removal processing on a cyclic connected graph to obtain an area sequence tree, sets a cleaning sequence according to the area sequence tree is described as an example, and the method includes:
S7701: acquiring, by a cleaning robot 100, a map of the space to be cleaned as a first space map.

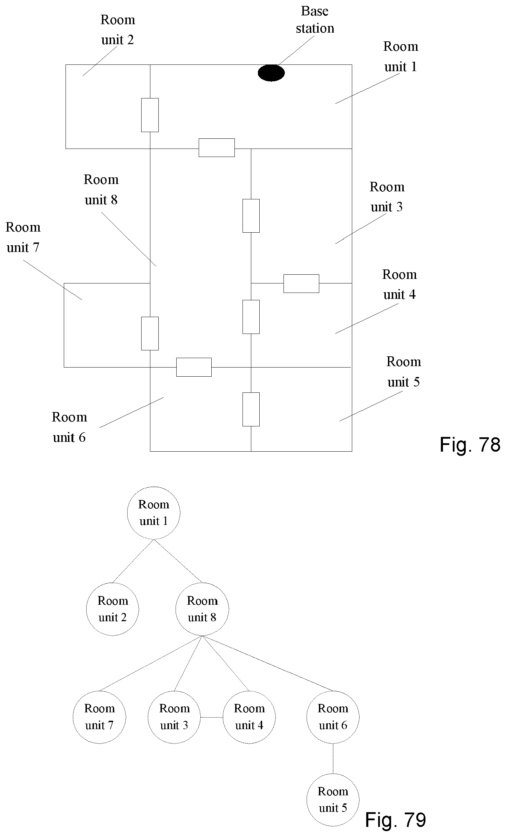

For example, the first space map acquired by the cleaning robot 100 is the space map shown in Fig. 78. The space map is similar to the space map shown in Fig. 74. There are also 8 room units, except that there is one more connecting door between room unit 3 and room unit 4, and the other room units are the same.

The remaining steps are the same as step S2301, and will not be repeated here.

S7702: determining, by the cleaning robot 100, the first space map, in a determination that the first space map is regular, taking the subspace to be cleaned as a cleaning area, and performing S7709 for cleaning, otherwise performing S7703.

S7703: based on the first space map, dividing, by the cleaning robot 100, the space to be cleaned into at least one cleaning area according to the room information in the first space map.

S7704: setting, by the cleaning robot 100, a node representing each cleaning area.

Steps S7702-S7704 are the same as steps S7302-S7304, respectively, and will not be repeated here.

S7705: constructing, by the cleaning robot 100, a connected graph of the at least one cleaning area according to connection relationship between the at least one cleaning area.

For example, for the multiple room units shown in Fig. 78, that is, multiple cleaning areas, the connected graph constructed by the cleaning robot 100 may refer to Fig. 79.

The remaining steps are the same as step S7305, and will not be repeated here.

S7706: in a determination that there are multiple paths from a non-top node to the top node in the connected graph, performs, by the cleaning robot 100, cycle removal processing on the connected graph to obtain the area sequence tree.

For example, when the connected graph obtained by the cleaning robot 100 is the connected graph shown in Fig. 79, the cleaning robot 100 performs cycle removal processing on the connected graph to obtain an acyclic connected graph, and the acyclic connected graph is taken as the area sequence tree. After the cleaning robot 100 performs cycle removal processing on the cyclic connected graph shown in Fig. 79, the obtained acyclic connected graph is the same as that in Fig. 75.

The remaining steps are the same as step S3406, and will not be repeated here.

S7707: based on the area sequence tree, setting, by the cleaning robot 100, the cleaning sequence of cleaning areas.

S7708: selecting, by the cleaning robot 100, the at least one cleaning area according to the cleaning sequence, and determining an area map of the at least one cleaning area, in a determination that the area map is regular, performing S7709 for cleaning.

S7709: setting, by the cleaning robot 100, a cleaning direction.

S7710: based on the cleaning direction, setting, by the cleaning robot 100, a cleaning starting point for the at least one cleaning area.

S7711: starting from the cleaning starting point in unit of a cleaning area, performing, by the cleaning robot 100, cleaning operations on the at least one cleaning area of the space to be cleaned according to the cleaning direction and the cleaning sequence.

Steps S7707-S7711 are the same as steps S7307-S7311 respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned cleaning area that has been cleaned when it moves to the area where the base station is located for charging or cleaning a cleaning component, thereby enhancing the cleaning effect and improving the cleaning efficiency.

### Embodiment 16

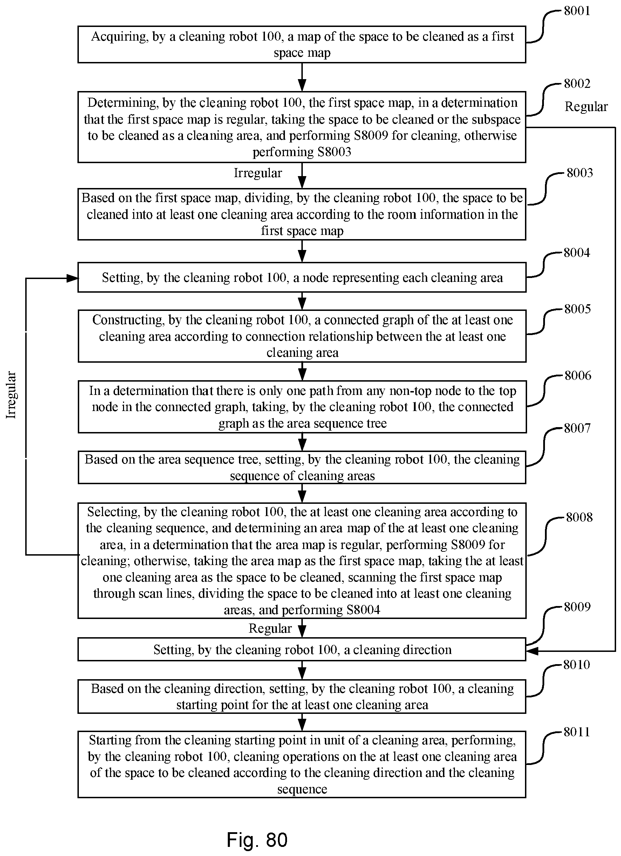

An embodiment of this disclosure provides a cleaning control method. Referring to Fig. 80, in an embodiment of this disclosure, a situation in which the space to be cleaned are multiple room units, there is an irregular room unit in the multiple room units, the cleaning robot 100 divides the space to be cleaned into at least one cleaning area according to the room information in the first space map, in a determination that there are one or more irregular area maps corresponding to the cleaning area in the divided cleaning areas, the cleaning robot 100 takes the cleaning area as the space to be cleaned, takes the area map as the first space map, scans the first space map by scan lines, divides the space to be cleaned into at least one cleaning area, and directly takes the acyclic connected graph as the area sequence tree, according to the area sequence tree, setting the cleaning sequence is described as an example, the method includes:
S8001: acquiring, by a cleaning robot 100, a map of the space to be cleaned as a first space map.

S8002: determining, by the cleaning robot 100, the first space map, in a determination that the first space map is regular, taking the space to be cleaned or the subspace to be cleaned as a cleaning area, and performing S8009 for cleaning, otherwise performing S8003.

S8003: based on the first space map, dividing, by the cleaning robot 100, the space to be cleaned into at least one cleaning area according to the room information in the first space map.

S8004: setting, by the cleaning robot 100, a node representing each cleaning area.

S8005: constructing, by the cleaning robot 100, a connected graph of the at least one cleaning area according to connection relationship between the at least one cleaning area.

S8006: in a determination that there is only one path from any non-top node to the top node in the connected graph, taking, by the cleaning robot 100, the connected graph as the area sequence tree.

S8007: based on the area sequence tree, setting, by the cleaning robot 100, the cleaning sequence of cleaning areas.

Steps S8001-S8007 are the same as steps S7301-S7307, respectively, and will not be repeated here.

S8008: selecting, by the cleaning robot 100, the at least one cleaning area according to the cleaning sequence, and determining an area map of the at least one cleaning area, in a determination that the area map is regular, performing S8009 for cleaning; otherwise, taking the area map as the first space map, taking the at least one cleaning area as the space to be cleaned, scanning the first space map through scan lines, dividing the space to be cleaned into at least one cleaning areas, and performing S8004.

In this step, for any cleaning area, in a determination that the area map corresponding to the cleaning area is regular, directly performing S8009 for cleaning; and in a determination that the area map corresponding to the cleaning area is irregular, the cleaning robot 100 takes the area map as the first space map, and takes the cleaning area as the space to be cleaned. The cleaning robot 100 may scan the first space map through horizontal scan lines, or scan the first space map through vertical scan lines, or scan the first space map through horizontal scan lines first, and then scan the first space map through vertical scan lines, or scan the first space map through the vertical scan lines first, and then scan the first space map through the horizontal scan lines. In the embodiments of this disclosure, this is not specifically limited.

Where, the step of the cleaning robot 100 scanning the first space map through the horizontal scan lines is the same as step S2303, and will not be repeated here. Where, the step of the cleaning robot 100 scanning the first space map through the vertical scan lines is the same as step S4003, and will not be repeated here. The steps of the cleaning robot 100 scanning the first space map through the horizontal scan lines first, and then scan the first space map through the vertical scan lines are the same as step S4703, and will not be repeated here. The steps of the cleaning robot 100 scanning the first space map through the vertical scan lines first, and then scan the first space map through the horizontal scan lines are the same as step S5203, and will not be repeated here.

S8009: setting, by the cleaning robot 100, a cleaning direction.

S8010: based on the cleaning direction, setting, by the cleaning robot 100, a cleaning starting point for the at least one cleaning area.

S8011: starting from the cleaning starting point in unit of a cleaning area, performing, by the cleaning robot 100, cleaning operations on the at least one cleaning area of the space to be cleaned according to the cleaning direction and the cleaning sequence.

Steps S8309-S8311 are the same as steps S2309-S2311 respectively, and will not be repeated here.

In the embodiments of this disclosure, in response to the cleaning robot 100 encountering an obstacle during the cleaning operations, in a determination that the obstacle crosses at least two cleaning areas, and a crossing distance of the obstacle is greater than a first threshold, acquiring, by the cleaning robot 100, a second space map of the uncleaned area in the space to be cleaned, and taking the second space map as the first space map. Based on the first space map, scanning, by the cleaning robot 100, the first space map through the scan lines to divide the space to be cleaned into at least one cleaning area. Performing, by the cleaning robot 100, step S8004 based on the at least one cleaning area. Where, after the cleaning robot 100 encounters an obstacle, the scan lines used are different from the scan lines used in step S8008. For example, in step S8008, in a determination that the area map is irregular, the cleaning robot 100 takes the area map as the first space map, when the first space map is scanned by the horizontal scan lines, the cleaning robot 100 can scan the first space map through vertical scan lines after encountering an obstacle. When the cleaning robot 100 scans the first space map through the vertical scan lines in step S8008, the cleaning robot 100 can scan the first space map through the horizontal scan lines after encountering an obstacle. In the embodiments of this disclosure, this is not specifically limited.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned cleaning area that has been cleaned when it moves to the area where the base station is located for charging or cleaning a cleaning component, thereby enhancing the cleaning effect and improving the cleaning efficiency.

### Embodiment 17

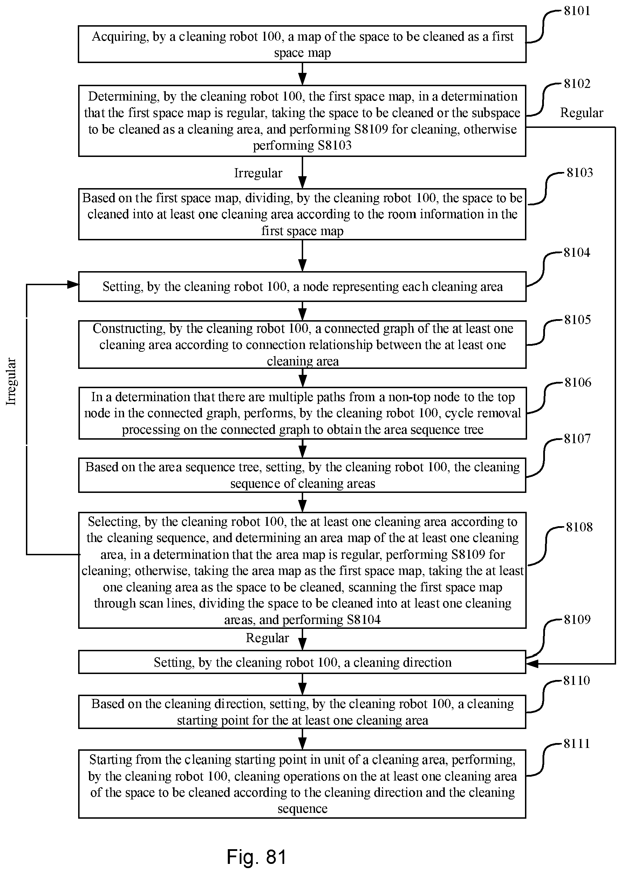

An embodiment of this disclosure provides a cleaning control method. Referring to Fig. 81, in an embodiment of this disclosure, a situation in which the space to be cleaned are multiple room units, there is an irregular room unit in the multiple room units, the cleaning robot 100 divides the space to be cleaned into at least one cleaning area according to the room information in the first space map, in a determination that there are one or more irregular area maps corresponding to the cleaning area in the divided cleaning areas, the cleaning robot 100 takes the cleaning area as the space to be cleaned, takes the area map as the first space map, scans the first space map by scan lines, divides the space to be cleaned into at least one cleaning area, and performs cycle removal processing on a cyclic connected graph to obtain an area sequence tree, according to the area sequence tree, setting the cleaning sequence is described as an example, the method includes:
S8101: acquiring, by a cleaning robot 100, a map of the space to be cleaned as a first space map.

S8102: determining, by the cleaning robot 100, the first space map, in a determination that the first space map is regular, taking the space to be cleaned or the subspace to be cleaned as a cleaning area, and performing S8109 for cleaning, otherwise performing S8103.

S8103: based on the first space map, dividing, by the cleaning robot 100, the space to be cleaned into at least one cleaning area according to the room information in the first space map.

S8104: setting, by the cleaning robot 100, a node representing each cleaning area.

S8105: constructing, by the cleaning robot 100, a connected graph of the at least one cleaning area according to connection relationship between the at least one cleaning area.

Steps S8101-S8105 are the same as steps S8001-S8005, respectively, and will not be repeated here.

S8106: in a determination that there are multiple paths from a non-top node to the top node in the connected graph, performs, by the cleaning robot 100, cycle removal processing on the connected graph to obtain the area sequence tree.

S8107: based on the area sequence tree, setting, by the cleaning robot 100, the cleaning sequence of cleaning areas.

Steps S8106-S8107 are the same as steps S3406-S3407 respectively, and will not be repeated here.

S8108: selecting, by the cleaning robot 100, the at least one cleaning area according to the cleaning sequence, and determining an area map of the at least one cleaning area, in a determination that the area map is regular, performing S8109 for cleaning; otherwise, taking the area map as the first space map, taking the at least one cleaning area as the space to be cleaned, scanning the first space map through scan lines, dividing the space to be cleaned into at least one cleaning areas, and performing S8104.

S8109: setting, by the cleaning robot 100, a cleaning direction.

S8110: based on the cleaning direction, setting, by the cleaning robot 100, a cleaning starting point for the at least one cleaning area.

S8111: starting from the cleaning starting point in unit of a cleaning area, performing, by the cleaning robot 100, cleaning operations on the at least one cleaning area of the space to be cleaned according to the cleaning direction and the cleaning sequence.

Steps S8108-S8111 are the same as steps S8008-S8011 respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned cleaning area that has been cleaned when it moves to the area where the base station is located for charging or cleaning a cleaning component, thereby enhancing the cleaning effect and improving the cleaning efficiency.

### Embodiment 18

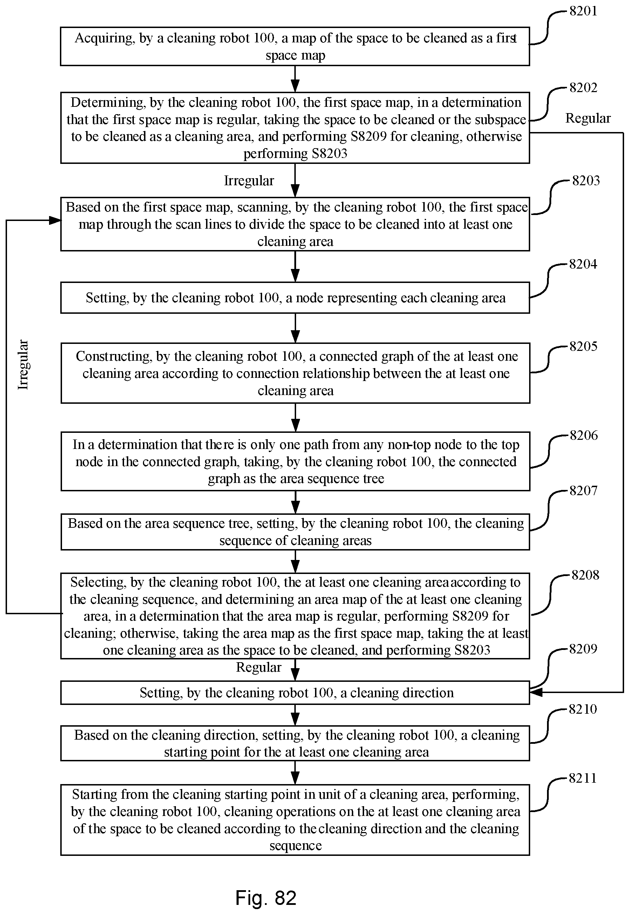

An embodiment of this disclosure provides a cleaning control method. Referring to Fig. 82, in an embodiment of this disclosure, a situation in which the space to be cleaned is a room area composed of multiple room units, the cleaning robot 100 scans the first space map through scan lines to divide the space to be cleaned into at least one cleaning area, and directly takes an acyclic connected graph as an area sequence tree, sets a cleaning sequence according to the area sequence tree is described as an example, and the method includes:
S8201: acquiring, by a cleaning robot 100, a map of the space to be cleaned as a first space map.

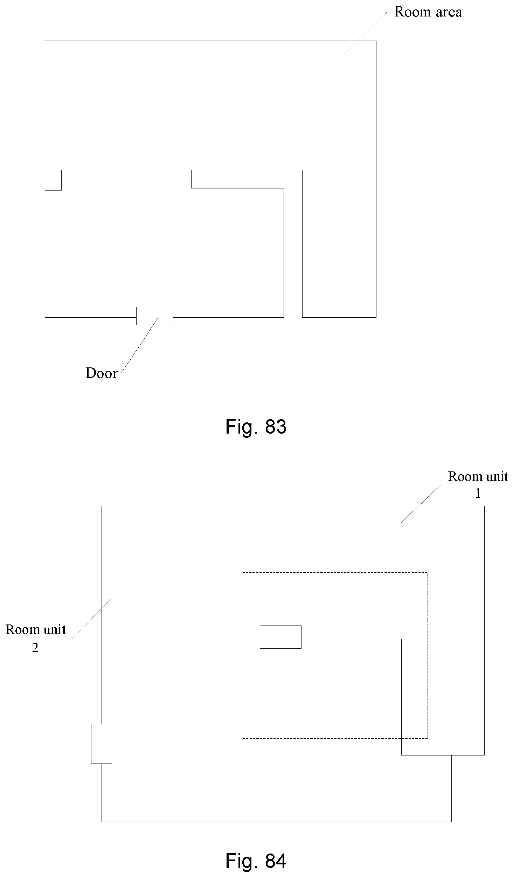

For example, the first space map acquired by the cleaning robot 100 is the map shown in Fig. 83, which is a room area composed of the room unit 1 and the room unit 2 in the map shown in Fig. 84.

The remaining steps are the same as step 2301, and will not be repeated here.

S8202: determining, by the cleaning robot 100, the first space map, in a determination that the first space map is regular, taking the space to be cleaned or the subspace to be cleaned as a cleaning area, and performing S8209 for cleaning, otherwise performing S8203.

This step is the same as step 2302 and will not be repeated here.

S8203: based on the first space map, scanning, by the cleaning robot 100, the first space map through the scan lines to divide the space to be cleaned into at least one cleaning area.

In this step, the cleaning robot 100 may scan the first space map through horizontal scan lines, or scan the first space map through vertical scan lines, or scan the first space map through horizontal scan lines first, and then scan the first space map through vertical scan lines, or scan the first space map through the vertical scan lines first, and then scan the first space map through the horizontal scan lines. In the embodiments of this disclosure, this is not specifically limited.

Where, the step of the cleaning robot 100 scanning the first space map through the horizontal scan lines is the same as step S2303, and will not be repeated here. Where, the step of the cleaning robot 100 scanning the first space map through the vertical scan lines is the same as step S4003, and will not be repeated here. The steps of the cleaning robot 100 scanning the first space map through the horizontal scan lines first, and then scan the first space map through the vertical scan lines are the same as step S4703, and will not be repeated here. The steps of the cleaning robot 100 scanning the first space map through the vertical scan lines first, and then scan the first space map through the horizontal scan lines are the same as step S5203, and will not be repeated here.

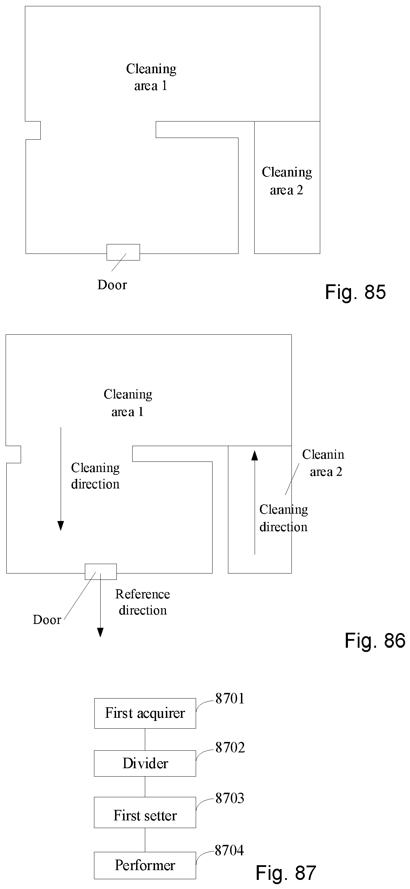

When the first space map acquired by the cleaning robot 100 is the map shown in Fig. 83, after the cleaning robot scans the first space map through the horizontal scan lines, the multiple cleaning areas obtained can be seen in Fig. 85.

S8204: setting, by the cleaning robot 100, a node representing each cleaning area.

S8205: constructing, by the cleaning robot 100, a connected graph of the at least one cleaning area according to connection relationship between the at least one cleaning area.

S8206: in a determination that there is only one path from any non-top node to the top node in the connected graph, taking, by the cleaning robot 100, the connected graph as the area sequence tree.

S8207: based on the area sequence tree, setting, by the cleaning robot 100, the cleaning sequence of cleaning areas.

S8208: selecting, by the cleaning robot 100, the at least one cleaning area according to the cleaning sequence, and determining an area map of the at least one cleaning area, in a determination that the area map is regular, performing S8209 for cleaning; otherwise, taking the area map as the first space map, taking the at least one cleaning area as the space to be cleaned, and performing S8203.

Steps S8204-S8208 are the same as steps S2304-S2308 respectively, and will not be repeated here.

S8209: setting, by the cleaning robot 100, a cleaning direction.

For example, the cleaning direction set by the cleaning robot 100 to the cleaning area shown in Fig. 85 may refer to Fig. 86.

The remaining steps are the same as step S2309, and will not be repeated here.

S8210: based on the cleaning direction, setting, by the cleaning robot 100, a cleaning starting point for the at least one cleaning area.

S8211: starting from the cleaning starting point in unit of a cleaning area, performing, by the cleaning robot 100, cleaning operations on the at least one cleaning area of the space to be cleaned according to the cleaning direction and the cleaning sequence.

Steps S8210-S8211 are the same as steps S2310-S2311 respectively, and will not be repeated here.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned cleaning area that has been cleaned when it moves to the area where the base station is located for charging or cleaning a cleaning component, thereby enhancing the cleaning effect and improving the cleaning efficiency.

Some embodiments of this disclosure provides a cleaning control apparatus. Referring to Fig. 87, the apparatus is applied when cleaning an unknown space to be cleaned by a cleaning robot 100, where the apparatus is used in conjunction with a base station, the base station is a cleaning device cooperated with the cleaning robot 100, the space to be cleaned includes an entrance/exit, and the base station or the entrance/exit is configured as a reference object, and the apparatus includes:
a first acquirer 8701 configured for acquiring a map of the space to be cleaned as a first space map, where the first space map is configured to indicate the space to be cleaned or a subspace to be cleaned in the space to be cleaned, and the subspace to be cleaned is an uncleaned area in the space to be cleaned;
a divider 8702 configured for based on the first space map, dividing the space to be cleaned into at least one cleaning area, where an entrance/exit is provided between two adjacent and connected cleaning areas;
a first setter 8703 configured for setting a cleaning sequence for the at least one cleaning area 8703, where the cleaning sequence satisfies that any path from an entrance/exit of any cleaning area to the reference object is not allowed to pass through other cleaning area that has been cleaned; and
an performer 8704 configured for sequentially performing cleaning operations on the at least one cleaning area of the space to be cleaned according to the cleaning sequence in unit of a cleaning area.

In a possible implementation manner, the apparatus further includes:
a determiner configured for determining the first space map, in a determination that the first space map is regular, taking the space to be cleaned or the subspace to be cleaned as a cleaning area, and performing setting a cleaning direction and a cleaning starting point for the cleaning area, and performing a cleaning operation on the cleaning area of the space to be cleaned, otherwise, based on the first space map, dividing the space to be cleaned into at least one cleaning area, where the first space map being regular is defined as: there is at least one path from any point in the first space map to the reference object, and the at least one path includes no movement path tending to an opposite direction to a reference direction, where the reference direction is a direction in which any point in the space to be cleaned or the subspace to be cleaned points to the reference object, and a connection line area between the point and the reference object does not pass through an obstacle.

In another possible implementation manner, the performer 8704 is further configured for setting a cleaning direction for the at least one cleaning area, where the cleaning direction is a reference direction; based on the cleaning direction, setting a cleaning starting point for the at least one cleaning area, where the cleaning starting point is a point on an edge of the at least one cleaning area opposite to the cleaning direction; and starting from the cleaning starting point in unit of a cleaning area, performing cleaning operations on the at least one cleaning area of the space to be cleaned according to the cleaning direction and the cleaning sequence.

In another possible implementation manner, the apparatus further includes: a selector configured for selecting a cleaning area according to the cleaning sequence, and determining an area map of the cleaning area, in a determination that the area map is regular, setting a cleaning direction for the cleaning area; otherwise, taking the area map as the first space map, taking the cleaning area as the space to be cleaned, and based on the first space map, dividing the space to be cleaned into at least one cleaning area, where the area map being regular is defined as: there is at least one path from any point in the area map to the entrance/exit, and the at least one path includes no movement path tending to an opposite direction to the entrance/exit.

In another possible implementation manner, the apparatus further includes:
a mover configured for after performing a cleaning operation on one cleaning area, moving from the one cleaning area to a next cleaning area based on a navigation path from the one cleaning area to the next cleaning area.

In another possible implementation manner, the divider 8702 is further configured for dividing the space to be cleaned according to room information of the first space map to obtain the at least one cleaning area.

In another possible implementation manner, the apparatus further includes:
a second setter configured for taking the reference object as an origin, setting a right-angle reference coordinate system including an X-axis and a Y-axis, where the reference direction is perpendicular to the X-axis, and the reference direction is a positive direction of the Y-axis;
the divider 8702 is further configured for at a position of the reference object, scanning the first space map by horizontal scan lines, where the horizontal scan lines are perpendicular to the reference direction; in a determination that a scanned area in the first space map includes an adjacent and unscanned area in the positive direction of the Y-axis, advancing the horizontal scan lines along the positive direction of the Y-axis to scan the adjacent and unscanned area; and in a determination that the scanned area in the first space map includes an adjacent and unscanned area in a negative direction of the Y-axis, advancing the horizontal scan lines along the negative direction of the Y-axis to scan the adjacent and unscanned area; and taking a position where lengths of the horizontal scan lines cut by the first space map are segmented and an edge of the first space map as a boundary, and merging continuous areas scanned in a same direction to dividing the space to be cleaned into the at least one cleaning area.

In another possible implementation manner, the apparatus further includes: a third setter configured for taking the reference object as an origin, setting a right-angle reference coordinate system including an X-axis and a Y-axis, where the reference direction is perpendicular to the X-axis, and the reference direction is a positive direction of the Y-axis;
the divider 8702 is further configured for at a position of the reference object, scanning the first space map by vertical scan lines, where the vertical scan lines are parallel to the reference direction; in a determination that a scanned area in the first space map includes an adjacent and unscanned area in a positive direction of the X-axis, advancing the vertical scan lines along the positive direction of the X-axis to scan the adjacent and unscanned area; and in a determination that the scanned area in the first space map includes an adjacent and unscanned area in a negative direction of the X-axis, advancing the vertical scan lines along the negative direction of the X-axis to scan the adjacent and unscanned area; and taking a position where lengths of the vertical scan lines cut by the first space map are segmented and an edge of the first space map as a boundary, and merging continuous areas scanned in a same direction to dividing the space to be cleaned into the at least one cleaning area.

In another possible implementation manner, the apparatus further includes: a fourth setter configured for taking the reference object as an origin, setting a right-angle reference coordinate system including an X-axis and a Y-axis, where the reference direction is perpendicular to the X-axis, and the reference direction is a positive direction of the Y-axis;
the divider 8702 is further configured for at a position of the reference object, scanning the first space map by horizontal scan lines and vertical scan lines, where the horizontal scan lines are perpendicular to the reference direction, and the vertical scan lines are parallel to the reference direction; in a determination that a scanned area in the first space map includes an adjacent and unscanned area in the positive direction of the Y-axis, advancing the horizontal scan lines along the positive direction of the Y-axis to scan the adjacent and unscanned area; in a determination that the scanned area in the first space map includes an adjacent and unscanned area in a negative direction of the Y-axis, advancing the horizontal scan lines along the negative direction of the Y-axis to scan the adjacent and unscanned area; in a determination that a scanned area in the first space map includes an adjacent and unscanned area in a positive direction of the X-axis, advancing the vertical scan lines along the positive direction of the X-axis to scan the adjacent and unscanned area; and in a determination that the scanned area in the first space map includes an adjacent and unscanned area in a negative direction of the X-axis, advancing the vertical scan lines along the negative direction of the X-axis to scan the adjacent and unscanned area; and taking positions where lengths of the horizontal scan lines and the vertical scan lines cut by the first space map are segmented and an edge of the first space map as a boundary, and merging areas scanned in a same direction to dividing the space to be cleaned into the at least one cleaning area.

In another possible implementation manner, the apparatus further includes:
a merger configured for in a determination that an area of a cleaning area is smaller than a preset value, merging the cleaning area and other adjacent cleaning area having an area larger than the preset value.

In another possible implementation manner, the merger is further configured for merging the cleaning area into a cleaning area scanned by scan lines advanced in a same direction.

In another possible implementation manner, the first setter 8703 is further configured to based on the at least one cleaning area, establishing an area sequence tree, where the area sequence tree includes at least one node, each node represents a cleaning area in the space to be cleaned and is connected to at least one another node of the at least one node, the at least one node includes a top node, a parent node and a child node, one node close to the top node of two connected nodes is the parent node, the other node far from the top node of the two connected nodes is the child node, a cleaning area represented by the parent node is adjacent to a cleaning area represented by the child node, or, one of the parent node and the child node represents an isolated cleaning area, the other one of the parent node and the child node represents a cleaning area closest to the isolated cleaning area, a cleaning area represented by the top node is a cleaning area where the reference object is located, and there is only one path from any non-top node in the area sequence tree to the top node; and based on the area sequence tree, setting the cleaning sequence of multiple cleaning areas.

In another possible implementation, the first setter 8703 is further configured for setting a node representing each cleaning area; according to connection relationship between the cleaning areas, in a determination that cleaning areas represented by any two nodes are adjacent, or one of the two nodes represents the isolated cleaning area, the other one of the two nodes represents the cleaning area closest to the isolated cleaning area, connecting the two nodes to construct a connected graph of the cleaning areas; and establishing the area sequence tree according to the connected graph.

In another possible implementation manner, the first setter 8703 is further configured for in a determination that there is only one path from any non-top node to the top node in the connected graph, taking the connected graph as the area sequence tree; and in a determination that there are multiple paths from a non-top node to the top node in the connected graph, performing cycle removal processing on the connected graph to obtain the area sequence tree, where a cycle is a circular path formed by successively connecting at least three nodes, and the cycle makes the multiple paths from the non-top node to the top node in the connected graph.

In another possible implementation, the first setter 8703 is further configured for determining a first target cleaning area based on the area sequence tree; based on the area sequence tree, querying a parent node of a first target node representing the first target cleaning area, and querying whether the parent node of the first target node includes a child node representing a non-first target cleaning area, if not, taking a cleaning area represented by the parent node of the first target node as a second target cleaning area, and if yes, taking a cleaning area represented by a bottom node in the child node as the second target cleaning area; based on the area sequence tree, querying a parent node of a second target node representing the second target cleaning area, and querying whether the parent node of the second target node includes a child node representing a non-first and non-second target cleaning area, if not, taking a cleaning area represented by the parent node of the second target node as a third target cleaning area, and if yes, taking a cleaning area represented by a bottom node in the child node as the third target cleaning area; and querying the third target cleaning area in the area sequence tree until a cleaning area represented by the top node is taken as a last target cleaning area.

In another possible implementation, the first setter 8703 is further configured for in the first space map, determining a first cleaning area closest to a current first position of the cleaning robot 100; based on the area sequence tree, taking the first cleaning area as a starting node to determine whether there are leaf nodes in a target subtree, where the target subtree is a local area sequence tree with the starting node as the top node in the area sequence tree, and the leaf node is a node comprising a parent node and no child node in the area sequence tree; in a determination that there are the leaf nodes in the target subtree, selecting a leaf node from the leaf nodes of the target subtree, and taking a cleaning area represented by the selected leaf node as the first target cleaning area; and in a determination that there is no leaf node in the target subtree, taking a cleaning area represented by the starting node as the first target cleaning area.

In another possible implementation, a cleaning direction of the cleaning area represented by the top node is the same as the reference direction, for any child node of a non-top node in the area sequence tree, a cleaning direction of a cleaning area represented by the child node points to a cleaning area represented by a parent node of the child node, and the cleaning direction of the cleaning area represented by the child node is parallel or perpendicular to the reference direction.

In another possible implementation, the performer 8704 is further configured for based on the area map, in the at least one cleaning area, searching for a first uncleaned point closest to a current first position of the cleaning robot 100; in the at least one cleaning area, within a preset length range perpendicular to the cleaning direction, searching for a second uncleaned point in the at least one cleaning area in an opposite direction to the cleaning direction, where the second uncleaned point is a farthest uncleaned point from the first uncleaned point in the cleaning direction; based on the second uncleaned point, determining the cleaning starting point for the at least one cleaning area; or, based on the area map, in the at least one cleaning area, starting from the current first position of the cleaning robot 100, scanning in the opposite direction to the cleaning direction in a form of scan lines to search for a first uncleaned point in the at least one cleaning area, where the scan lines are perpendicular to the cleaning direction, and the first uncleaned point is a farthest uncleaned point from the first position in the cleaning direction; based on the first uncleaned point, determining the cleaning starting point for the at least one cleaning area; or, based on the area map, in the at least one cleaning area, taking an entrance edge of the at least one cleaning area as a starting position of the cleaning robot 100, and searching for the first uncleaned point in the at least one cleaning area in the opposite direction to the cleaning direction, where the first uncleaned point is a farthest uncleaned point from the starting position of the at least one cleaning area in the cleaning direction; based on the first uncleaned point, determining the cleaning starting point for the at least one cleaning area; or, based on the area map, in the at least one cleaning area, searching for the first uncleaned point closest to the current first position of the cleaning robot 100; based on the first uncleaned point, determining the cleaning starting point for the at least one cleaning area.

In another possible implementation, the performer 8704 is further configured for taking the first uncleaned point as the cleaning starting point of the at least one cleaning area; or, in a determination that there is an uncleaned point on an edge where the first uncleaned point is located, moving to an end point of the edge, and taking the end point of the edge as the cleaning starting point of the at least one cleaning area.

In another possible implementation manner, the apparatus further includes:
a second acquirer configured for in response to encountering an obstacle during the cleaning operations, in a determination that the obstacle crosses at least two cleaning areas, and a crossing distance of the obstacle is greater than a first threshold, acquiring a second space map of the uncleaned area in the space to be cleaned, taking the second space map as the first space map, and based on the first space map, dividing the space to be cleaned into at least one cleaning area.

In another possible implementation manner, the cleaning robot 100 is provided with a cleaning component, and the cleaning component is configured to perform cleaning operations on the ground; the cleaning component is a mopping module, and the mopping module is configured for mopping and cleaning the ground; and the space to be cleaned is a room unit.

According to the cleaning control method provided by the embodiments of this disclosure, the cleaning robot 100 obtains a map of a space to be cleaned as a first space map, divides the space to be cleaned into at least one cleaning area based on the first space map, sets a cleaning sequence for the at least one cleaning area, where the cleaning sequence satisfies that any path from an entrance/exit of any cleaning area to the reference object is not allowed to pass through other cleaning area that has been cleaned, and performs cleaning operations on the at least one cleaning area of the space to be cleaned in sequence according to the cleaning sequence in unit of a cleaning area. When the cleaning robot 100 performs cleaning operations, it performs cleaning operations on the at least one cleaning area of the space to be cleaned according to the cleaning sequence. Since the set cleaning sequence satisfies that any path from an entrance/exit of any cleaning area to the reference object is not allowed to pass through other cleaning area that has been cleaned, this method can prevent the cleaning robot 100 from polluting the cleaned cleaning area that has been cleaned when it moves to the area where the base station is located for charging or cleaning a cleaning component, thereby enhancing the cleaning effect and improving the cleaning efficiency.

The embodiments of this disclosure further provides a computer-readable storage medium, which is applied to the cleaning robot 100, at least one instruction, at least one program, code set or instruction set is stored on the computer-readable storage medium and loaded and executed by a processor to implement the operations performed in the cleaning control method according to the foregoing embodiments.

Those of ordinary skill in the art can understand that all or part of the steps in the foregoing embodiments can be implemented by hardware, or can be implemented by a program instructing relevant hardware. The program can be stored in a computer-readable storage medium, and the storage medium mentioned can be a read-only memory, a magnetic disk or an optical disk, etc.

The above description is only for the convenience of those skilled in the art to understand the technical solutions of this disclosure, and is not used to control this disclosure. Any modification, equivalent replacement, improvement, etc., made within the spirit and principle of this disclosure shall be included in the protection scope of this disclosure.

## Claims

1. A cleaning control method, executed when cleaning an unknown space to be cleaned by a cleaning robot, wherein the cleaning robot is used in conjunction with a base station, the base station is a cleaning device used by the cleaning robot, the space to be cleaned comprises an entrance/exit, and the base station or the entrance/exit is configured as a reference object, wherein the cleaning control method comprises:
S1: acquiring a map of the space to be cleaned as a first space map, wherein the first space map is configured to indicate the space to be cleaned or a subspace to be cleaned in the space to be cleaned, and the subspace to be cleaned is an uncleaned area in the space to be cleaned;
S2: based on the first space map, dividing the space to be cleaned into at least one cleaning area, wherein an entrance/exit is provided between two adjacent and connected cleaning areas;
S3: setting a cleaning sequence for the at least one cleaning area, wherein the cleaning sequence satisfies that any path from an entrance/exit of any cleaning area to the reference object is not allowed to pass through other cleaning area that has been cleaned; and
S4: sequentially performing cleaning operations on the at least one cleaning area of the space to be cleaned according to the cleaning sequence in unit of a cleaning area.

2. The method of claim 1, wherein before S2, the method further comprises:
S5: determining the first space map, in a determination that the first space map is regular, taking the space to be cleaned or the subspace to be cleaned as a cleaning area, and performing S6: setting a cleaning direction and a cleaning starting point for the cleaning area, and performing a cleaning operation on the cleaning area of the space to be cleaned, otherwise, performing S2, wherein the first space map being regular is defined as: there is at least one path from any point in the first space map to the reference object, and the at least one path comprises no movement path tending to an opposite direction to a reference direction, wherein the reference direction is a direction in which any point in the space to be cleaned or the subspace to be cleaned points to the reference object, and
a connection line area between the point and the reference object does not pass through an obstacle.

3. The method of claim 1, wherein S4: sequentially performing cleaning operations on the at least one cleaning area of the space to be cleaned according to the cleaning sequence in unit of a cleaning area comprises:
S41: setting a cleaning direction for the at least one cleaning area, wherein the cleaning direction is a reference direction;
S42: based on the cleaning direction, setting a cleaning starting point for the at least one cleaning area, wherein the cleaning starting point is a point on an edge of the at least one cleaning area opposite to the cleaning direction; and
S43: starting from the cleaning starting point in unit of a cleaning area, performing cleaning operations on the at least one cleaning area of the space to be cleaned according to the cleaning direction and the cleaning sequence.

4. The method of claim 3, wherein before S41, the method further comprises:
S7: selecting a cleaning area according to the cleaning sequence, and determining an area map of the cleaning area, in a determination that the area map is regular, performing S41 for cleaning; otherwise, taking the area map as the first space map, taking the cleaning area as the space to be cleaned, and performing S2, wherein the area map being regular is defined as: there is at least one path from any point in the area map to the entrance/exit, and the at least one path comprises no movement path tending to an opposite direction to the entrance/exit.

5. The method of any one of claims 1 to 4, further comprising:
after performing a cleaning operation on one cleaning area, moving from the one cleaning area to a next cleaning area based on a navigation path from the one cleaning area to the next cleaning area.

6. The method of any one of claims 1 to 4, wherein S2: dividing the space to be cleaned into at least one cleaning area comprises:
dividing the space to be cleaned according to room information of the first space map to obtain the at least one cleaning area.

7. The method of any one of claims 2 to 4, wherein before S2, the method further comprises:
taking the reference object as an origin, setting a right-angle reference coordinate system comprising an X-axis and a Y-axis, wherein the reference direction is perpendicular to the X-axis, and the reference direction is a positive direction of the Y-axis;
wherein S2: based on the first space map, dividing the space to be cleaned into at least one cleaning area comprises:
S21: at a position of the reference object, scanning the first space map by horizontal scan lines, wherein the horizontal scan lines are perpendicular to the reference direction;
in a determination that a scanned area in the first space map comprises an adjacent and unscanned area in the positive direction of the Y-axis,
advancing the horizontal scan lines along the positive direction of the Y-axis to scan the adjacent and unscanned area; and
in a determination that the scanned area in the first space map comprises an adjacent and unscanned area in a negative direction of the Y-axis,
advancing the horizontal scan lines along the negative direction of the Y-axis to scan the adjacent and unscanned area; and
S22: taking a position where lengths of the horizontal scan lines cut by the first space map are segmented and an edge of the first space map as a boundary, and merging continuous areas scanned in a same direction to dividing the space to be cleaned into the at least one cleaning area.

8. The method of any one of claims 2 to 4, wherein before S2, the method further comprises:
taking the reference object as an origin, setting a right-angle reference coordinate system comprising an X-axis and a Y-axis, wherein the reference direction is perpendicular to the X-axis, and the reference direction is a positive direction of the Y-axis;
wherein S2: based on the first space map, dividing the space to be cleaned into at least one cleaning area comprises:
S201: at a position of the reference object, scanning the first space map by vertical scan lines, wherein the vertical scan lines are parallel to the reference direction;
in a determination that a scanned area in the first space map comprises an adjacent and unscanned area in a positive direction of the X-axis, advancing the vertical scan lines along the positive direction of the X-axis to scan the adjacent and unscanned area; and
in a determination that the scanned area in the first space map comprises an adjacent and unscanned area in a negative direction of the X-axis,
advancing the vertical scan lines along the negative direction of the X-axis to scan the adjacent and unscanned area; and
S202: taking a position where lengths of the vertical scan lines cut by the first space map are segmented and an edge of the first space map as a boundary, and merging continuous areas scanned in a same direction to dividing the space to be cleaned into the at least one cleaning area.

9. The method of any one of claims 2 to 4, wherein before S2, the method further comprises:
taking the reference object as an origin, setting a right-angle reference coordinate system comprising an X-axis and a Y-axis, wherein the reference direction is perpendicular to the X-axis, and the reference direction is a positive direction of the Y-axis;
wherein S2: based on the first space map, dividing the space to be cleaned into at least one cleaning area comprises:
S211: at a position of the reference object, scanning the first space map by horizontal scan lines and vertical scan lines, wherein the horizontal scan lines are perpendicular to the reference direction, and the vertical scan lines are parallel to the reference direction;
in a determination that a scanned area in the first space map comprises an adjacent and unscanned area in the positive direction of the Y-axis,
advancing the horizontal scan lines along the positive direction of the Y-axis to scan the adjacent and unscanned area;
in a determination that the scanned area in the first space map comprises an adjacent and unscanned area in a negative direction of the Y-axis,
advancing the horizontal scan lines along the negative direction of the Y-axis to scan the adjacent and unscanned area;
in a determination that a scanned area in the first space map comprises an adjacent and unscanned area in a positive direction of the X-axis, advancing the vertical scan lines along the positive direction of the X-axis to scan the adjacent and unscanned area; and
in a determination that the scanned area in the first space map comprises an adjacent and unscanned area in a negative direction of the X-axis,
advancing the vertical scan lines along the negative direction of the X-axis to scan the adjacent and unscanned area; and
S202: taking positions where lengths of the horizontal scan lines and the vertical scan lines cut by the first space map are segmented and an edge of the first space map as a boundary, and merging areas scanned in a same direction to dividing the space to be cleaned into the at least one cleaning area.

10. The method of any one of claims 2 to 4, wherein before S3, the method further comprises:
in a determination that an area of a cleaning area is smaller than a preset value, merging the cleaning area and other adjacent cleaning area having an area larger than the preset value.

11. The method of claim 10, wherein merging the cleaning area and other adjacent cleaning area having an area larger than the preset value comprises:
merging the cleaning area into a cleaning area scanned by scan lines advanced in a same direction.

12. The method of any one of claims 1 to 4 or claim 10, wherein S3: setting a cleaning sequence for the at least one cleaning area comprises:
S301: based on the at least one cleaning area, establishing an area sequence tree, wherein the area sequence tree comprises at least one node, each node represents a cleaning area in the space to be cleaned and
is connected to at least one another node of the at least one node, the at least one node comprises a top node, a parent node and a child node, one node close to the top node of two connected nodes is the parent node, the other node far from the top node of the two connected nodes is the child node, a cleaning area represented by the parent node is adjacent to a cleaning area represented by the child node, or, one of the parent node and the child node represents an isolated cleaning area, the other one of the parent node and the child node represents a cleaning area closest to the isolated cleaning area, a cleaning area represented by the top node is a cleaning area where the reference object is located, and there is only one path from any non-top node in the area sequence tree to the top node; and
S302: based on the area sequence tree, setting the cleaning sequence for cleaning areas.

13. The method of claim 12, wherein S301: based on the at least one cleaning area, establishing an area sequence tree comprises:
S3011: setting a node representing each cleaning area;
S3012: according to connection relationship between the cleaning areas, in a determination that cleaning areas represented by any two nodes are adjacent, or one of the two nodes represents the isolated cleaning area, the other one of the two nodes represents the cleaning area closest to the isolated cleaning area, connecting the two nodes to construct a connected graph of the cleaning areas; and
S3013: establishing the area sequence tree according to the connected graph.

14. The method of claim 13, wherein S3013: establishing the area sequence tree according to the connected graph comprises:
in a determination that there is only one path from any non-top node to the top node in the connected graph, taking the connected graph as the area sequence tree; and
in a determination that there are multiple paths from a non-top node to the top node in the connected graph, performing cycle removal processing on the connected graph to obtain the area sequence tree, wherein a cycle is a circular path formed by successively connecting at least three nodes, and
the cycle makes the multiple paths from the non-top node to the top node in the connected graph.

15. The method of claim 12, wherein S302: based on the area sequence tree, setting the cleaning sequence for cleaning areas comprises:
S3021: determining a first target cleaning area based on the area sequence tree;
S3022: based on the area sequence tree, querying a parent node of a first target node representing the first target cleaning area, and querying whether the parent node of the first target node comprises a child node representing a non-first target cleaning area, if not, taking a cleaning area represented by the parent node of the first target node as a second target cleaning area, and if yes, taking a cleaning area represented by a bottom node in the child node as the second target cleaning area;
S3023: based on the area sequence tree, querying a parent node of a second target node representing the second target cleaning area, and querying whether the parent node of the second target node comprises a child node representing a non-first and non-second target cleaning area, if not, taking a cleaning area represented by the parent node of the second target node as a third target cleaning area, and if yes, taking a cleaning area represented by a bottom node in the child node as the third target cleaning area; and
S3024: querying the third target cleaning area in the area sequence tree until a cleaning area represented by the top node is taken as a last target cleaning area.

16. The method of claim 15, wherein S3021: determining a first target cleaning area based on the area sequence tree comprises:
in the first space map, determining a first cleaning area closest to a current first position of the cleaning robot;
based on the area sequence tree, taking the first cleaning area as a starting node to determine whether there are leaf nodes in a target subtree, wherein the target subtree is a local area sequence tree with the starting node as the top node in the area sequence tree, and the leaf node is a node comprising a parent node and no child node in the area sequence tree;
in a determination that there are the leaf nodes in the target subtree, selecting a leaf node from the leaf nodes of the target subtree, and taking a cleaning area represented by the selected leaf node as the first target cleaning area; and
in a determination that there is no leaf node in the target subtree, taking a cleaning area represented by the starting node as the first target cleaning area.

17. The method of claim 16, wherein a cleaning direction of the cleaning area represented by the top node is the same as the reference direction, for any child node of a non-top node in the area sequence tree, a cleaning direction of a cleaning area represented by the child node points to a cleaning area represented by a parent node of the child node, and the cleaning direction of the cleaning area represented by the child node is parallel or perpendicular to the reference direction.

18. The method of claim 3, wherein S42: setting a cleaning starting point for the at least one cleaning area comprises:
based on the area map, in the at least one cleaning area, searching for a first uncleaned point closest to a current first position of the cleaning robot;
in the at least one cleaning area, within a preset length range perpendicular to the cleaning direction, searching for a second uncleaned point in the at least one cleaning area in an opposite direction to the cleaning direction, wherein the second uncleaned point is a farthest uncleaned point from the first uncleaned point in the cleaning direction; based on the second uncleaned point, determining the cleaning starting point for the at least one cleaning area; or,
based on the area map, in the at least one cleaning area, starting from the current first position of the cleaning robot, scanning in the opposite direction to the cleaning direction in a form of scan lines to search for a first uncleaned point in the at least one cleaning area, wherein the scan lines are perpendicular to the cleaning direction, and the first uncleaned point is a farthest uncleaned point from the first position in the cleaning direction; based on the first uncleaned point, determining the cleaning starting point for the at least one cleaning area; or,
based on the area map, in the at least one cleaning area, taking an entrance edge of the at least one cleaning area as a starting position of the cleaning robot, and searching for the first uncleaned point in the at least one cleaning area in the opposite direction to the cleaning direction, wherein the first uncleaned point is a farthest uncleaned point from the starting position of the at least one cleaning area in the cleaning direction; based on the first uncleaned point, determining the cleaning starting point for the at least one cleaning area; or,
based on the area map, in the at least one cleaning area, searching for the first uncleaned point closest to the current first position of the cleaning robot; based on the first uncleaned point, determining the cleaning starting point for the at least one cleaning area.

19. The method of claim 18, wherein based on the first uncleaned point, determining the cleaning starting point for the at least one cleaning area comprises:
taking the first uncleaned point as the cleaning starting point of the at least one cleaning area; or,
in a determination that there is an uncleaned point on an edge where the first uncleaned point is located, moving to an end point of the edge, and
taking the end point of the edge as the cleaning starting point of the at least one cleaning area.

20. The method of any one of claims 1 to 4 or 11 or any one of claims 13 to 19, further comprising:
S8: in response to encountering an obstacle during the cleaning operations, in a determination that the obstacle crosses at least two cleaning areas, and a crossing distance of the obstacle is greater than a first threshold, acquiring a second space map of the uncleaned area in the space to be cleaned, taking the second space map as the first space map, and performing S2: based on the first space map, dividing the space to be cleaned into at least one cleaning area.

21. The method of any one of claims 1 to 4 or 11 or any one of claims 13 to 19, wherein,
the cleaning robot comprises a cleaning component configured for the cleaning robot to perform a cleaning operation on a ground;
the cleaning component is a mopping module configured for mopping and cleaning the ground; and
the space to be cleaned is a room unit.

22. A cleaning control apparatus, applied when cleaning an unknown space to be cleaned and used in conjunction with a base station, wherein the base station is a cleaning device used by the cleaning robot, the space to be cleaned comprises an entrance/exit, and the base station or the entrance/exit is configured as a reference object, wherein the apparatus comprises:
a first acquirer configured for acquiring a map of the space to be cleaned as a first space map, wherein the first space map is configured to indicate the space to be cleaned or a subspace to be cleaned in the space to be cleaned, and the subspace to be cleaned is an uncleaned area in the space to be cleaned;
a divider configured for based on the first space map, dividing the space to be cleaned into at least one cleaning area, wherein an entrance/exit is provided between two adjacent and connected cleaning areas;
a first setter configured for setting a cleaning sequence for the at least one cleaning area, wherein the cleaning sequence satisfies that any path from an entrance/exit of any cleaning area to the reference object is not allowed to pass through other cleaning area that has been cleaned; and
a performer configured for sequentially performing cleaning operations on the at least one cleaning area of the space to be cleaned according to the cleaning sequence in unit of a cleaning area.

23. The apparatus of claim 22, further comprising:
a determiner configured for determining the first space map, in a determination that the first space map is regular, taking the space to be cleaned or the subspace to be cleaned as a cleaning area, and performing setting a cleaning direction and a cleaning starting point for the cleaning area, and performing a cleaning operation on the cleaning area of the space to be cleaned, otherwise, based on the first space map, dividing the space to be cleaned into at least one cleaning area, wherein the first space map being regular is defined as: there is at least one path from any point in the first space map to the reference object, and the at least one path comprises no movement path tending to an opposite direction to a reference direction, wherein the reference direction is a direction in which any point in the space to be cleaned or the subspace to be cleaned points to the reference object, and a connection line area between the point and the reference object does not pass through an obstacle.

24. The apparatus of claim 22, wherein the performer is further configured for setting a cleaning direction for the at least one cleaning area, wherein the cleaning direction is a reference direction; based on the cleaning direction, setting a cleaning starting point for the at least one cleaning area, wherein the cleaning starting point is a point on an edge of the at least one cleaning area opposite to the cleaning direction; and starting from the cleaning starting point in unit of a cleaning area, performing cleaning operations on the at least one cleaning area of the space to be cleaned according to the cleaning direction and the cleaning sequence.

25. The apparatus of claim 24, further comprising:
a selector configured for selecting a cleaning area according to the cleaning sequence, and determining an area map of the cleaning area, in a determination that the area map is regular, setting a cleaning direction for the cleaning area; otherwise, taking the area map as the first space map, taking the cleaning area as the space to be cleaned, and based on the first space map, dividing the space to be cleaned into at least one cleaning area, wherein the area map being regular is defined as: there is at least one path from any point in the area map to the entrance/exit, and the at least one path comprises no movement path tending to an opposite direction to the entrance/exit.

26. The apparatus of any one of claims 22 to 25, further comprising:
a mover configured for after performing a cleaning operation on one cleaning area, moving from the one cleaning area to a next cleaning area based on a navigation path from the one cleaning area to the next cleaning area.

27. The apparatus of any one of claims 22 to 25, wherein the divider is further configured for dividing the space to be cleaned according to room information of the first space map to obtain the at least one cleaning area.

28. The apparatus of any one of claims 23 to 25, further comprising:
a second setter configured for taking the reference object as an origin, setting a right-angle reference coordinate system comprising an X-axis and a Y-axis, wherein the reference direction is perpendicular to the X-axis, and the reference direction is a positive direction of the Y-axis;
the divider is further configured for at a position of the reference object, scanning the first space map by horizontal scan lines, wherein the horizontal scan lines are perpendicular to the reference direction; in a determination that a scanned area in the first space map comprises an adjacent and unscanned area in the positive direction of the Y-axis, advancing the horizontal scan lines along the positive direction of the Y-axis to scan the adjacent and unscanned area; and in a determination that the scanned area in the first space map comprises an adjacent and unscanned area in a negative direction of the Y-axis, advancing the horizontal scan lines along the negative direction of the Y-axis to scan the adjacent and unscanned area; and taking a position where lengths of the horizontal scan lines cut by the first space map are segmented and an edge of the first space map as a boundary, and merging continuous areas scanned in a same direction to dividing the space to be cleaned into the at least one cleaning area.

29. The apparatus of any one of claims 23 to 25, further comprising:
a third setter configured for taking the reference object as an origin, setting a right-angle reference coordinate system comprising an X-axis and a Y-axis, wherein the reference direction is perpendicular to the X-axis, and the reference direction is a positive direction of the Y-axis;
the divider is further configured for at a position of the reference object, scanning the first space map by vertical scan lines, wherein the vertical scan lines are parallel to the reference direction; in a determination that a scanned area in the first space map comprises an adjacent and unscanned area in a positive direction of the X-axis, advancing the vertical scan lines along the positive direction of the X-axis to scan the adjacent and unscanned area; and in a determination that the scanned area in the first space map comprises an adjacent and unscanned area in a negative direction of the X-axis, advancing the vertical scan lines along the negative direction of the X-axis to scan the adjacent and unscanned area; and taking a position where lengths of the vertical scan lines cut by the first space map are segmented and an edge of the first space map as a boundary, and merging continuous areas scanned in a same direction to dividing the space to be cleaned into the at least one cleaning area.

30. The apparatus of any one of claims 23 to 25, further comprising:
a fourth setter configured for taking the reference object as an origin, setting a right-angle reference coordinate system comprising an X-axis and a Y-axis, wherein the reference direction is perpendicular to the X-axis, and the reference direction is a positive direction of the Y-axis;
the divider is further configured for at a position of the reference object, scanning the first space map by horizontal scan lines and vertical scan lines, wherein the horizontal scan lines are perpendicular to the reference direction, and the vertical scan lines are parallel to the reference direction; in a determination that a scanned area in the first space map comprises an adjacent and unscanned area in the positive direction of the Y-axis, advancing the horizontal scan lines along the positive direction of the Y-axis to scan the adjacent and unscanned area; in a determination that the scanned area in the first space map comprises an adjacent and unscanned area in a negative direction of the Y-axis, advancing the horizontal scan lines along the negative direction of the Y-axis to scan the adjacent and unscanned area; in a determination that a scanned area in the first space map comprises an adjacent and unscanned area in a positive direction of the X-axis, advancing the vertical scan lines along the positive direction of the X-axis to scan the adjacent and unscanned area; and in a determination that the scanned area in the first space map comprises an adjacent and unscanned area in a negative direction of the X-axis, advancing the vertical scan lines along the negative direction of the X-axis to scan the adjacent and unscanned area; and taking positions where lengths of the horizontal scan lines and the vertical scan lines cut by the first space map are segmented and an edge of the first space map as a boundary, and merging areas scanned in a same direction to dividing the space to be cleaned into the at least one cleaning area.

31. The apparatus of any one of claims 23 to 25, further comprising:
a merger configured for in a determination that an area of a cleaning area is smaller than a preset value, merging the cleaning area and other adjacent cleaning area having an area larger than the preset value.

32. The apparatus of claim 31, wherein the merger is further configured for merging the cleaning area into a cleaning area scanned by scan lines advanced in a same direction.

33. The apparatus of any one of claims 22 to 25 or claim 31, wherein the first setter is further configured for based on the at least one cleaning area, establishing an area sequence tree, wherein the area sequence tree comprises at least one node, each node represents a cleaning area in the space to be cleaned and is connected to at least one another node of the at least one node, the at least one node comprises a top node, a parent node and a child node, one node close to the top node of two connected nodes is the parent node, the other node far from the top node of the two connected nodes is the child node, a cleaning area represented by the parent node is adjacent to a cleaning area represented by the child node, or, one of the parent node and the child node represents an isolated cleaning area, the other one of the parent node and the child node represents a cleaning area closest to the isolated cleaning area, a cleaning area represented by the top node is a cleaning area where the reference object is located, and there is only one path from any non-top node in the area sequence tree to the top node; and based on the area sequence tree, setting the cleaning sequence for cleaning areas.

34. The apparatus of claim 33, wherein the first setter is further configured for setting a node representing each cleaning area; according to connection relationship between the cleaning areas, in a determination that cleaning areas represented by any two nodes are adjacent, or one of the two nodes represents the isolated cleaning area, the other one of the two nodes represents the cleaning area closest to the isolated cleaning area, connecting the two nodes to construct a connected graph of the cleaning areas; and establishing the area sequence tree according to the connected graph.

35. The apparatus of claim 34, wherein the first setter is further configured for in a determination that there is only one path from any non-top node to the top node in the connected graph, taking the connected graph as the area sequence tree; and in a determination that there are multiple paths from a non-top node to the top node in the connected graph, performing cycle removal processing on the connected graph to obtain the area sequence tree, wherein a cycle is a circular path formed by successively connecting at least three nodes, and the cycle makes the multiple paths from the non-top node to the top node in the connected graph.

36. The apparatus of claim 33, wherein the first setter is further configured for determining a first target cleaning area based on the area sequence tree; based on the area sequence tree, querying a parent node of a first target node representing the first target cleaning area, and querying whether the parent node of the first target node comprises a child node representing a non-first target cleaning area, if not, taking a cleaning area represented by the parent node of the first target node as a second target cleaning area, and if yes, taking a cleaning area represented by a bottom node in the child node as the second target cleaning area; based on the area sequence tree, querying a parent node of a second target node representing the second target cleaning area, and querying whether the parent node of the second target node comprises a child node representing a non-first and non-second target cleaning area, if not, taking a cleaning area represented by the parent node of the second target node as a third target cleaning area, and if yes, taking a cleaning area represented by a bottom node in the child node as the third target cleaning area; and querying the third target cleaning area in the area sequence tree until a cleaning area represented by the top node is taken as a last target cleaning area.

37. The apparatus of claim 36, wherein the first setter is further configured for in the first space map, determining a first cleaning area closest to a current first position of the cleaning robot; based on the area sequence tree, taking the first cleaning area as a starting node to determine whether there are leaf nodes in a target subtree, wherein the target subtree is a local area sequence tree with the starting node as the top node in the area sequence tree, and the leaf node is a node comprising a parent node and no child node in the area sequence tree; in a determination that there are the leaf nodes in the target subtree, selecting a leaf node from the leaf nodes of the target subtree, and taking a cleaning area represented by the selected leaf node as the first target cleaning area; and
in a determination that there is no leaf node in the target subtree, taking a cleaning area represented by the starting node as the first target cleaning area.

38. The apparatus of claim 37, wherein a cleaning direction of the cleaning area represented by the top node is the same as the reference direction, for any child node of a non-top node in the area sequence tree, a cleaning direction of a cleaning area represented by the child node points to a cleaning area represented by a parent node of the child node, and the cleaning direction of the cleaning area represented by the child node is parallel or perpendicular to the reference direction.

39. The apparatus of claim 24, wherein the performer is further configured for based on the area map, in the at least one cleaning area, searching for a first uncleaned point closest to a current first position of the cleaning robot; in the at least one cleaning area, within a preset length range perpendicular to the cleaning direction, searching for a second uncleaned point in the at least one cleaning area in an opposite direction to the cleaning direction, wherein the second uncleaned point is a farthest uncleaned point from the first uncleaned point in the cleaning direction; based on the second uncleaned point, determining the cleaning starting point for the at least one cleaning area; or, based on the area map, in the at least one cleaning area, starting from the current first position of the cleaning robot, scanning in the opposite direction to the cleaning direction in a form of scan lines to search for a first uncleaned point in the at least one cleaning area, wherein the scan lines are perpendicular to the cleaning direction, and the first uncleaned point is a farthest uncleaned point from the first position in the cleaning direction; based on the first uncleaned point, determining the cleaning starting point for the at least one cleaning area; or, based on the area map, in the at least one cleaning area, taking an entrance edge of the at least one cleaning area as a starting position of the cleaning robot, and searching for the first uncleaned point in the at least one cleaning area in the opposite direction to the cleaning direction, wherein the first uncleaned point is a farthest uncleaned point from the starting position of the at least one cleaning area in the cleaning direction; based on the first uncleaned point, determining the cleaning starting point for the at least one cleaning area; or, based on the area map, in the at least one cleaning area, searching for the first uncleaned point closest to the current first position of the cleaning robot; based on the first uncleaned point, determining the cleaning starting point for the at least one cleaning area.

40. The apparatus of claim 39, wherein the performer is further configured for taking the first uncleaned point as the cleaning starting point of the at least one cleaning area; or, in a determination that there is an uncleaned point on an edge where the first uncleaned point is located, moving to an end point of the edge, and taking the end point of the edge as the cleaning starting point of the at least one cleaning area.

41. The apparatus of any one of claims 22 to 25 or claim 32 or any one of claims 34 to 40, further comprising:
a second acquirer configured for in response to encountering an obstacle during the cleaning operations, in a determination that the obstacle crosses at least two cleaning areas, and a crossing distance of the obstacle is greater than a first threshold, acquiring a second space map of the uncleaned area in the space to be cleaned, taking the second space map as the first space map, and based on the first space map, dividing the space to be cleaned into at least one cleaning area.

42. The apparatus of any one of claims 22 to 25 or claim 32 or any one of claims 34 to 40, wherein:
the cleaning robot comprises a cleaning component configured to perform a cleaning operation on a ground;
the cleaning component is a mopping module configured for mopping and
cleaning the ground; and
the space to be cleaned is a room unit.

43. A cleaning robot, comprising:
one or more processors and one or more memories, wherein at least one instruction, at least one program, code set or instruction set is stored in the one or more memories and loaded and executed by the one or more processors to implement the operations performed in the cleaning control method as recited in any one of claims 1 to 21.

44. A computer-readable storage medium, wherein at least one instruction, at least one program, code set or instruction set is stored thereon and loaded and executed by a processor to implement the operations performed in the cleaning control method as recited in any one of claims 1 to 21.
